# EUROPEAN PATENT APPLICATION

(11) **EP 4 811 675 A2**
(43) Date of publication of application: **23.09.2026**
(21) Application number: 26166477.5
(22) Date of filing: 20.03.2026
(51) Int. Cl.: H04B 7/06

(54) **CROSS CELL CHANNEL STATE INFORMATION REPORTING**

(30) Priority: 21.03.2025 US 202563775746 P
(71) Applicant: Comcast Cable Communications, LLC, Philadelphia, PA 19103 (US)
(72) Inventor: CIRIK, Ali Cagatay, Philadelphia, 19103 (US); DINAN, Esmael Hejazi, Philadelphia, 19103 (US)
(74) Representative: V.O.

(57) **Abstract**

A wireless device may communicate beam information to a base station. For example, the wireless device may trigger a beam report based on one or more qualities associated with one or more current beams and/or candidate beams. The wireless device may determine current beams based on a cell on which configuration parameters from the base station are configured. The wireless device may not transmit the beam report, for example, if a candidate beam is associated with a cell different from a cell of one or more current beams.

## Description

### CROSS-REFERENCE TO RELATED APPLICATIONS

This application claims the benefit of U.S. Provisional Application No. 63/775,746 filed on March 21, 2025. The above-referenced application is hereby incorporated by reference in its entirety.

### BACKGROUND

A wireless device communicates with a base station. The wireless device receives configuration parameters for communicating with the base station via a cell. The wireless device sends reports to the base station based on the configuration parameters.

### SUMMARY

The following summary presents a simplified summary of certain features. The summary is not an extensive overview and is not intended to identify key or critical elements.

A wireless device may communicate with a base station. One or more reports, such as a beam report and/or a channel state information (CSI) report, may be provided by the wireless device to the base station. Such a report may be triggered by the wireless device, for example, based on an event related to beam quality. For example, a beam report may be triggered if a candidate reference signal is detected to have a beam quality a threshold better than a quality of one or more active beams. Current beams may be determined based on a cell indicated by a cell indication parameter and/or based on a cell associated with one or more other configuration parameters (e.g., if a cell indication parameter is absent or not configured). A beam report may not be sent, for example, if a candidate reference signal is associated with a cell different from a cell of one or more current beams.

These and other features and advantages are described in greater detail below.

### BRIEF DESCRIPTION OF THE DRAWINGS

Examples of several of the various embodiments of the present disclosure are described herein with reference to the drawings.
FIG. 1A and FIG. 1B show example communication networks.
FIG. 2A shows an example user plane.
FIG. 2B shows an example control plane configuration.
FIG. 3 shows example of protocol layers.
FIG. 4A shows an example downlink data flow for a user plane configuration.
FIG. 4B shows an example format of a Medium Access Control (MAC) subheader in a MAC Protocol Data Unit (PDU).
FIG. 5A shows an example mapping for downlink channels.
FIG. 5B shows an example mapping for uplink channels.
FIG. 6 shows example radio resource control (RRC) states and RRC state transitions.
FIG. 7 shows an example configuration of a frame.
FIG. 8 shows an example resource configuration of one or more carriers.
FIG. 9 shows an example configuration of bandwidth parts (BWPs).
FIG. 10A shows example carrier aggregation configurations based on component carriers.
FIG. 10B shows example group of cells.
FIG. 11A shows an example mapping of one or more synchronization signal/physical broadcast channel (SS/PBCH) blocks.
FIG. 11B shows an example mapping of one or more channel state information reference signals (CSI-RSs).
FIG. 12A shows examples of downlink beam management procedures.
FIG. 12B shows examples of uplink beam management procedures.
FIG. 13A shows an example four-step random access procedure.
FIG. 13B shows an example two-step random access procedure.
FIG. 13C shows an example two-step random access procedure.
FIG. 14A shows an example of control resource set (CORESET) configurations.
FIG. 14B shows an example of a control channel element to resource element group (CCE-to-REG) mapping.
FIG. 15A shows an example of communications between a wireless device and a base station.
FIG. 15B shows example elements of a computing device that may be used to implement any of the various devices described herein.
FIG. 16A, FIG. 16B, FIG. 16C, and FIG. 16D show examples of uplink and downlink signal transmission.
FIG 17A shows an example method for transmission configuration indicator (TCI) state indication.
FIG 17B shows an example method for transmission configuration indicator (TCI) state indication.
FIG. 18A shows an example method for channel state information (CSI) reporting triggered by a network.
FIG. 18B shows an example method for CSI reporting triggered by a network.
FIG. 18C shows an example method for CSI reporting triggered by a network.
FIG. 19A shows an example method for CSI reporting triggered by a wireless device.
FIG. 19B shows an example method for CSI reporting triggered by a wireless device.
FIG. 19C shows an example method for CSI reporting triggered by a wireless device.
FIG. 20 shows an example of a first mode for CSI reporting triggered by a wireless device.
FIG. 21 shows an example of a second mode (e.g., Mode B) for CSI reporting triggered by a wireless device.
FIG. 22 shows an example CSI report configuration.
FIG. 23 shows an example of a cross-cell CSI reporting.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

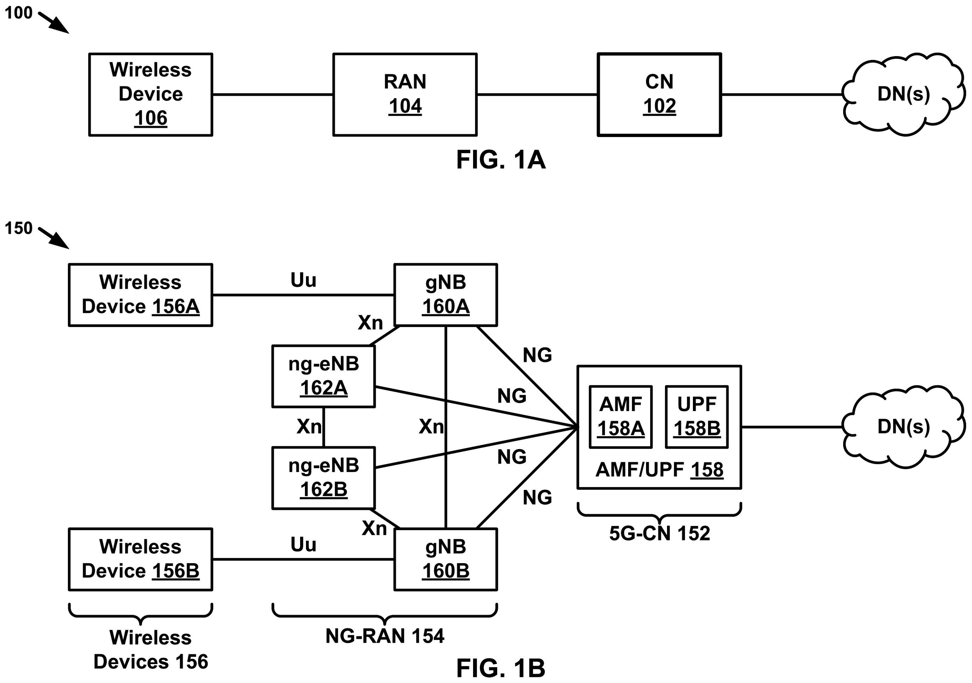

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle roadside unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode user equipment (UE) reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

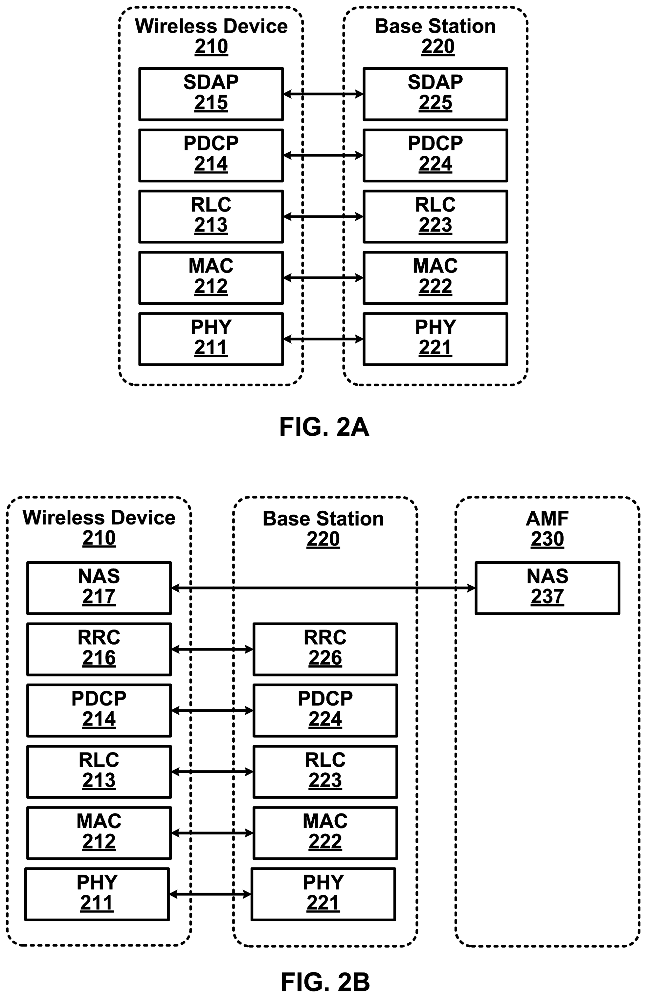

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

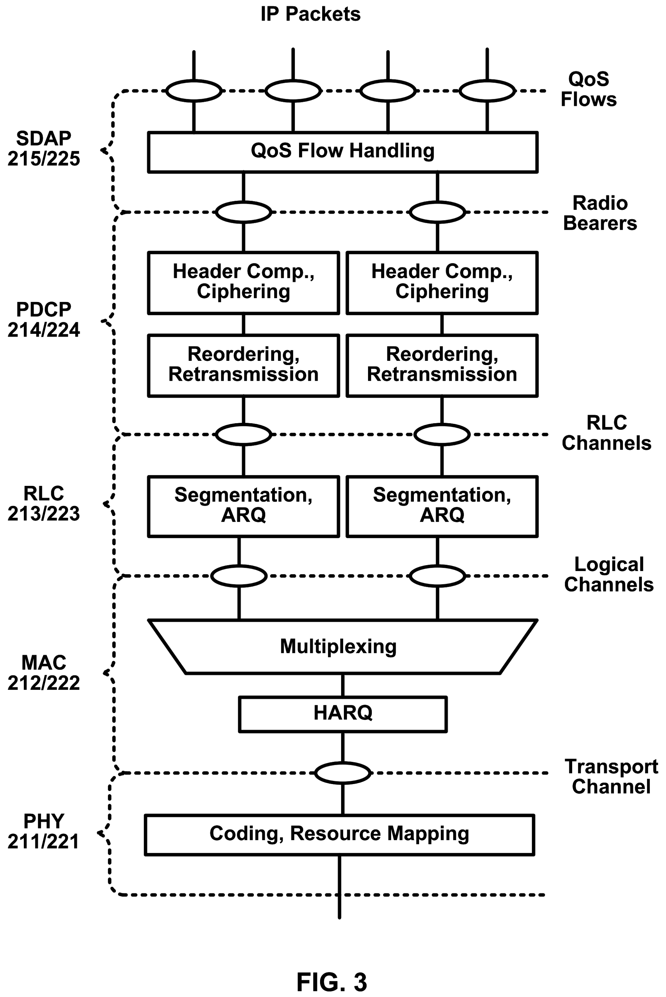

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

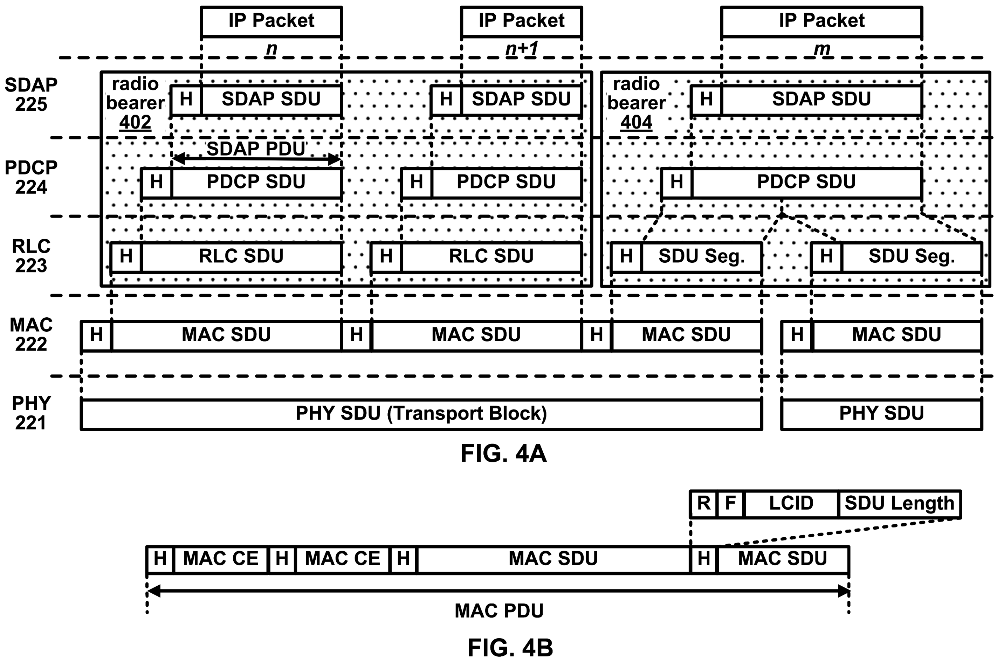

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the **IP** packets n and n+1 to a first radio bearer 402 and map the IP packet m to a second radio bearer 404. An SDAP header (labeled with "H" preceding each SDAP SDU shown in FIG. 4A) may be added to an **IP** packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

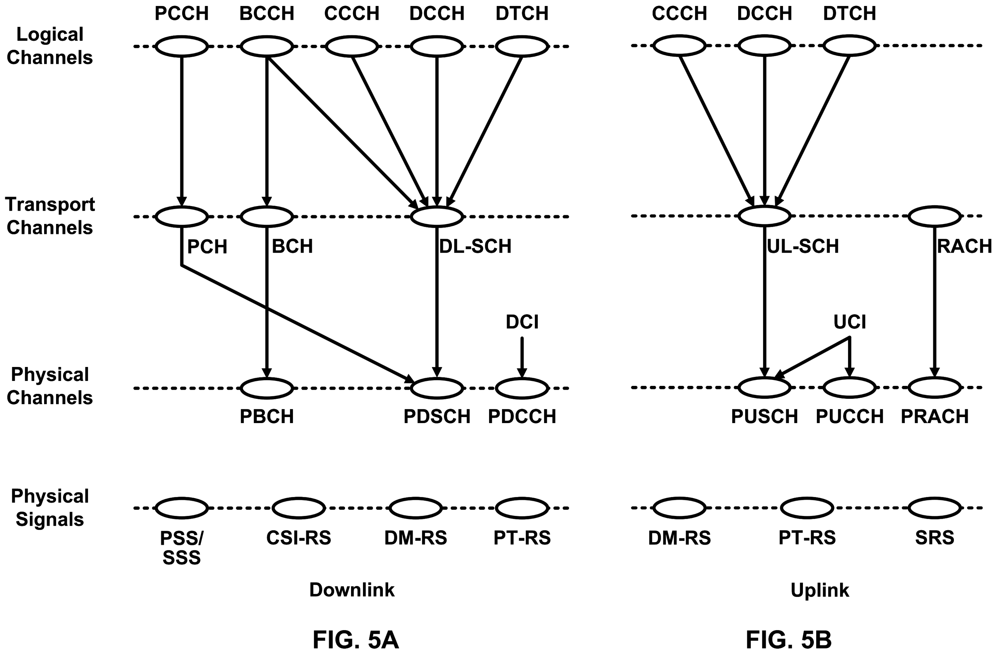

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless devices).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

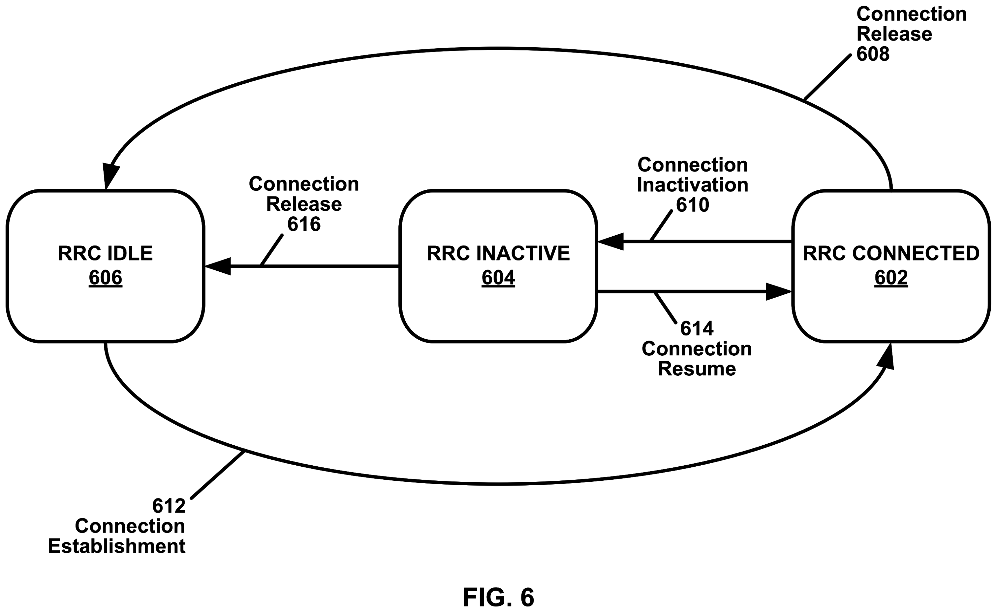

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC _INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split into two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

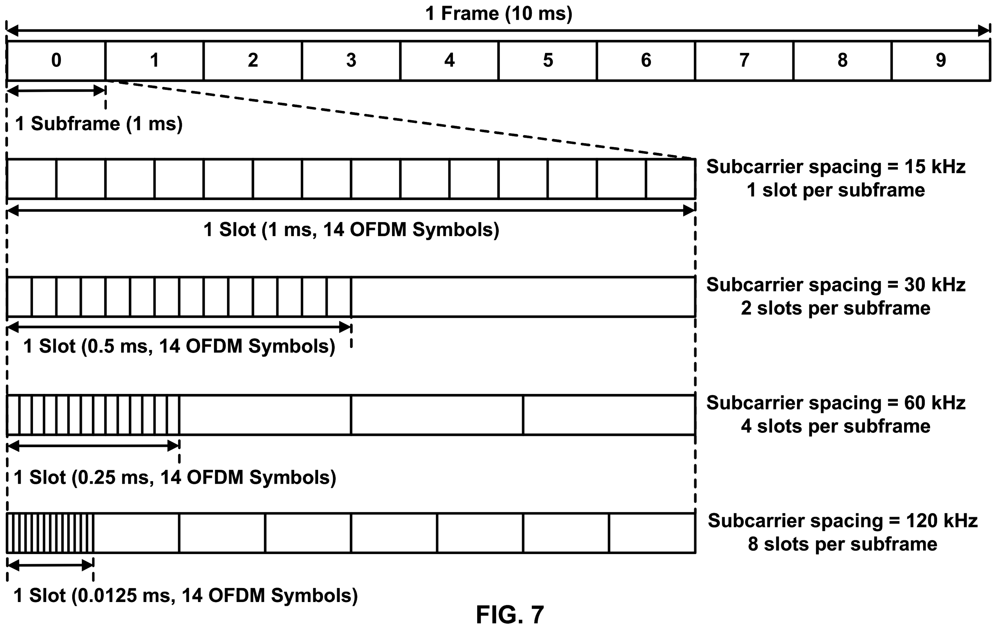

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 µs, for example, for a numerology in an NR configuration or any other radio configurations. Numerologies may be defined with the following subcarrier spacing/cyclic prefix duration combinations: 15 kHz/4.7 µs; 30 kHz/2.3 µs; 60 kHz/1.2 µs; 120 kHz/0.59 µs; 240 kHz/0.29 µs, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

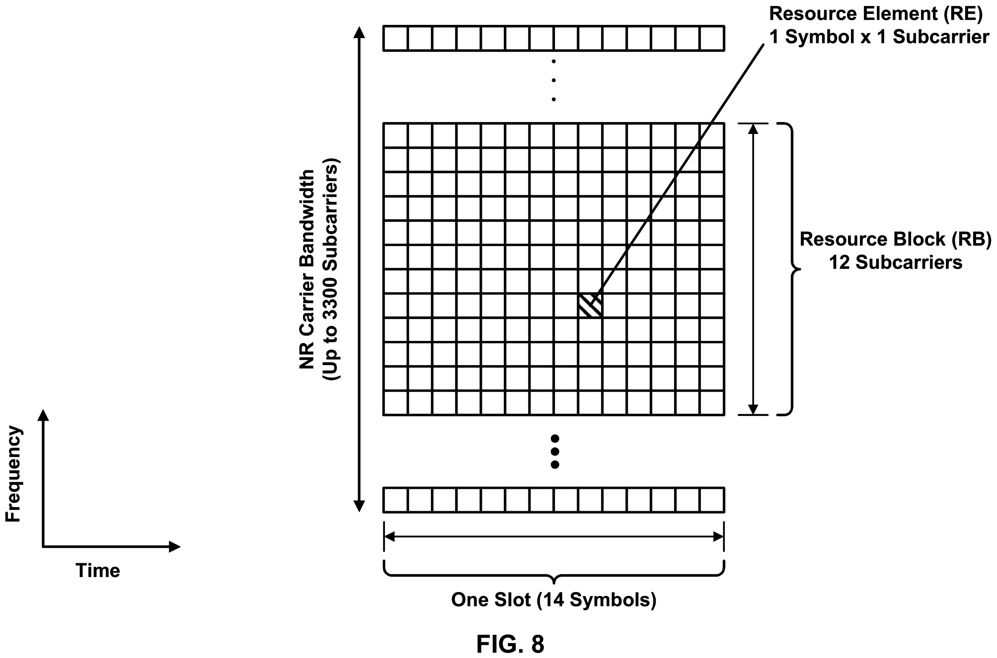

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

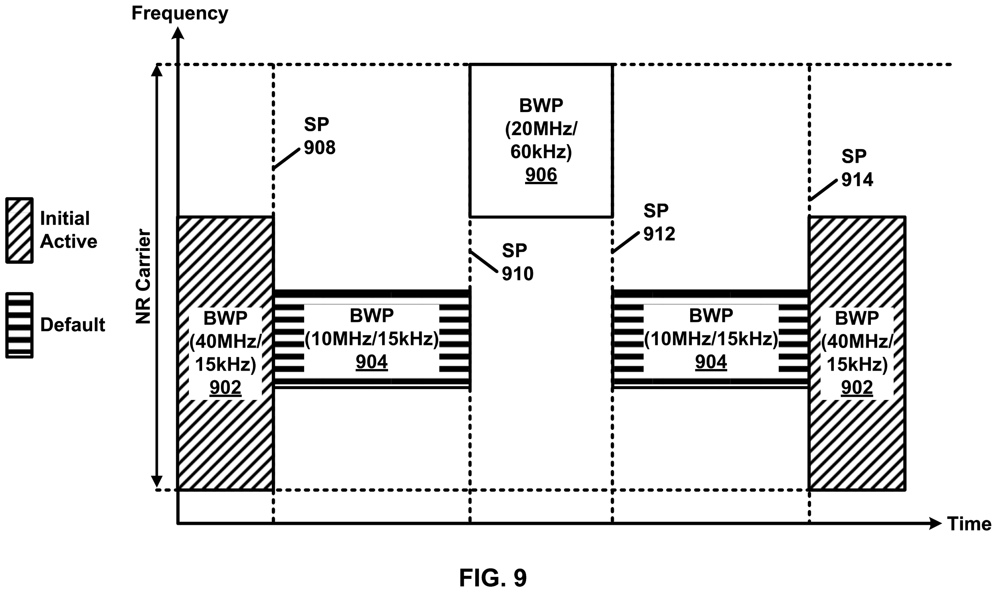

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response to receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response to receiving DCI indicating BWP 904 as a new active BWP. The wireless device may switch at a switching point 914 from an active BWP 904 to the BWP 902, for example, after or in response to receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one serving cell for a CC), for example, if CA is configured/used. The CCs may have multiple configurations in the frequency domain.

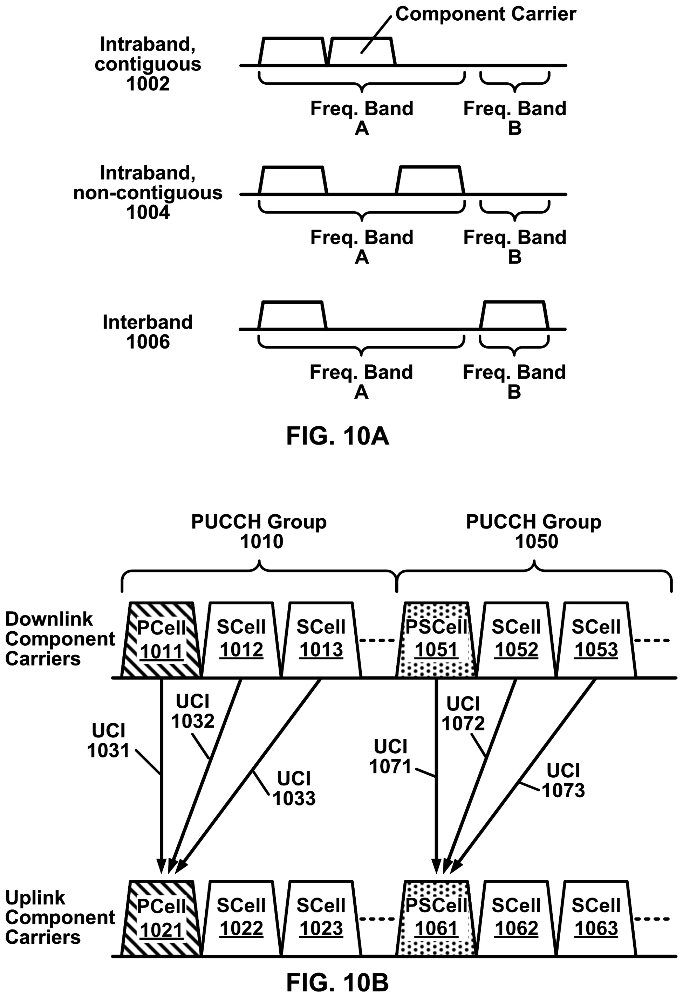

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

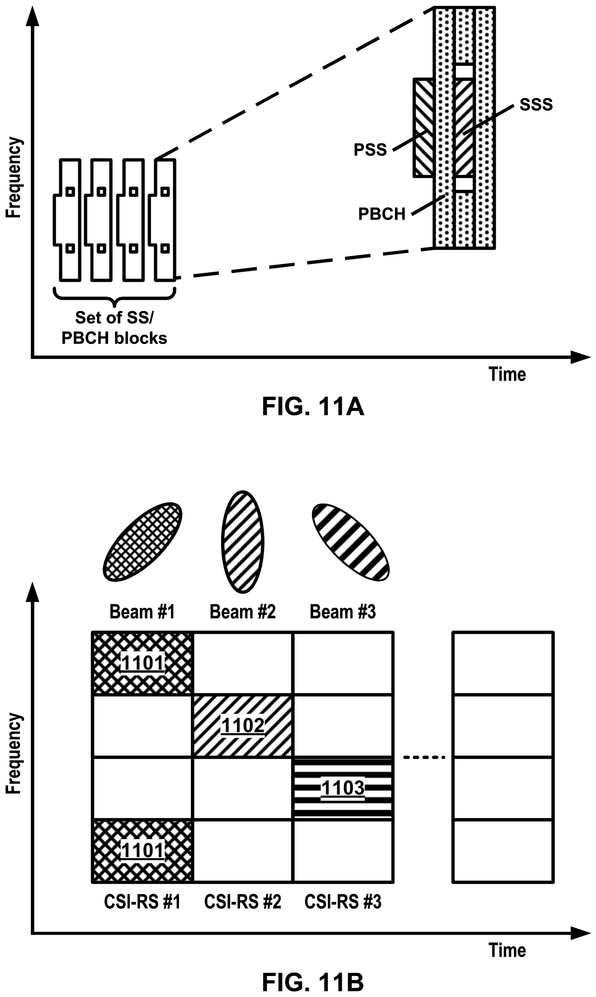

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1.The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g. a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO).A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: an SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid*), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

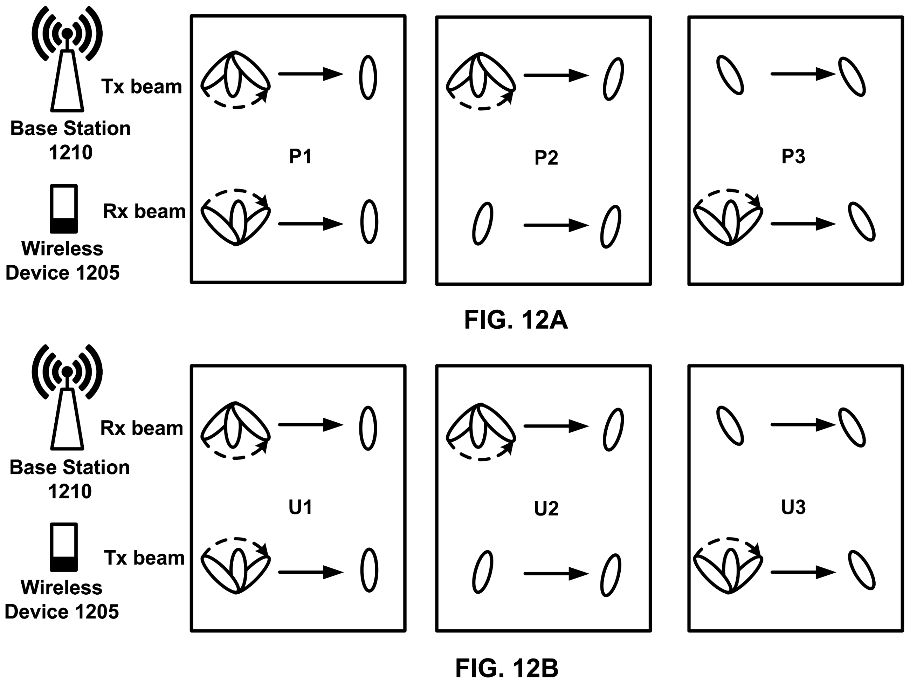

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station (e.g., base station 1210) and the Rx beams of a wireless device (e.g., wireless device 1205) are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station (e.g., base station 1210) to perform a measurement on Tx beams of a wireless device (e.g., wireless device 1205) (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

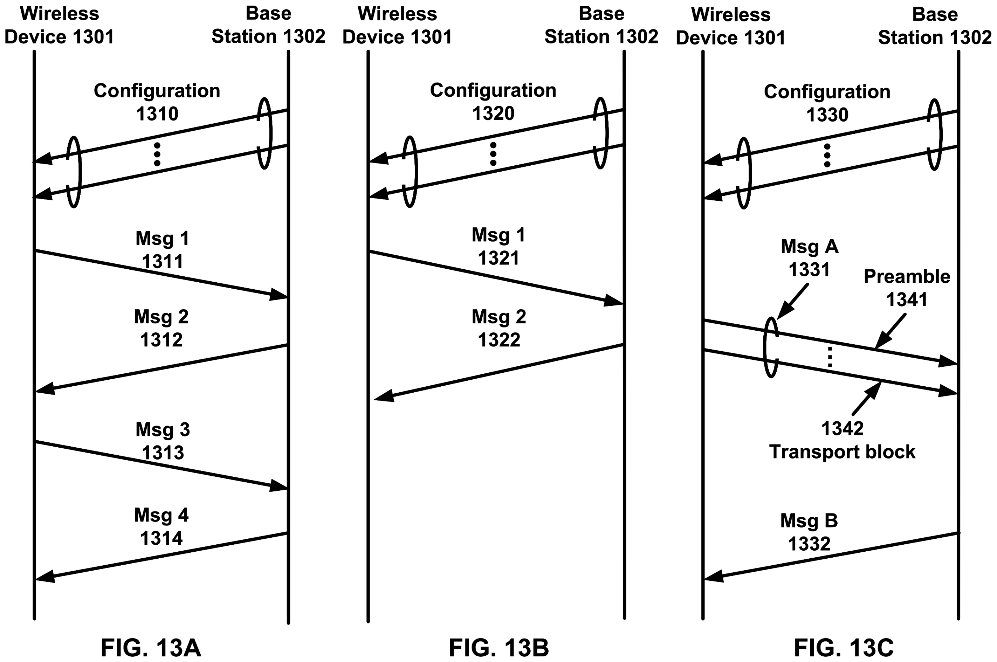

FIG. 13A shows an example four-step random access procedure. The four-step random access procedure may comprise a four-step contention-based random access procedure. A base station (e.g., base station 1302) may send/transmit a configuration message 1310 to a wireless device (e.g., wireless device 1301), for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-*configGeneral*); cell-specific parameters (e.g., RACH-*ConfigCommon*); and/or dedicated parameters (e.g., RACH-*configDedicated*). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., *prach-ConfigIndex*)*.* The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*)*.* The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs).The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., *ra-ssb-OccasionMskIndex* and/or *ra-OccasionList*) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., *PREAMBLE_TRANSMISSION_COUNTER*)*.* The wireless device may determine that a random access procedure has been completed unsuccessfully, for example, if the quantity/number of preamble transmissions exceeds a threshold configured by the one or more RACH parameters (e.g., *preambleTransMax*) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., *ra-ResponseWindow*) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:$RA_RNTI = 1 + s_id + 14 \times 80 \times f_id + 14 \times 80 \times 8 \times ul_carrier_id$ where s_id may be an index of a first OFDM symbol of the PRACH occasion (e.g., 0 ≤ s_id < 14), t_id may be an index of a first slot of the PRACH occasion in a system frame (e.g., 0 ≤ t_id < 80), f_id may be an index of the PRACH occasion in the frequency domain (e.g., 0 ≤ f_id < 8), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station (e.g., base station 1302) may, prior to initiation of the procedure, send/transmit a configuration message 1320 to the wireless device (e.g., wireless device 1301). The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., *ra-PreambleIndex*)*.*

The wireless device may start a time window (e.g., *ra-ResponseWindow*) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., *recoverySearchSpaceId*)*.* The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station (e.g., base station 1302) may, prior to initiation of the procedure, send/transmit a configuration message 1330 to the wireless device (e.g., wireless device 1301). The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1331 may be sent/transmitted in an uplink transmission by the wireless device. Msg A 1331 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

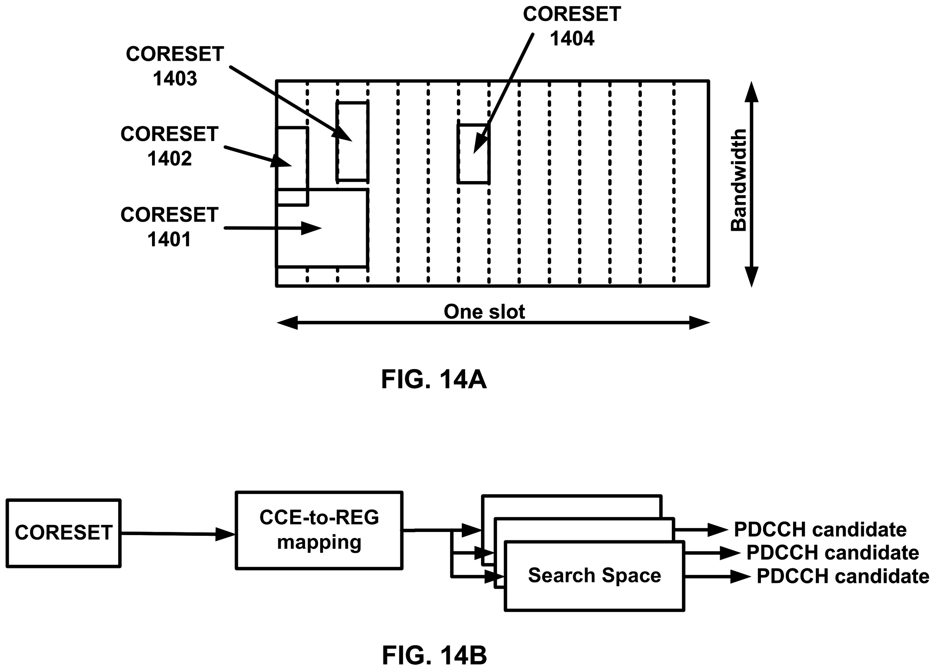

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The wireless device may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*), and/or a quantity/number (e.g. a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

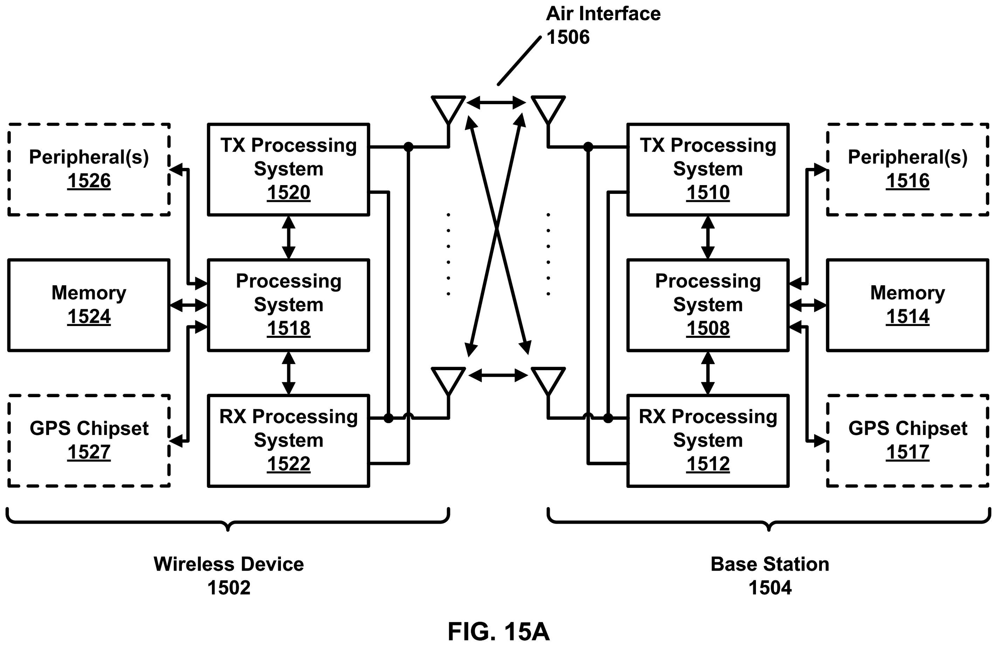

FIG. 15A shows example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

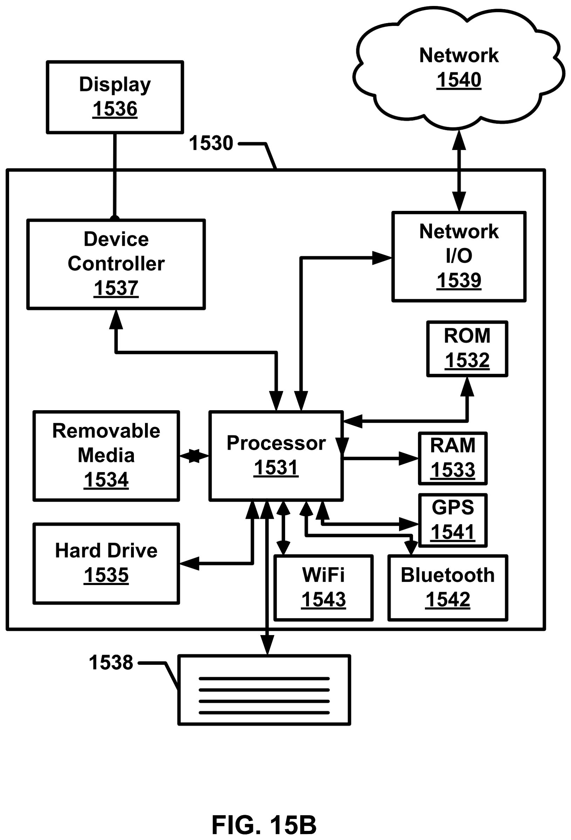

FIG. 15B shows example elements of a computing device that may be used to implement any of the various devices described herein, including, for example, the base station 160A, 160B, 162A, 162B, 220, 1210, 1302, 1720, 1760, 1810, 1830, 1850, 1910, 1930, 1950, 2010, and/or 2110, the wireless device 106, 156A, 156B, 210, 1205, 1301, 1700, 1740, 1800, 1820, 1840, 1900, 1920, 1940, 2020, and/or 2120 or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

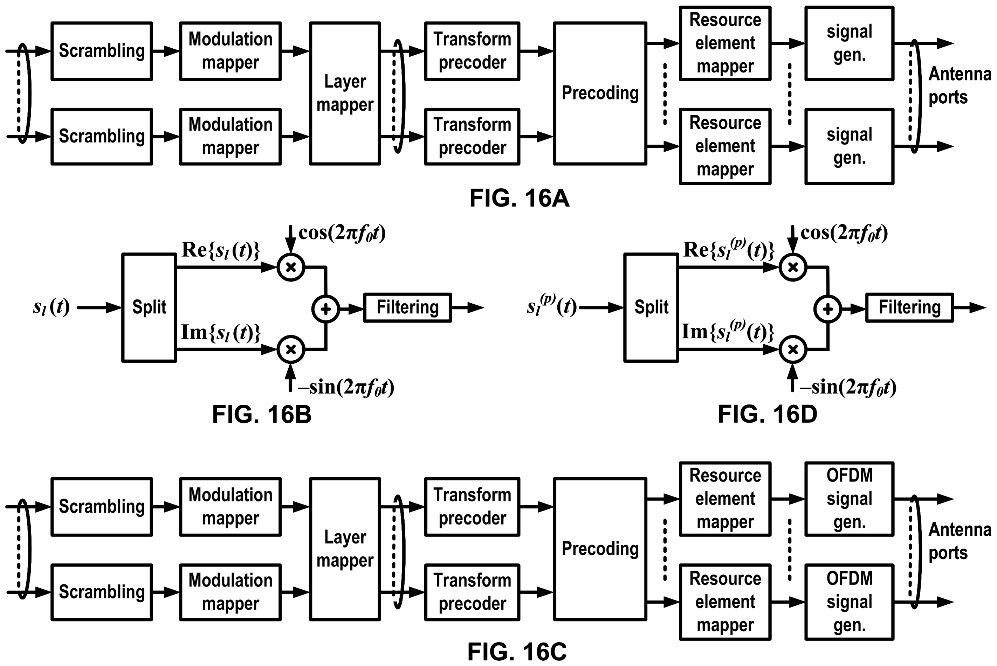

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, after (e.g., as soon as) it is started and continue running until it is stopped or until it expires. A timer may be started, for example, if it is not running or restarted if it is running. A timer may be associated with a value (e.g., the timer may be started or restarted from a value or may be started from zero and expire after (e.g., as soon as) it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

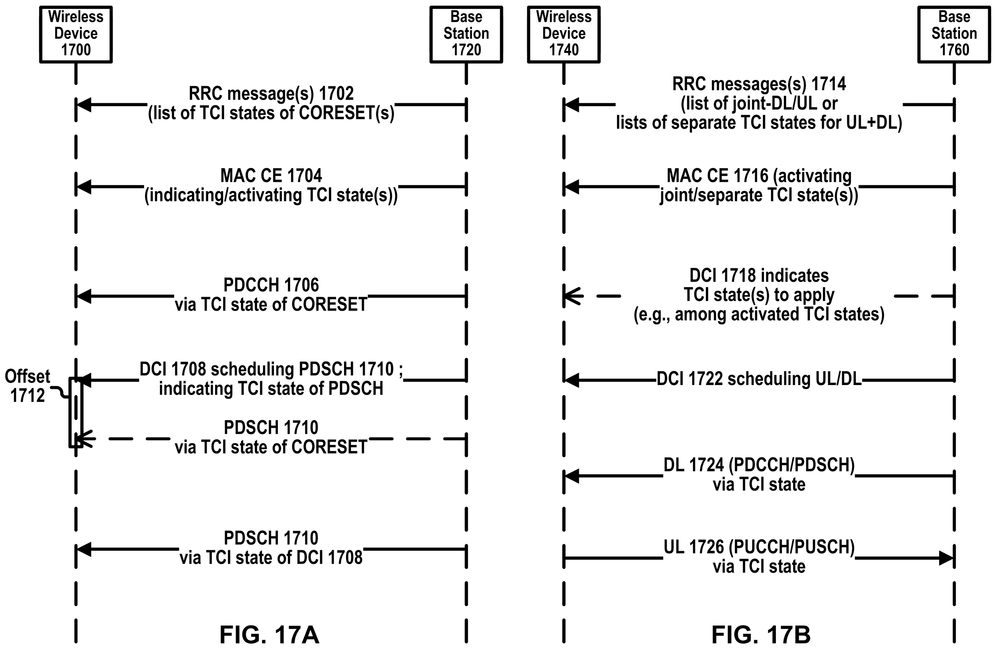

FIG. 17A shows an example method for beam indication based on TCI states. FIG. 17B shows an example method for beam indication based on TCI states. For example, FIG. 17A shows an example of a wireless device 1700 receiving, from a base station 1720, channel-specific beam indications for separate downlink physical channels, such as the PDCCH and the PDSCH. For example, FIG. 17B shows an example of a wireless device 1740 receiving, from a base station 1760, beam indications applicable (jointly) to multiple physical channels (i.e., common among physical channels), such as TCI states for downlink receptions and/or uplink transmissions. This approach of using a TCI state for multiple physical channels as shown in FIG. 17B may be referred to as a unified TCI framework.

As shown in FIG. 17A, wireless device 1700 may receive one or more RRC messages 1702 from base station 1720. One or more RRC messages 1702 may indicate one or more TCI states for one or more CORESETs. For example, RRC messages 1702 may comprise a list of TCI states (e.g., a list of IDs of TCI states) for CORESETs of wireless device 1700.

Each TCI state may indicate one or more reference signals. For example, each TCI state may comprise one or more IDs of one or more reference signals. The one or more reference signals of a TCI state may be used for channel estimation (including beam determination) such that a signal that is quasi co-located (QCL'd) with the reference signal of a TCI state may experience the same channel conditions (e.g., distortions) and properties as the reference signal of the TCI state and therefore the effects of the channel on the signal may be inferred from the effects of the channel on the reference signal as the reference signal is a known sequence (e.g., a pilot signal).

A TCI state may indicate which, so-called, large-scale channel properties may be inferred from the QCL association between a signal and a reference signal of a TCI state. To do so, each of the one or more reference signals of a TCI state may be associated with a QCL type. For example, there may be four QCL types, such as QCL-Type A, QCL-Type B, QCL-Type C, and QCL-Type D. QCL-Type A may be used to estimate Doppler shift, Doppler spread, average delay, and delay spread. QCL-Type B may be used to estimate Doppler shift and Doppler spread. QCL-Type C may be used to estimate average delay and Doppler shift. QCL-Type D may be used for spatial domain parameters (e.g., one or more parameters for spatial domain reception filters used to receive downlink signals).

A reference signal of a TCI state with a QCL type of QCL-Type D may be used for beam determination. Wireless device 1700 may determine (e.g., assume or infer) that base station 1720 may use/apply the same spatial (domain) filter to both the signal and the reference signal of the TCI states, for example, if a signal is QCL'd with a reference signal of a TCI state with QCL-Type D. Wireless device 1700 may apply a spatial domain (reception) filter suitable to receive the signal, for example, by being able to determine (e.g., assume or infer) the spatial domain (transmission) filter used/applied by base station 1720 to a signal (from the spatial domain filter used/applied to the QCL'd reference signal).

As described with respect to FIG. 17A, wireless device 1700 receives one or more RRC messages 1702 that indicate TCI states. For example, one or more RRC messages 1702 may comprise a list of TCI states of a CORESET (e.g., a list of IDs of TCI states). Wireless device 1700 may use the TCI states in the list for receiving PDCCHs on the CORESETs. The TCI states indicated by one or more RRC messages 1702 may be referred to as configured TCI states or RRC-configured TCI states.

FIG. 17A shows that wireless device 1700 may receive MAC CE 1704 from base station 1720. MAC CE 1704 may indicate, or activate, one or more TCI states configured by one or more RRC messages 1702. For example, MAC CE 1704 may indicate a (e.g., single) TCI state for one or more CORESETs (e.g., for PDCCH receptions via the one or more CORESETs). For example, MAC CE 1704 may activate a plurality of TCI states that may be used (applied) for PDCCH receptions via CORESETs. The TCI states indicated by MAC CE 1704 may be referred to as activated TCI states or MAC-CE activated TCI states.

Wireless device 1700 may determine one or more spatial (domain) filter parameters based on a reference signal of the TCI state. For example, FIG. 17A shows that wireless device 1700 may receive PDCCH 1706, of a CORESET, via a TCI state of the CORESET.

For PDSCH reception, DCI may be used to indicate which TCI state, among the (MAC-CE) activated TCI states (e.g., for the CORESETs), wireless device 1700 may be to use (apply) for receiving PDSCH receptions (e.g., data, transport blocks, code block groups of a transport block). For example, wireless device 1700 may receive DCI 1708. DCI 1708 may schedule a PDSCH transmission and indicate which TCI state, among the activated TCI states, wireless device 1700 may be to use (apply) for receiving the PDSCH transmission. A TCI state indicated by DCI may be referred to as an indicated TCI state. For example, a MAC CE that may indicate a (e.g., one) TCI state may be referred to as an indicated TCI state.

Wireless device 1700 may apply a different TCI state depending on an offset (e.g., in scheduling) between receiving DCI 1708 and the PDSCH reception, for example, although DCI 1708 indicates a TCI state to use for receiving the scheduled PDSCH reception. For example, DCI 1708 may schedule PDSCH reception 1710 within an offset 1712. Offset 1712 may be referred to as a scheduling offset. Offset 1712 may be a duration or a quantity/number of symbols. Offset 1712 may be based on a wireless device-capability of wireless device 1700.

Wireless device 1700 may use/apply the TCI state of the CORESET, for example, based on base station 1720 scheduling, via DCI 1708, the PDSCH reception 1710 within offset 1712. Wireless device 1700 may use/apply the TCI state used to receive PDCCH 1706 (e.g., and does not apply the TCI state indicated by DCI 1708 for receiving PDSCH reception 1710).

Within offset 1712, wireless device 1700 may be unable to (successfully) decode DCI 1708, update the spatial filtering, and/or retune RF chains in time for receiving PDSCH reception 1710. By using the TCI state of the CORESET used to receive PDCCH 1706 (instead of the TCI state indicated in DCI 1708 for receiving the PDSCH reception 1710), this may allow wireless device 1700 to receive PDSCH reception 1710 within offset 1712.

Wireless device 1700 may apply the TCI state indicated by DCI 1708 for receiving PDSCH reception 1710, for example, if PDSCH 1710 is scheduled after offset 1712. For example, FIG. 17A shows that wireless device 1700 may receive, from base station 1720, PDSCH reception 1710 via the TCI state indicated by DCI 1708. Wireless device 1700 may apply the TCI state of the CORESET for PDSCH reception 1710, for example, based on (e.g., in response to) DCI 1708 not comprising a field indicating a TCI state (any TCI state) for PDSCH reception 1710 (e.g., based on a DCI format of DCI 1708, such as DCI 1_0).

As shown in FIG. 17A, base station 1720 may send (e.g., transmit) separate beam indications for the PDCCH and the PDSCH, along with separate beam indications for each PDSCH transmission. FIG. 17B shows an example of a unified TCI state framework. Under the unified TCI state framework, a single TCI state (or a set of TCI states) may be indicated for each of the downlink physical channels, such as a single TCI state for both PDCCH and PDSCH transmissions. A TCI state that may be used/applied to both the PDCCH and PDSCH may be referred to as a downlink TCI state or a joint-downlink TCI state (joint may refer to a TCI state being jointly used/applied to different physical channels). For uplink beam indications under the unified TCI state framework, the network may indicate a TCI state (or a set of TCI states) for each of the uplink physical channels, such as a single TCI state for both PUCCH and PUSCH transmissions. A TCI state that may be used/applied to both the PUCCH and PUSCH may be referred to as an uplink TCI state or a joint-uplink TCI state.

The unified TCI state framework may also be used to indicate a single TCI state (or a set of TCI states) for both downlink and uplink, for example, in addition to providing TCI states that may be (jointly) used/applied to each of the physical channels in the downlink or uplink. The TCI state is used for each of the physical channels of the downlink and uplink, such as the PDCCH, PDSCH, PUCCH, and PUSCH. A TCI state applicable to both downlink and uplink, the TCI state may be referred to as a joint TCI state, a joint DL/UL TCI state, or a common TCI state. A TCI state applicable to the unified TCI state framework, the TCI state may be referred to as a unified TCI state.

As described with respect to FIG. 17B, wireless device 1740 may receive, from base station 1760, one or more RRC messages 1714. One or more RRC messages 1714 indicates a plurality of TCI states. The plurality of TCI states may be a plurality of unified TCI states. As an example, one or more RRC messages 1714 may comprise a list of the plurality of TCI states. The list of the plurality of TCI states may be a list of joint (downlink-and-uplink) TCI states, which may be used/applied to both the downlink and uplink (e.g., each of the downlink and uplink physical channels). The list of joint TCI states may be a list of downlink TCI states (or joint-downlink TCI states), and the absence of a (separate) list of uplink TCI states may imply that the list of downlink TCI states is applicable to both the downlink and uplink (physical channels). For example, one or more RRC messages 1714 may comprise separate lists of TCI states for downlink and uplink. For example, the list of the plurality of TCI states may comprise a list of downlink TCI states and a list of uplink TCI states. Additionally or alternatively, one or more RRC messages 1714 may comprise a parameter indicating that the TCI states are joint (e.g., TCI states are applicable for both downlink and uplink) or separate (e.g., TCI states are applicable to downlink or uplink).

One or more RRC messages 1714 may indicate one (e.g., a single) TCI state instead of a plurality of TCI states. Based on (e.g., in response to) one or more RRC messages 1714 indicating one TCI state, wireless device 1740 may (e.g., start to) apply the TCI state without additional signaling via MAC CE and/or DCI.

The plurality of TCI states indicated by one or more RRC messages 1714 may be referred to as configured TCI states or RRC-configured TCI states, for example, similar to the TCI states indicated by one or more RRC messages 1702 of FIG. 17A. There may be two mechanisms for indicating which TCI state, among the plurality of TCI states configured by one or more RRC messages 1714, to use (apply) to transmissions between wireless device 1740 and base station 1760. In a first mechanism, wireless device 1740 receives a MAC CE 1716. MAC CE 1716 indicates a (e.g., single) TCI state, or multiple TCI states, among the plurality of TCI states indicated by one or more RRC messages 1714 (i.e., among the (RRC-)configured TCI states). For example, a field of MAC CE 1716 may indicate a (e.g., single) value (e.g., a single value or a single codepoint) that is associated with one TCI state or more TCI states (e.g., one codepoint associated with two TCI states) among the plurality of TCI states indicated by one or more RRC messages 1714.

MAC CE 1716 may indicate a TCI state to be used/applied to downlink and uplink. For example, MAC CE 1716 may indicate, or comprise, an ID of a TCI state among TCI states in a list of downlink TCI states (joint-downlink TCI states). For example, MAC CE 1716 may indicate separate TCI states for downlink and uplink. For example, MAC CE 1716 may indicate an ID of a TCI from the TCI states in a list of downlink TCI states (joint-downlink TCI states) and an ID of a TCI state from TCI states in a (separate) list of uplink TCI states. To indicate the one or more TCI states, MAC CE 1716 may comprise a field and a value of the field may correspond to an ID of the TCI state. Additionally or alternatively, MAC CE 1716 may have an indicator associated with the field (e.g., in the same octet) that indicates whether the indicated TCI state is an uplink TCI or a downlink TCI state (e.g., the ID of the TCI state is from the list of downlink TCI states or from the list of uplink TCI states configured by one or more RRC messages 1714).

Both MAC CE and DCI signaling may be involved, for example, in a second mechanism for indicating which TCI state to use (apply). As shown in FIG. 17B, wireless device 1740 may receive MAC CE 1716. MAC CE 1716 may indicate activation of a plurality of TCI states. For example, fields of MAC CE 1716 may indicate a plurality of values (e.g., codepoints) that are associated with the plurality of TCI states (e.g., each codepoint being associated one or more TCI states) among the plurality of TCI states indicated by one or more RRC messages 1714. The TCI states activated by MAC CE 1716 may be referred to as activated TCI states. Wireless device 1740 may receive DCI 1718. DCI 1718 may indicate a TCI state among the TCI states activated by MAC CE 1716. Based on DCI 1718 indicating the TCI state among the (MAC-CE) activated TCI states, wireless device 1740 use/apply the (DCI-)indicated TCI state for receiving transmissions on physical channels.

DCI 1718 may indicate one or more TCI states, for example, similar to MAC CE 1716. For example, DCI 1718 may indicate a TCI state for downlink receptions (e.g., from among the plurality of TCI states activated by MAC CE 1716). DCI 1718 may indicate a TCI state for uplink transmissions (e.g., from among the plurality of TCI states activated by MAC CE 1716). As example of indicating a TCI state, DCI 1718 may comprise a field to indicate the one or more TCI states. The field may be referred to as a TCI state field. A value (e.g., a codepoint) of the TCI state field of DCI 1718 may be associated with one or more TCI states. For example, a value of the TCI state field may indicate a TCI state to be used/applied to downlink transmission, a value of the TCI state field may indicate a TCI state to be used/applied to uplink transmissions, and/or a value of the TCI state field may indicate (both) a TCI to be used/applied to downlink transmissions and a TCI state to be used/applied to uplink transmissions. One or more RRC messages 1714 may indicate the association between the vales (e.g., codepoints) of the TCI state field of DCI 1718 and the IDs of the plurality of TCI states (configured by one or more RRC messages 1714 and activated by MAC CE 1716).

A TCI state indicated by MAC CE 1716 and/or DCI 1718 may be referred to as an updated TCI state, and the indicating by MAC CE 1716 and/or DCI 1718 may be referred to as updating the (current) TCI state. MAC CE 1716 (in the first mechanism) may be said to update the (indicated) TCI state, for example, by indicating a TCI state for downlink and/or uplink. DCI 1718 may be said to update the (indicated) TCI state, for example, if MAC CE 1716 indicates activation of TCI states and DCI 1718 indicates a TCI state for downlink and/or uplink.

Wireless device 1740 may use/apply the TCI state to receive downlink receptions and/or send (e.g., transmit) uplink transmissions, for example, if (or after) the TCI state is indicated by MAC CE 1716 and/or DCI 1718. The (indicated) TCI state may remain as the TCI state that wireless device 1740 use/apply to (subsequent) downlink receptions and uplink receptions (e.g., until the TCI state is indicated, or updated, by a subsequent MAC CE and/or DCI).

As described with respect to FIG. 17B, wireless device 1740 may receive DCI 1722 from base station 1760. DCI 1722 may schedule one or more downlink transmissions and/or schedules (or triggers) one or more uplink transmissions. Wireless device 1740 may receive downlink transmission 1724 via the TCI state (indicated by MAC CE 1716 and/or DCI 1718). Additionally or alternatively, wireless device 1740 may send (e.g., transmit) uplink transmission 1726 via the TCI state (indicated by MAC CE 1716 and/or DCI 1718).

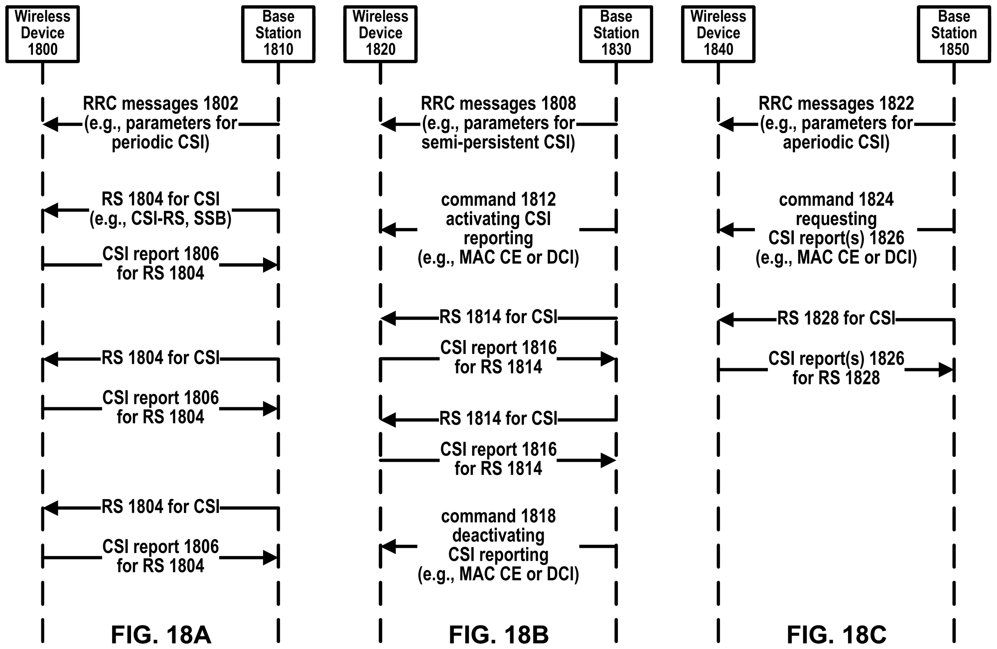

FIGs. 18A, 18B, and 18C show example methods for CSI reporting triggered by the network (e.g., a base station). FIG. 18A shows an example of periodic CSI reporting in which a wireless device 1800 periodically may send (e.g., transmit) CSI reports to a base station 1810. FIG. 18B shows an example of semi-persistent CSI reporting in which a wireless device 1820, after receiving an activation command from a base station 1830, periodically may send (e.g., transmit) CSI reports to base station 1830 until wireless device 1820 receives a deactivation command from base station 1830. FIG. 18C shows an example of aperiodic CSI reporting in which a wireless device 1840 receives, from a base station 1850, a request to send (e.g., transmit) one or more aperiodic CSI reports to base station 1850 (e.g., a plurality of aperiodic CSI reports may be requested, which are not periodically sent (e.g., transmitted).

FIG. 18A shows wireless device 1800 receives, from base station 1810, one or more RRC messages 1802. One or more RRC messages 1802 may indicate, or comprise, parameters for periodic CSI reporting. The parameters for periodic CSI reporting may comprise, for example, one or more CSI reporting configuration parameters, such as a CSI report configuration and/or a resource configuration of reference signals (e.g., resources of reference signals).

One or more RRC messages 1802 may indicate a periodicity for CSI reporting. This may be referred to as a report periodicity type. The periodicity may indicate that report periodicity type is periodic or semi-persistent. In FIG. 18A, the one or more parameters for periodic CSI reporting, in one or more RRC messages 1802, may indicate that the periodicity for CSI reporting is periodic (e.g., the periodicity is set to periodic).

The one or more parameters for periodic CSI reporting (e.g., in the CSI report configuration), of one or more RRC messages 1802, may indicate one or more quantities to measure and report. A quantity to measure and report may be referred to as a report quantity, a quantity, or a radio link quality. The report quantity of the one or more configuration parameters for periodic CSI reporting may indicate to report one or a combination of any one of the following report quantities: channel quality indicator (CQI), a rank indicator (RI), a precoder-matrix indicator (PMI), a (e.g., strongest) layer indicator (LI or SLI), and/or a layer-1 RSRP (L1-RSRP).

The one or more parameters for periodic CSI reporting, of one or more RRC messages 1802, may indicate the (downlink) reference signals that wireless device 1800 measures to report the report quantity. For example, one or more parameters may indicate a reference signal from reference signals in a reference signal configuration. The reference signals and configurations of reference signals may be referred to as resource sets (e.g., of reference signals) and configuration of resource sets (e.g., for reference signals). The types of reference signals indicated by the one or more parameters may be CSI-RSs and/or SSBs. For example, the reference signal configuration may be a (non-zero power) CSI-RS resource set, which configures a set of CSI-RSs or a set of SSBs for CSI. The set of CSI-RSs may be one or more CSI-RSs (e.g., one CSI-RS may be configured in the set) and the set of SSBs may be one or more SSBs (e.g., one SSB may be configured in the set). As with CSI reports, there may be three types of periodicities of (downlink) reference signals that may be measured and reported. A reference signal may be a periodic reference signal, a semi-persistent reference signal, or an aperiodic reference signal. A semi-persistent reference signal is a reference signal with a periodicity that may be (e.g., dynamically) stopped or skipped based on signaling.

The CSI reporting periodicity and the periodicity of the reference signal may be different from each other. For example, periodic CSI reporting may be reported for periodic reference signals. Semi-persistent CSI reporting may be reported for periodic reference signals and/or semi-persistent reference signals. Aperiodic CSI reporting may be reported for periodic reference signals, semi-persistent reference signals, and/or aperiodic reference signals.

Wireless device 1800 may not receive any signaling to begin reporting CSI (other than one or more RRC messages 1802) from base station 1810, for example, in periodic CSI reporting. There may be no (trigger) condition for periodic CSI reporting. For example, FIG. 18A shows that wireless device 1800 receives (e.g., starts receiving) a reference signal 1804 from base station 1810, for example, if (or after) wireless device 1800 receives one or more RRC messages 1802. Reference signal 1804 may be a periodic reference signal (e.g., periodic CSI-RS or SSB), as described herein. One or more RRC messages 1808 may indicate reference signal 1804 to be used for the periodic CSI reporting (e.g., from a reference signal configuration). Wireless device may send (e.g., transmit) a CSI report 1806, for example, based on reference signal 1804 to base station 1810. CSI report 1806 may comprise the report quantity indicated by the one or more parameters for periodic CSI reporting in one or more RRC messages 1802. Wireless device 1800 may measure (e.g., a radio link quality) of reference signal 1804, for example, based on the report quantity indicated by one or more RRC messages 1802.

As shown in FIG. 18A, wireless device 1800 may periodically send (e.g., transmit) CSI report 1806 to base station 1810. While the same CSI report 1806 is shown (with the same type of report quantity), a value of the report quantity may change with each transmission of CSI report 1806, for example, based on reference signal 1804.

FIG. 18B shows an example of semi-persistent CSI reporting. For example, wireless device 1820 may receive one or more RRC messages 1808 from base station 1830. One or more RRC messages 1808 may comprise parameters for semi-persistent CSI reporting. One or more RRC messages 1808 may indicate, or comprise, the same parameters discussed above one or more RRC messages 1802 in FIG. 18A. For example, one or more RRC messages 1808 may indicate a periodicity for CSI reporting. The report periodicity type in one or more RRC messages 1808 may be semi-persistent (instead of periodic as in one or more RRC messages 1802). Additionally or alternatively, the report periodicity type may indicate one of two types of semi-persistent CSI reporting. For example, the report periodicity type may indicate semi-persistent CSI reporting on PUCCH or semi-persistent CSI reporting on PUSCH. In FIG. 18B, the report periodicity type may be semi-persistent on PUSCH.

One or more RRC messages 1808 may indicate a report quantity and (downlink) reference signals for the semi-persistent CSI reporting (on PUCCH or PUSCH), for example, similar to one or more RRC messages 1802. The parameters for semi-persistent CSI reporting may indicate a periodic reference signal or a semi-persistent reference signal for wireless device 1820 to measure and report to base station 1830.

Semi-persistent CSI reporting is similar to periodic CSI reporting except that signaling may be involved to activate and deactivate the CSI reporting. For example, wireless device 1820 may receive a command 1812 indicating activation of the (semi-persistent) CSI reporting. Command 1812 may be an activation command. For example, command 1812 may be a MAC CE indicating activation of the semi-persistent CSI reporting (e.g., on PUCCH) or DCI indicating activation of semi-persistent CSI reporting (e.g., on PUSCH). Wireless device 1820 may (start) receiving a reference signal 1814 for CSI reporting (e.g., CSI-RS or SSB), for example, if (or after) receiving command 1812. For example, wireless device 1820 may not receive (e.g., measure) reference signal 1814, for example, until (after) wireless device 1820 receives command 1812 from base station 1830,

Wireless device 1820 (periodically) may send (e.g., transmit) a CSI report 1816 for reference signal 1814, for example, if (or after) base station 1830 indicates activation of semi-persistent CSI reporting via command 1812. CSI report 1816 may indicate the reporting quantity of reference signal 1814. The reporting quantity in CSI report 1816 may change over time based on measurements on reference signal 1814, for example, similar to (periodic) CSI report 1806 of FIG. 18A.

Wireless device 1820 may continue periodically sending (e.g., transmitting) CSI report 1816 until a deactivation command is received in semi-persistent CSI reporting. For example, wireless device 1820 may receive a command 1818 from base station 1830. Command 1818 may indicate deactivation of the (semi-persistent) CSI reporting. Command 1818 may be a deactivation command. For example, command 1818 may be a MAC CE indicating deactivation of the semi-persistent CSI reporting (e.g., on PUCCH) or DCI indicating deactivation of semi-persistent CSI reporting (e.g., on PUSCH). Wireless device 1820 may stop sending/transmitting (and/or measuring) CSI report 1816 of reference signal 1814, for example, if (or after) receiving command 1818 indicating to deactivate (semi-persistent) CSI reporting.

FIG. 18C shows an example of aperiodic CSI reporting. For example, wireless device 1840 may receive one or more RRC messages 1822 from base station 1850. One or more RRC messages 1822 may comprise parameters for aperiodic CSI reporting.

One or more RRC messages 1822 may indicate, or comprise, the same parameters discussed above one or more RRC messages 1802 in FIG. 18A for periodic CSI reporting and/or one or more RRC messages 1808 for semi-persistent CSI reporting. For example, one or more RRC messages 1822 may indicate a periodicity for CSI reporting. The report periodicity type in one or more RRC messages 1822 is aperiodic (instead of periodic or semi-persistent).

One or more RRC messages 1822 may indicate a report quantity and (downlink) reference signals for the aperiodic CSI reporting (e.g., on PUSCH), for example, similar to one or more RRC messages 1802 for periodic CSI reporting and one or more RRC messages 1808 for semi-persistent CSI reporting. The parameters for aperiodic CSI reporting may indicate one or more reference signals for aperiodic CSI reporting. The types of reference signals for aperiodic CSI reporting may be periodic reference signals, semi-persistent reference signals, and/or aperiodic reference signals. The reference signals used for aperiodic CSI reports may be CSI-RSs and/or SSBs.

A base station 1850 may send (e.g., transmit) DCI indicating a request for one or more aperiodic CSI reports, for example, for aperiodic CSI reporting. The request may be a CSI request field of the DCI. One or more RRC messages 1822 may indicate an association between reference signals or reference signal resource sets) and one or more bits of a CSI request field of DCI. This allows base station 1850 to (dynamically) request (or trigger) wireless device 1840 to send (e.g., transmit) a CSI report for one or more of the reference signals (or reference signal resource sets). Additionally or alternatively, one or more RRC messages 1822 may indicate a size of the CSI request field of the DCI for requesting aperiodic CSI reports (e.g., a trigger size). The size of CSI request field may be 0, 1, 2, 3, 4, 5 or 6 bits depending on the size indicated by a parameter in (the parameters for aperiodic CSI reporting of) one or more RRC messages 1822.

Wireless device 1840 may receive a command 1824 from base station 1850, for example, if (or after) receiving one or more RRC messages 1822 in FIG. 18C. Command 1824 may request wireless device 1840 to send (e.g., transmit) one or more aperiodic CSI reports 1826 of one or more reference signals 1828. Command 1824 may be DCI. One or more aperiodic CSI reports 1826 may be a plurality of aperiodic CSI reports.

The parameters for aperiodic CSI reporting in one or more RRC messages 1822 may not comprise uplink resources for sending (e.g., transmitting) aperiodic CSI reports 1826. For example, command 1824 may indicate uplink resources (e.g., comprises an uplink grant) for one or more CSI reports 1826. For example, wireless device 1840 may send (e.g., transmit) one or more CSI reports 1826 for one or more reference signals 1828. Wireless device 1840 may send (e.g., transmit) the one or more CSI reports 1826 on the PUSCH.

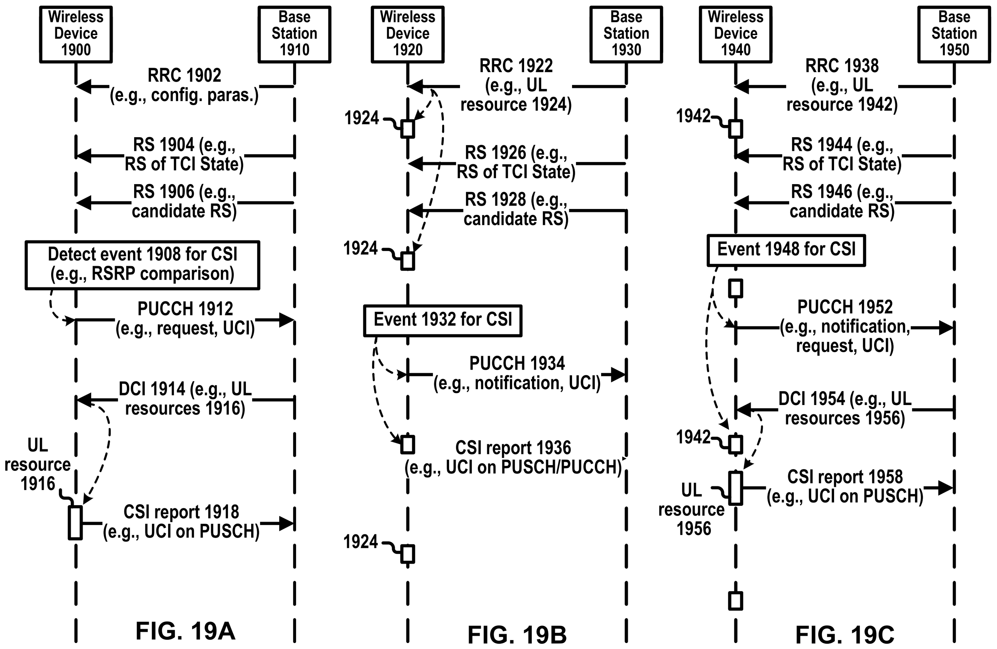

FIGs. 19A, 19B, and 19C show example procedures for CSI reporting triggered (initiated) by the wireless device independently of the network. In periodic CSI reporting, semi-persistent CSI reporting, and aperiodic CSI reporting as shown in FIGs. 18A, 18B, and 18C, respectively, the network acts as a scheduler of CSI reporting and triggers the wireless device to send (e.g., transmit) CSI reports. In the CSI reporting shown in FIGs. 19A, 19B, and 19C, the wireless device may initiate (or trigger) CSI reporting. The example procedures in FIGs. 19A, 19B, and 19C may be used to provide the network with CSI for use in updating a (current) TCI state, such as a TCI state used in the unified TCI framework (e.g., for downlink, uplink, and/or both downlink and uplink) as shown in FIG. 17B.

CSI reporting triggered by a wireless device may be referred to event-driven CSI reporting, event-based CSI reporting, wireless device-initiated CSI reporting, wireless device-initiated beam reporting, or wireless device-initiated beam management. For example, a procedure for CSI reporting triggered by the wireless device may be referred to as an event-driven CSI reporting procedure, an event-based CSI reporting procedure, a wireless device-initiated CSI reporting procedure, a wireless device-initiated beam reporting procedure, or a wireless device-initiated beam management procedure. A CSI report, based on CSI reporting triggered by the wireless device, may be referred to as an event-driven CSI report, an event-based CSI report, a wireless device-initiated CSI report, a wireless device-initiated beam report, or a wireless device-initiated beam management report. Furthermore, the terms "event-driven," "event-based," "event-triggered," "wireless device-initiated," "wireless device-triggered," "terminal-initiated," and "terminal-triggered" may be used to refer to CSI reporting triggered by a wireless device and CSI reports based on the same.

FIG. 19A shows a first mode/scheme of wireless device-initiated CSI reporting (e.g., UE-initiated CSI reporting) in which a wireless device 1900 uses (dynamic) uplink grants to send (e.g., transmit) wireless device-initiated CSI reporting to a base station 1910. FIG. 19B shows a second mode/scheme of wireless device-initiated CSI reporting in which a wireless device 1920 may use preconfigured uplink resources for reporting wireless device-initiated CSI reports to a base station 1930. FIG. 19C shows a scenario in which a wireless device 1940 and a base station 1950 use a combination of the first mode of FIG. 19A (using dynamic uplink grants) and the second mode of FIG. 19B (using preconfigured uplink resources) for sending (e.g., transmitting) wireless device-initiated CSI reporting.

As shown in FIG. 19A, wireless device 1900 may receive one or more RRC messages 1902 from base station 1910. One or more RRC messages 1902 may indicate, or comprise, one or more CSI reporting configuration parameters for CSI reporting (e.g., wireless device-initiated CSI reporting).

The one or more CSI reporting configuration parameters, in one or more RRC messages 1902, may comprise a report configuration type parameter. The report configuration type parameter may indicate that the CSI reporting, of the one or more CSI reporting configuration parameters, may be based on wireless device 1900 detecting an event. For example, the report configuration type parameter may be set to event-triggered (or wireless device-initiated).

The event may be a result from a comparison of a radio link quality of a reference signal to a reference signal of a TCI state. The reference signal of the TCI state may be referred to as a current reference signal or a reference signal of a current TCI state (e.g., a TCI state that has been indicated by a MAC CE for downlink and/or uplink or a TCI state that has been activated by a MAC CE and indicated by DCI, as described in connection with FIG. 17B). A QCL type of the reference signal of the TCI, used for the comparison, may be QCL-Type D. The reference signal that wireless device 1900 compares to the current reference signal of the TCI state, for detecting the event, may be referred to a candidate reference signal.

The event may be that the radio link quality of the candidate reference signal is a threshold value better than (e.g., higher than, greater than, etc.) a radio link quality of a reference signal of a TCI state. For example, the event may be that the radio link quality of the candidate reference signal is better (e.g., higher) than a radio link quality of a current reference signal of a TCI state by a threshold value. The amount that the radio link quality of the candidate reference signal is better (e.g., higher or greater than) the radio link quality of the current reference signal of the TCI state may be greater than, or equal to, a threshold value.

One or more RRC messages 1902 may indicate the threshold value for detecting the event. For example, the threshold value may be preconfigured (e.g., predetermined without being signaled). The threshold value may be an RSRP value, an RSRP offset, an SINR value, or an SINR offset. The radio link quality may be a RSRP, a layer-1 RSRP, or a signal to interference-and-noise ratio (SINR). The radio link quality may be referred to as a report quantity. One or more RRC messages 1902 may indicate in the radio link quality to report (e.g., a report quantity).

The one or more CSI reporting configuration parameters may comprise a CSI resource parameter indicating a list of candidate reference signals. The list of candidate reference signals may be for CSI reporting triggered by the wireless device based on detecting the event. The list of candidate reference signals may be referred to as a list of candidate reference signals for wireless device-initiated CSI reporting or a reference signal resource set for wireless device-initiated CSI reporting.

The list of candidate reference signals may be a (e.g., wireless device-specific or dedicated) list of reference signals for CSI reporting triggered by wireless device 1900. For example, the list of candidate reference signals may be for a cell (e.g., common among wireless devices in the first cell). For example, the list of reference signals for CSI reporting may be reference signals of TCI states indicated (e.g., configured) by one or more RRC messages 1902. For example, the list of reference signals for CSI reporting may be reference signals of TCI states activated by a MAC CE.

The one or more CSI reporting configuration parameters, indicated by one or more RRC messages 1902, may comprise an ID of a reference signal (resource) configuration. The reference signal configuration may be a CSI resource configuration ID. The reference signal configuration may indicate a list of one or more CSI-RS resource sets. The reference signals of the one or more CSI-RS resource sets may be CSI-RSs or SSBs.

The one or more CSI reporting configuration parameters may indicate PUCCH resources. The one or more CSI reporting configuration parameters may indicate a PUCCH resource among PUCCH resources of an uplink BWP. For example, the one or more CSI reporting configuration parameters, of one or more RRC messages 1902, may comprise an ID of a PUCCH resource among (IDs of) PUCCH resources of an uplink BWP.

The one or more CSI reporting configuration parameters may not indicate uplink resources for (transmitting) the CSI reporting, for example, in the first mode. The one or more CSI reporting configuration parameters may not indicate the uplink resources (e.g., PUSCH resources, PUCCH resources) for sending (e.g., transmitting) CSI reports triggered by wireless device 1900, for example, based on detecting an event. The absence of an indication of the uplink resources to be used for sending (e.g., transmitting) CSI reports triggered by wireless device 1900 may, for example, implicitly, indicate that the CSI reporting configuration parameters may be for a first mode of CSI reporting in which the uplink resources is to be requested from base station 1910 (e.g., a request for a dynamic grant).

The one or more CSI reporting configuration parameters may comprise a parameter indicating that CSI reporting, triggered by wireless device 1900, for example, based on detecting the event (e.g., wireless device-initiated or event-driven CSI reporting), may be enabled or activated. For example, the parameter may indicate that CSI reporting may be enabled, or activated, for a cell. For example, the parameter may indicate that CSI reporting is enabled, or activated, for an uplink BWP. Additionally or alternatively to the implicit indication, the parameter (or another parameter) may (explicitly) indicate a mode that is being configured among the first mode and the second mode.

The one or more CSI reporting configuration parameters may comprise one or more timer values of one or more timers for detecting the event. Each of the one or more timers may be associated with at least one candidate reference signal among the one or more candidate reference signals.

The one or more CSI reporting configuration parameters may comprise one or more maximum count values of one or more counters of a quantity/number of times the event is detected, for one or more candidate reference signals. Each of the one or more counters may be incremented (e.g., up to an associated maximum count value among the one or more maximum count values) based on (e.g., in response to) receiving an indication (e.g., from a PHY layer of wireless device 1900) that the one or more candidate reference signals satisfy the event. Each of the one or more counters may be associated with a (respective) candidate reference signal.

The one or more CSI reporting configuration parameters may comprise, or indicate, one or more configuration parameters of a UCI for UE-initiated CSI reporting. The one or more configuration parameters of the UCI for UE-initiated CSI reporting may indicate a PUCCH resource, from among PUCCH resources in an uplink BWP, configured for the UCI for UE-initiated CSI reporting The one or more configuration parameters of the UCI for UE-initiated CSI reporting indicate a periodicity and offset of the UCI for UE-initiated CSI reporting.

Wireless device 1900 may receive a reference signal 1904, of a TCI state, from base station 1910, for example, if (or after) receiving one or more RRC messages 1902. Reference signal 1904 is a current reference signal of a TCI (an indicated TCI state by MAC CE and/or DCI for downlink and/or uplink). Wireless device 1900 may receive a reference signal 1906. Reference signal 1906 may be a candidate reference signal for CSI reporting triggered by wireless device 1900. Reference signal 1906 may be from a list of candidate reference signals in one or more RRC messages 1902. For example, reference signal 1906 may be a reference signal of a TCI state among the (e.g., MAC CE) activated TCI states (other than reference signal 1904). For example, reference signal 1906 may be a reference signal of a TCI state among the (e.g., RRC) configured TCI states.

Reference signal 1904 of the TCI state may be a reference signal (e.g., CSI-RS) indicated by the TCI state. A configuration of the TCI state may comprise a reference signal identifier/index that may indicate/identify the reference signal 1904 of the TCI state.

Reference signal 1904 of the TCI state may be a source reference signal (e.g., SSB) that may be quasi co-located with a reference signal indicated by the TCI state. A configuration of the TCI state may comprise a reference signal identifier/index that may indicate/identify the reference signal. The reference signal may be quasi co-located with the reference signal 1904.

FIG. 19A shows that wireless device 1900 detects an event 1908 for CSI reporting (e.g., that triggers CSI reporting). For example, as an example of event 1908, wireless device 1900 may detect that a radio link quality (e.g., L1-RSRP, L1-SINR) of reference signal 1906 is a threshold value better than (e.g., greater than by at least a threshold value) than a radio link quality of reference signal 1904 of the TCI state.

Wireless device 1900 may send (e.g., transmit) PUCCH transmission 1912, for example, based on detecting event 1908 for CSI reporting. Wireless device 1900 may send (e.g., transmit) PUCCH transmission 1912 via one or more PUCCH resources indicated by one or more RRC messages 1902. For example, PUCCH transmission 1912 may be sent (e.g., transmitted) via the PUCCH resource indicated by one or more RRC messages 1902.

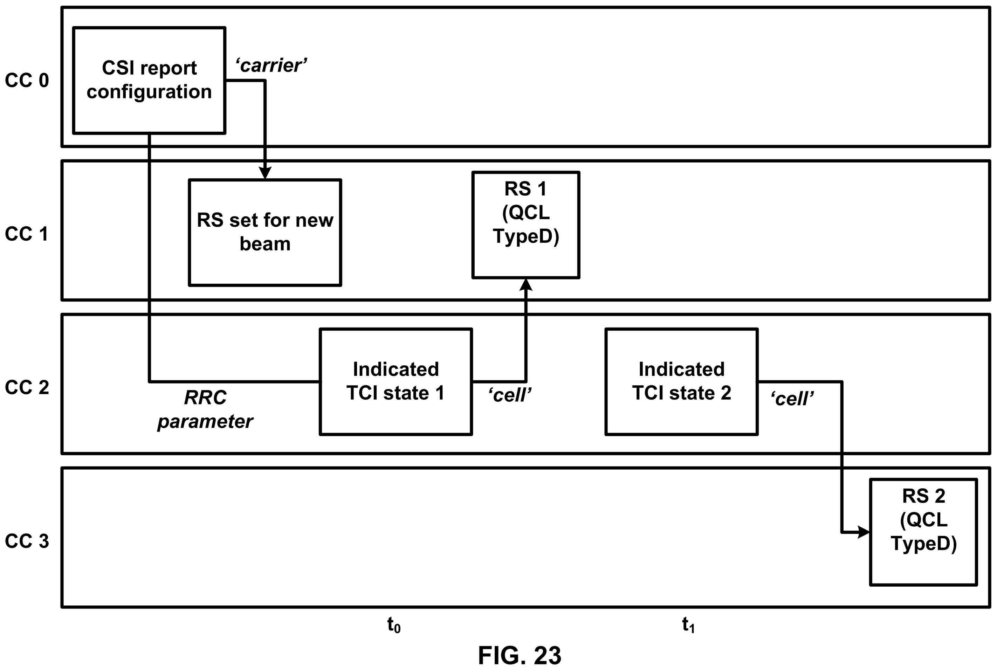

PUCCH transmission 1912 may request uplink resources for sending (e.g., transmitting) a CSI report (e.g., step 2320 in FIG. 23). The uplink resources may be PUSCH resources. A PUCCH format of PUCCH transmission 1912 may be PUCCH format 0 or PUCCH format 1. For example, PUCCH transmission 1912 may be a UCI.

Wireless device 1900 may receive DCI 1914 from base station 1910, for example, if (or after) sending (e.g., transmitting) PUCCH transmission 1912. DCI 1914 may indicate uplink resources 1916 for sending (e.g., transmitting) CSI reporting, for example, based on wireless device 1900 detecting event 1908. For example, DCI 1914 may comprise an uplink grant indicating uplink resources 1916. Uplink resources 1916 may be PUSCH resources.

Wireless device 1900 may send (e.g., transmit) a CSI report 1918 via uplink resources 1916, for example, if (or after) receiving DCI 1914. For example, CSI report 1918 may be a UCI (e.g., CSI report 1918 may be a type of UCI). Wireless device 1900 may send (e.g., transmit) the UCI on uplink resources 1916. The UCI (e.g., CSI report 1918) may be multiplexed on uplink resources 1916 (indicated by DCI 1914).

CSI report 1918 may comprise one or more radio link qualities and/or IDs of reference signals. For example, CSI report 1918 may comprise a radio link quality of (candidate) reference signal 1906. For example, CSI report 1918 may comprise an ID of reference signal 1906. For example, CSI report 1918 may comprise a radio link quality of (current) reference signal 1904 of the (indicated or current) TCI state. For example, CSI report 1918 may comprise a plurality of radio link qualities of a plurality of candidate reference signals.

The quantity/number of radio link qualities and/or reference signals indicated in CSI report 1918 may be one, greater than one, or less than or equal to a maximum quantity/number of radio link qualities for CSI reporting (e.g., one or more RRC messages 1902 may comprise a parameter indicating the maximum quantity/number of radio link qualities for CSI reporting triggered by wireless device 1900).

The one or more radio link qualities indicated by CSI report 1918 may be absolute values, or differential values, of one or more radio link qualities of reference signals. The radio link qualities may be RSRP values, L1-RSRP values, and/or SINR values.

Wireless device 1900 may monitor, detect, and/or report one or more events among a plurality of events for reporting CSI. A first event may be that a radio link quality of a candidate reference signal is a threshold value better than a radio link quality of a current reference signal of a TCI state. A second event may be that a radio link quality of a candidate reference signal is worse than a threshold. A third event may be that a radio link quality of a candidate reference signal is better than a threshold. A fourth event may be that a radio link quality of a reference signal, of a TCI state indicated by a control command, is worse than a first threshold and a radio link quality of at least one candidate reference signal is better than a second threshold. A fifth event may be that a difference between a radio link quality of a reference signal, of a TCI state indicated by a control command (e.g., DCI or MAC CE), and a radio link quality of at least one candidate reference signal is lower than a threshold. A sixth event may be that a radio link quality of the reference signal, of the TCI state indicated by the control command, is not among a quantity/number of candidate reference signals with a highest radio link quality. A seventh event may be that a radio link quality of at least one candidate reference signal is a threshold value better than a reference signal of a TCI state, indicated by a control command, with a worst radio link quality among reference signals of TCI states indicated by the control command. An eighth event may be that a radio link quality of at least one candidate reference signal is a threshold value better than a reference signal of a TCI state, indicated by a control command, with a highest radio link quality among reference signals of TCI states indicated by the control command. A ninth event may be that a radio link quality of a quantity/number of candidate reference signals become a threshold value better than the reference signal of the TCI state indicated by the control command. A tenth event may be that a radio link quality of at least one candidate reference signal becomes a threshold value better than a reference signal configured by one or more RRC messages. The one or more events may comprise any one or any combination of the first, second, third, fourth, fifth, sixth, seventh, eighth, ninth, and tenth events. For example, wireless device 1900 may monitor, detect, and/or report events other than those listed above.

CSI report 1918 may comprise an ID of the event. The ID of the event may be referred to as an event ID. Each of the events among a plurality of events may be associated with an event ID. For example, a first value of the event ID may indicate that the first event is detected (or satisfied). A second value of the event ID may indicate that the second event is detected. A third value of the event ID may indicate that the third event is detected. A fourth value of the event ID may indicate that the fourth event is detected. A fifth value of the event ID may indicate that the fifth event is detected. A sixth value of the event ID may indicate that the sixth event is detected. A seventh value of the event ID may indicate that the seventh event is detected. An eighth value of the event ID may indicate that the eighth event is detected. A ninth value of the event ID may indicate that the ninth event is detected. A tenth value of the event ID may indicate that the tenth event is detected.

Additionally or alternatively, PUCCH transmission 1912 may comprise, or indicate, an event ID. As an example of (implicitly) indicating an event ID, a set of PUCCH resources for PUCCH transmission 1912 may be associated with an event ID among the plurality of event IDs. Base station 1910 may determine (e.g., infer) that the PUCCH transmission 1912 is for the associated event ID, for example, based on receiving PUCCH transmission 1912 via the set of PUCCH resources.

One or more RRC messages 1902 may comprise a list of the plurality of events and/or event IDs of the plurality of events. Each of the event IDs in CSI report 1918 (and/or PUCCH transmission 1912) may be associated with a respective reference signal (e.g., of a candidate reference signal or a reference signal of a TCI state) in CSI report 1918 (and/or PUCCH transmission 1912).

FIG. 19B shows a second mode of CSI reporting in which wireless device 1920 uses preconfigured uplink resources for reporting CSI, to base station 1930, based on wireless device 1920 detecting an event based on a radio link quality of a reference signal. The procedure, messages, and parameters in second mode shown in FIG. 19B may be the same as those discussed above in the first mode shown in FIG. 19A and the specific differences between the procedure, messages, and parameters in the second mode for CSI reporting based on preconfigured uplink resources will be discussed below.

Wireless device 1920 may receive one or more RRC messages 1922. One or more RRC messages 1922 may comprise, or indicate, the one or more CSI reporting configuration parameters (and other parameters) of one or more RRC messages 1902 (from FIG. 19A). The one or more CSI reporting configuration parameters of one or more RRC messages 1922 indicate uplink resources 1924 for (transmitting) CSI reporting triggered by wireless device 1920, for example, in contrast to the one or more CSI reporting configuration parameters of one or more RRC messages 1902. Uplink resources 1924 may be PUSCH resources or PUCCH resources for sending (e.g., transmitting) CSI reporting triggered by the wireless device 1920. Base station 1930 may send (e.g., transmit) the one or more CSI reporting configuration parameters of one or more RRC messages 1922 to wireless device 1920 based on receiving a wireless device-capability message from wireless device 1920 indicating that wireless device 1920 supports the second mode.

The presence of an indication of uplink resources 1924 may indicate to wireless device 1920 that the one or more CSI reporting configuration parameters, of one or more RRC messages 1922, are for the second mode of CSI reporting. For example, the one or more CSI reporting configuration parameters of one or more RRC messages 1922 may comprise a parameter indicating that one or more CSI reporting configuration parameters are for reporting (e.g., wireless device-initiated) CSI on preconfigured uplink resources (e.g., the second mode). The parameter may indicate that the (e.g., wireless device-initiated) CSI reporting on preconfigured uplink resources is enabled or activated. Additionally or alternatively, the parameter (or another parameter) may (explicitly) indicating a mode that is being configured among the first mode and the second mode.

One or more RRC messages 1922 may indicate a periodicity of uplink resources 1924 (e.g., a configured (uplink) grant). The periodicity of uplink resources 1924 is shown in FIG. 19B. Wireless device 1920 may send (e.g., transmit) a notification to base station 1930, for example, before sending (e.g., transmitting) CSI reporting. For example, FIG. 19B shows that wireless device 1920 receives a reference signal 1926. Reference signal 1926 is a (current) reference signal of a TCI state, for example, similar to reference signal 1904 of FIG. 19A. Wireless device 1920 receives a reference signal 1928. Similar to reference signal 1906 of FIG. 19A, reference signal 1928 may be a candidate reference signal.

Wireless device 1920 detects an event 1932 for CSI reporting (e.g., that triggers CSI reporting), for example, if (or after) receiving reference signal 1926 and reference signal 1928. Event 1932 may be the same as event 1908 of FIG. 19A. For example, for event 1932, wireless device 1920 may detect that a radio link quality (e.g., L1-RSRP, L1-SINR) of reference signal 1928 is a threshold value better than (e.g., greater than by at least a threshold value) than a radio link quality (e.g., L1-RSRP) of reference signal 1926 of the TCI state.

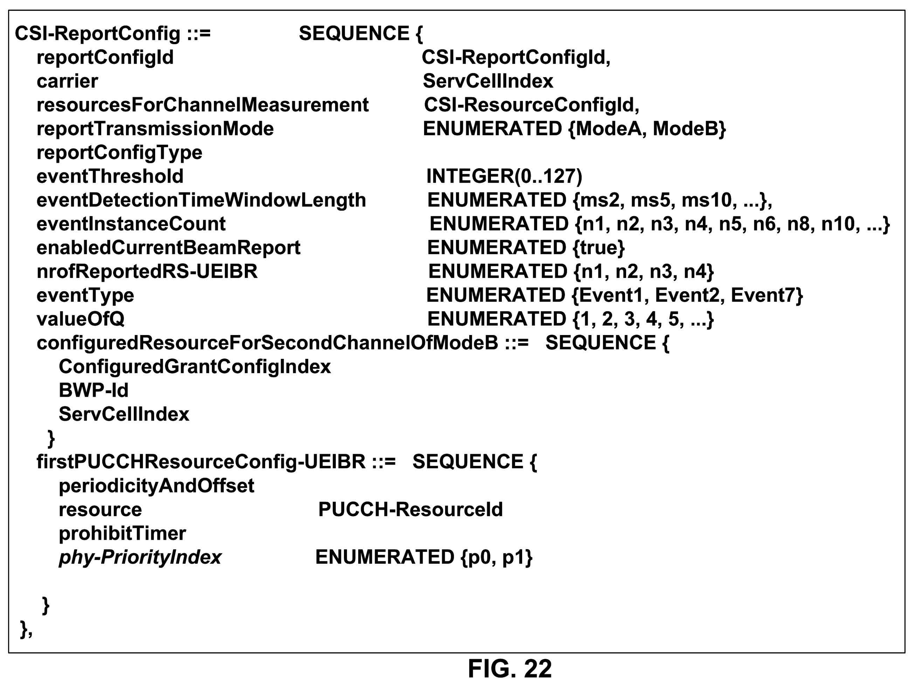

Wireless device 1920 may (e.g., transmit) PUCCH transmission 1934 to base station 1930, for example, based on detecting event 1932 for (wireless device-initiated) CSI reporting. Wireless device 1900 may send (e.g., transmit) PUCCH transmission 1912 via one or more PUCCH resources indicated by one or more RRC messages 1922. As described herein, one or more RRC messages 1922 may indicate uplink resources 1924 for sending (e.g., transmitting) CSI reporting triggered by wireless device 1920. In the second mode, PUCCH transmission 1934 may notify that CSI reporting is to be sent (e.g., transmitted) on uplink resources 1924 (e.g., step 2230 in FIG. 22).

A PUCCH format of PUCCH transmission 1934 may be PUCCH format 0 or PUCCH format 1. For example, PUCCH transmission 1934 may be a UCI.

Wireless device 1920 may send (e.g., transmit) a CSI report 1936 via uplink resources 1924, for example, if (or after) sending (e.g., transmitting) PUCCH transmission 1934. CSI report 1936 may be a UCI. For example, wireless device 1920 may send (e.g., transmit) the UCI on the uplink resources 1924. The UCI (e.g., CSI report 1936) may be multiplexed on uplink resources 1924 (on PUSCH). CSI report 1936 may indicate, or comprise, the same information as CSI report 1918 of FIG. 19A.

The (advance) notification, provided by PUCCH transmission 1934, may enable the network (e.g., base station 1930) to indicate (e.g., allocate) uplink resources 1924 to multiple wireless devices and/or reassign uplink resources 1924, for example, prior to the (notified) CSI reporting is sent (e.g., transmitted). Base station 1930 may send (e.g., transmit) a reconfiguration (e.g., via RRC message with modified values for the parameters of one or more RRC messages 1922), for example, to reassign uplink resources 1924 or otherwise prevent a collision (interference) from occurring on uplink resources 1924 if uplink resources 1924 are configured to multiple wireless devices. For example, the network may use a combination of the first mode and the second mode as described with respect to FIG. 19C.

FIG. 19C shows an example in which wireless device 1940 and base station 1950 use a combination of the first mode of FIG. 19A (using dynamic uplink grants) and the second mode of FIG. 19B (using preconfigured uplink resources) for reporting CSI triggered by wireless device 1940.

Wireless device 1940 may receive one or more RRC messages 1938. One or more RRC messages 1938 indicate uplink resources 1942 for sending (e.g., transmitting) CSI reporting triggered by wireless device 1940 (similar to one or more RRC messages 1922 and uplink resources 1924). Wireless device 1940 may receive a reference signal 1944, which may be a (current) reference signal of an (indicated) TCI state (similar to reference signal 1904 and reference signal 1926), for example, if (or after) receiving one or more RRC messages 1938. Wireless device 1940 may receive a reference signal 1946, which may be a candidate reference signal (e.g., similar to reference signal 1906 and reference signal 1928).

Wireless device 1940 may detect an event 1948 for CSI reporting (e.g., that triggers wireless device-initiated CSI reporting), for example, based on (measurements of radio link qualities of) reference signal 1944 and reference signal 1946. Event 1948 may be the same as event 1908 and/or event 1932 of FIGs. 19A and 19B, respectively. Wireless device 1940 may send (e.g., transmit) a PUCCH transmission 1952 to base station 1950, for example, based on detecting event 1948. PUCCH transmission may notify base station 1950 that CSI reporting is to be sent (e.g., transmitted) on uplink resources 1942, for example, similar to PUCCH transmission 1934.

As shown in FIG. 19C, base station 1950 may determine that another wireless device is to send (e.g., transmit) on uplink resources 1942, for example, if (or after) receiving PUCCH transmission 1952. Additionally or alternatively, base station 1950 may determine that another wireless device is to perform a transmission on other radio resources (uplink or downlink) that may interfere (or collide) with the CSI reporting that wireless device 1940 intends to send (e.g., transmit) using uplink resources 1942.

Base station 1950 may send (e.g., transmit) DCI 1954. DCI 1954 may indicate (alternative) uplink resources to avoid interference, for example, if (or after) receiving PUCCH transmission 1952. For example, as shown, DCI 1954 indicates uplink resources 1956. Uplink resources 1956 may be the same as uplink resources 1916. For example, DCI 1954 may comprise an uplink grant indicating uplink resources 1956. Uplink resources 1956 may be PUSCH resources.

Wireless device 1940 may send (e.g., transmit) a CSI report 1958 via uplink resource 1956, for example, based on receiving DCI 1954. Wireless device 1940 may send (e.g., transmit) CSI report 1958 on uplink resources 1956 instead of sending (e.g., transmitting) CSI report 1958 on the preconfigured uplink resources (i.e., uplink resources 1942). Wireless device 1940 may cancel (or skip) sending (e.g., transmitting) CSI report 1958 on the preconfigured resources, for example, based on receiving DCI 1954.

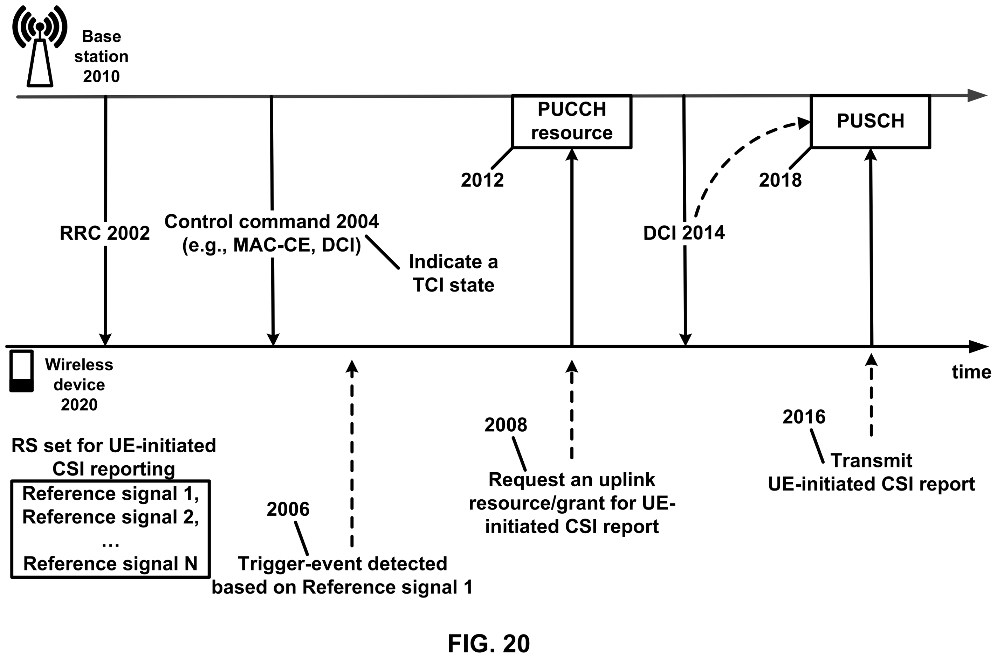

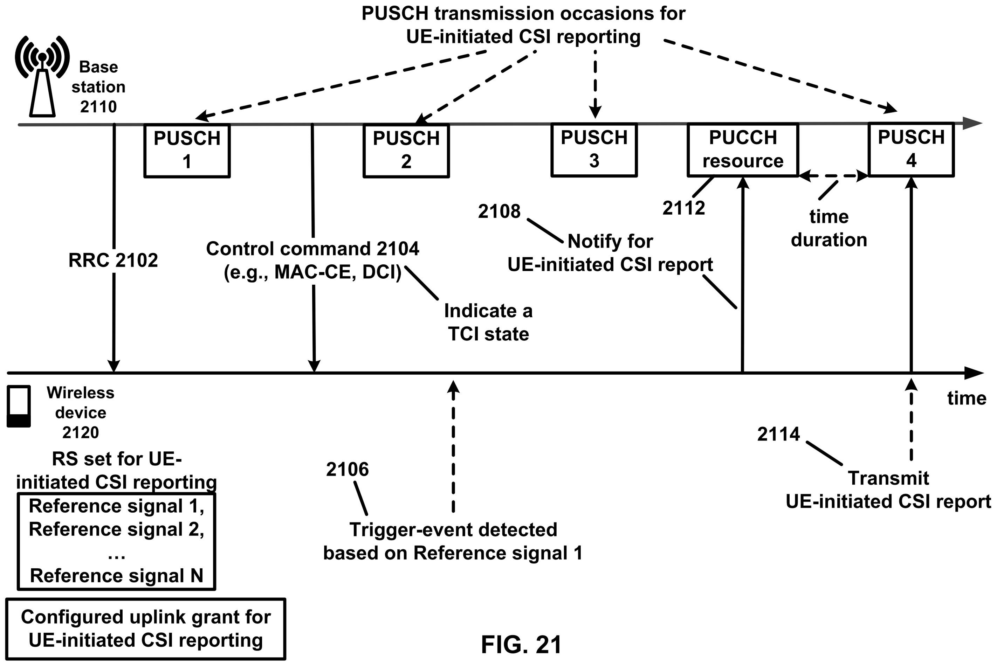

FIG. 20 shows an example of a first mode (e.g., Mode A) for wireless device-initiated (e.g., UE-initiated) CSI reporting. FIG. 21 shows an example of a second mode (e.g., Mode B) for wireless device-initiated (e.g., UE-initiated) CSI reporting. FIG. 22 shows an example of a CSI report configuration. FIG. 23 shows an example of a cross-cell CSI reporting.

A wireless device (e.g., wireless device 2020 or 2120) may receive one or more messages (e.g., RRC 2002 in FIG. 20 and RRC 2102 in FIG. 21). For example, the wireless device may receive the one or more messages from a base station (e.g., base station 2010 or 2110). For example, the wireless device may receive the one or more messages from a relay node. For example, the wireless device may receive the one or more messages from another wireless device (e.g., TRP, vehicle, remote radio head, and the like). The one or more messages may comprise one or more configuration parameters. For example, the one or more configuration parameters may be RRC configuration parameter(s). For example, the one or more configuration parameters may be RRC reconfiguration parameter(s). For example, the one or more configuration parameters may be for one or more cells.

The one or more cells may comprise a first cell. The first cell may be, for example, a serving cell. For example, at least one configuration parameter of the one or more configuration parameters may be for the first cell. For example, the first cell may be a primary cell (PCell). For example, the first cell may be a primary secondary cell (PSCell). For example, the first cell may be a secondary cell (SCell). The cell may be a secondary cell configured with PUCCH (e.g., PUCCH SCell). For example, the first cell may be an unlicensed cell, e.g., operating in an unlicensed band. For example, the first cell may be a licensed cell, e.g., operating in a licensed band. For example, the first cell may operate in a first frequency range (FR1). The FR1 may, for example, comprise frequency bands below 6 GHz or any other value. For example, the first cell may operate in a second frequency range (FR2). The FR2 may, for example, comprise frequency bands from 24 GHz or any other value to 52.6 GHz or any other value. For example, the first cell may operate in a third frequency range (FR3). The FR3 may, for example, comprise frequency bands from 52.6 GHz or any other value to 71 GHz or any other value. The FR3 may, for example, comprise frequency bands starting from (or above) 52.6 GHz or any other value.

The wireless device may perform uplink transmissions (e.g., PUSCH, PUCCH, PUCCH) via/of the first cell in a first time and in a first frequency. The wireless device may perform downlink receptions (e.g., PDCCH, PDSCH) via/of the first cell in a second time and in a second frequency. For example, the first cell may operate in a time-division duplex (TDD) mode. In the TDD mode, the first frequency and the second frequency may be the same. In the TDD mode, the first time and the second time may be different. For example, the first cell may operate in a frequency-division duplex (FDD) mode. In the FDD mode, the first frequency and the second frequency may be different. In the FDD mode, the first time and the second time may be the same.

The wireless device may be in an RRC connected mode. For example, the wireless device may be in an RRC idle mode. For example, the wireless device may be in an RRC inactive mode.

The first cell may comprise a plurality of BWPs. The plurality of BWPs may comprise one or more uplink BWPs comprising an uplink BWP of the first cell. The plurality of BWPs may comprise one or more downlink BWPs comprising a downlink BWP of the first cell.

A BWP of the plurality of BWPs may be in one of an active state and an inactive state. For example, in the active state of a downlink BWP of the one or more downlink BWPs, the wireless device may monitor a downlink channel/signal (e.g., PDCCH, DCI, CSI-RS, PDSCH) on/for/via the downlink BWP. For example, in the active state of a downlink BWP of the one or more downlink BWPs, the wireless device may receive a PDSCH on/via/for the downlink BWP. For example, in the inactive state of a downlink BWP of the one or more downlink BWPs, the wireless device may not monitor a downlink channel/signal (e.g., PDCCH, DCI, CSI-RS, PDSCH) on/via/for the downlink BWP. In the inactive state of a downlink BWP of the one or more downlink BWPs, the wireless device may stop monitoring (or receiving) a downlink channel/signal (e.g., PDCCH, DCI, CSI-RS, PDSCH) on/via/for the downlink BWP. For example, in the inactive state of a downlink BWP of the one or more downlink BWPs, the wireless device may not receive a PDSCH on/via/for the downlink BWP. In the inactive state of a downlink BWP of the one or more downlink BWPs, the wireless device may stop receiving a PDSCH on/via/for the downlink BWP.

The wireless device may send (e.g., transmit) an uplink signal/channel (e.g., PUCCH, preamble, PUSCH, PRACH, PUCCH, etc.) on/via the uplink BWP, for example, in the active state of an uplink BWP of the one or more uplink BWPs. The wireless device may not send (e.g., transmit) an uplink signal/channel (e.g., PUCCH, preamble, PUSCH, PRACH, PUCCH, etc.) on/via the uplink BWP, for example, in the inactive state of an uplink BWP of the one or more uplink BWPs.

The wireless device may activate the downlink BWP of the one or more downlink BWPs of the first cell. For example, the activating the downlink BWP may comprise setting (or switching to) the downlink BWP as an active downlink BWP of the first cell. For example, the activating the downlink BWP may comprise setting the downlink BWP in the active state. For example, the activating the downlink BWP may comprise switching the downlink BWP from the inactive state to the active state.

The wireless device may activate the uplink BWP of the one or more uplink BWPs of the first cell. For example, the activating the uplink BWP may comprise that the wireless device may set (or may switch to) the uplink BWP as an active uplink BWP of the first cell. For example, the activating the uplink BWP may comprise setting the uplink BWP in the active state. For example, the activating the uplink BWP may comprise switching the uplink BWP from the inactive state to the active state.

The one or more configuration parameters may be for the (active) downlink BWP of the first cell. For example, at least one configuration parameter of the one or more configuration parameters may be for the downlink BWP of the first cell. The one or more configuration parameters may be for the (active) uplink BWP of the first cell. For example, at least one configuration parameter of the one or more configuration parameters may be for the uplink BWP of the first cell. The one or more configuration parameters may indicate a subcarrier spacing (or a numerology) for the downlink BWP. The one or more configuration parameters may indicate a subcarrier spacing (or numerology) for the uplink BWP.

A value of the subcarrier spacing (of the downlink BWP and/or the uplink BWP) may be/indicate, for example, 15 kHz (mu = 0) or any other value. A value of the subcarrier spacing may be/indicate, for example, 30 kHz (mu = 1) or any other value. A value of the subcarrier spacing may be/indicate, for example, 60 kHz (mu = 2) or any other value. A value of the subcarrier spacing may be/indicate, for example, 120 kHz (mu = 3) or any other value. A value of the subcarrier spacing may be/indicate, for example, 240 kHz (mu = 4) or any other value. A value of the subcarrier spacing may be/indicate, for example, 480 kHz (mu = 5) or any other value. A value of the subcarrier spacing may be/indicate, for example, 960 kHz (mu = 6) or any other value. For example, 480 kHz or any other value may be valid/applicable in FR3. For example, 960 kHz or any other value may be valid/applicable in FR3. For example, 240 kHz or any other value may be valid/applicable in FR3. For example, 120 kHz or any other value may be valid/applicable in FR3.

The use of the terms "wireless device-initiated CSI report" (or wireless device-initiated CSI reporting)" or "UE-initiated CSI report (or UE-initiated CSI reporting)" are exemplary and are not intended to limit the scope of the invention. Alternative terms that may be substituted include "CSI report triggered by the wireless device", "CSI report initiated by the wireless device", "event-triggered CSI report (event-triggered CSI reporting)", "event-triggered beam report (event-triggered beam reporting)", "UE-initiated event-triggered CSI report", "event-driven CSI report", "event-based CSI report", "wireless device-initiated beam report", and "UE-initiated beam report", among others.

The one or more configuration parameters may comprise one or more CSI reporting configuration parameters (e.g., *CSI-ReportConfig* in FIG. 22) of a CSI report configuration. The one or more CSI reporting configuration parameters may be configured for/on the first cell (e.g., CC 0 in FIG. 23).

The one or more CSI reporting configuration parameters may comprise one or more parameters associated with CSI reporting. For example, the one or more CSI reporting configuration parameters may comprise a report configuration type parameter (e.g., *reportConfigType* in FIG. 22). A value (e.g., *EventTriggered, UE-initiated, UEIBR,* and the like) of the report configuration type parameter may indicate wireless device-initiated CSI reporting. The value of the report configuration type parameter may indicate CSI reporting triggered/initiated by the wireless device. The value may be different from *'periodic', 'semiPersistentOnPUCCH', 'semiPersistentOnPUSCH,* and *'aperiodic'.* The one or more CSI reporting configuration parameters may be, for example, for event-triggered CSI reporting (or UE-initiated CSI reporting or UE-initiated beam reporting).

The one or more CSI reporting configuration parameters may indicate a list/set of reference signals (e.g., CSI-RS, SS/PBCH blocks) for wireless device-initiated CSI reporting (e.g., RS set for UE-initiated CSI reporting in FIG. 20 and FIG. 21, or a candidate RS set or RS set for new beam in FIG. 23). The list/set of reference signals (hereinafter "a list/set of candidate reference signals") may be a list/set of candidate reference signals. The list/set of reference signals may be interchangeably used with the list/set of candidate reference signals.

The one or more CSI reporting configuration parameters may indicate the list/set of candidate reference signals (e.g., CSI-RS, SS/PBCH blocks) for wireless device-initiated CSI reporting (e.g., UE-initiated CSI reporting). The one or more CSI reporting configuration parameters may indicate the list/set of candidate reference signals for use by the wireless device to detect/determine an event (or a trigger-event or for trigger-event detection, e.g., at step 2006 in FIG. 20 and step 2106 in FIG. 21) that triggers wireless device-initiated CSI reporting. The one or more CSI reporting configuration parameters may comprise a resource parameter (e.g., *resourcesForChannelMeasurement* in FIG. 22, *newBeamResourceSet, candidateBeamResourceSet,* a reference signal resource parameter, or a reference signal resource set parameter, and the like) indicating the list/set of candidate reference signals. The list/set of candidate reference signals may comprise/indicate one or more candidate reference signals (e.g., Reference signal 1, 2, ..., N in FIG. 20 and FIG. 21).

The one or more CSI reporting configuration parameters may comprise a carrier parameter (e.g., *carrier, ServCellIndex* in FIG. 22) indicating/identifying a second cell (e.g., CC1 in FIG. 23). The carrier parameter may indicate the second cell that the list/set of candidate reference signals are configured/transmitted/located. The carrier parameter may be set/equal to a serving cell index/identifier (e.g., *ServCellIndex)* indicating/identifying the second cell.

The one or more CSI reporting configuration parameters may not comprise a carrier parameter (e.g., *carrier, ServCellIndex* in FIG. 22). The carrier parameter may be absent (e.g., not configured) in the one or more CSI reporting configuration parameters. The list/set of candidate reference signals may be configured/transmitted on the first cell that the one or more CSI reporting configuration parameters are configured for/on, for example, based on the carrier parameter being absent (e.g., not configured) in the one or more CSI reporting configuration parameters. The one or more cells may comprise the second cell.

The second cell that the list/set of candidate reference signals are configured/transmitted on and the first cell that the one or more CSI reporting configuration parameters are configured for/on may be different. The second cell that the list/set of candidate reference signals are configured/transmitted on and the first cell that the one or more CSI reporting configuration parameters are configured for/on may be the same.

The second cell that the list/set of candidate reference signals may be configured/transmitted on and the first cell that the one or more CSI reporting configuration parameters are configured for/on may be the same, for example, based on the one or more CSI reporting configuration parameters not comprising the carrier parameter. The second cell that the list/set of candidate reference signals may be configured/transmitted on and the first cell that the one or more CSI reporting configuration parameters are configured for/on may be different, for example, based on the one or more CSI reporting configuration parameters comprising the carrier parameter.

A current reference signal of the wireless device may correspond to a current beam used by the wireless device. The current beam may be a beam corresponding to a TCI state indicated to the wireless device (the indicated TCI state). The wireless device may receive a control command (e.g., DCI, MAC-CE, DCI 1718, Control command 2004 in FIG. 20, and Control command 2104 in FIG. 21) indicating the TCI state (e.g., Indicated TCI state 1 at time t0 in FIG. 23) for a third cell (e.g., CC 2 at time t0 in FIG. 23). The wireless device may apply/use the (indicated) TCI state for/on/to the third cell. The TCI state may be a joint TCI state or a downlink TCI state. The joint TCI state may be for use by the wireless device for both downlink receptions (e.g., PDSCH, PDCCH) and uplink transmissions (e.g., PUSCH, PUCCH) via the third cell. The downlink TCI state may be for use by the wireless device for downlink receptions (e.g., PDSCH, PDCCH) via the third cell and not for uplink transmissions (e.g., PUSCH, PUCCH) via the third cell. The one or more cells may comprise the third cell.

The first cell that the one or more CSI reporting configuration parameters may be configured for/on and the third cell that the wireless device applies/uses the (indicated) TCI state to/for may be the same. The first cell that the one or more CSI reporting configuration parameters may be configured for/on and the third cell that the wireless device applies/uses the (indicated) TCI state to/for may be different.

The second cell that the list/set of candidate reference signals may be configured/transmitted on and the third cell that the wireless device applies/uses the (indicated) TCI state to/for may be the same. The second cell that the list/set of candidate reference signals are configured/transmitted on and the third cell that the wireless device applies/uses the (indicated) TCI state to/for may be different.

The current reference signal (e.g., RS 1 in FIG. 23) indicated by (or associated with) the (indicated) TCI state of the third cell may be configured/transmitted/located on the second cell (e.g., CC 1 in FIG. 23). The TCI state may indicate (or be associated) with the current reference signal configured/transmitted/located on the second cell. The list/set of candidate reference signals and the current reference signal may be configured/transmitted on the same cell (e.g., CC 1 in FIG. 23).

The one or more configuration parameters may comprise a TCI state configuration (e.g., *TCI-State*) of the TCI state. The TCI state configuration may comprise a reference signal parameter (e.g., *referenceSignal*) indicating/identifying a reference signal (e.g., CSI-RS, TRS). The reference signal parameter may be, for example, a reference signal index/identifier (e.g., *NZP-CSI-RS-ResourceId, SSB-Index*). The reference signal may provide/indicate quasi-collocation information.

The current reference signal may be the reference signal indicated by (or the reference signal in) the TCI state. The current reference signal may be the reference signal indicated by (or the reference signal in) the TCI state, for example, based on each candidate reference signal of the list/set of candidate reference signals being CSI-RS or TRS. The current reference signal and the list/set of candidate reference signals may have the same RS type (e.g., CSI-RS).

The current reference signal may be determined (e.g., implicitly derived), for example, based on (e.g., from) a quasi-co-location reference signal (e.g., QCL RS) of the indicated TCI state. The reference signal (e.g., CSI-RS, TRS) indicated by the TCI state may be quasi co-located with the current reference signal (e.g., SS/PBCH block or SSB). The current reference signal may be a reference signal (e.g., SS/PBCH block) quasi co-located with the reference signal (e.g., CSI-RS, TRS) indicated by the TCI state. The current reference signal may be a reference signal (e.g., SS/PBCH block) quasi co-located with the reference signal (e.g., CSI-RS, TRS) in the TCI state. The current reference signal may be a reference signal (e.g., SS/PBCH block) quasi co-located with the reference signal indicated by the TCI state, for example, based on each candidate reference signal of the list/set of candidate reference signals being SS/PBCH block. The current reference signal and the list/set of candidate reference signals may have the same RS type (e.g., SS/PBCH block or SSB).

The TCI state configuration may comprise a BWP parameter (e.g., *BWP-Id*) indicating/identifying a downlink BWP that the reference signal is located/transmitted/configured in/on. The reference signal may be located/transmitted/configured in/on a downlink BWP that the wireless device applies/uses the TCI state to/for, for example, when/if the BWP parameter is absent (e.g., not configured) in the TCI state configuration of the TCI state.

The TCI state configuration may comprise a cell parameter (e.g., *cell*) indicating the second cell in which the reference signal is configured/transmitted/located. The reference signal may be configured/transmitted/located on a cell that the wireless device applies/uses the TCI state to/for, for example, when/if the cell parameter is absent (e.g., not configured) in the TCI state configuration of the TCI state.

The second cell and the third cell may be the same, for example, when/if the cell parameter is absent (e.g., not configured) in the TCI state configuration of the TCI state. The control command (e.g., DCI, MAC-CE, DCI 1718, Control command 2004, 2104 in FIG. 20 and FIG. 21) may indicate the TCI state for the second cell. The wireless device may apply/use the (indicated) TCI state for/on/to the second cell.

The TCI state configuration may comprise a QCL-type parameter (e.g., *qcl-Type*) indicating a QCL type. The QCL type for the reference signal may be, for example, QCL-TypeD. The QCL type for/of the reference signal may be, for example, set to 'TypeD' indicating QCL-TypeD.

The TCI state may indicate (or may be associated with) the current reference signal. The wireless device may determine the current beam (or a spatial domain filter), for example, based on the reference signal (e.g., the current reference signal) indicated by the TCI state, for receiving downlink transmissions and/or for sending (e.g., transmitting) uplink transmissions.

The reference signal indicated by (or associated with) the TCI state (hereinafter "the current reference signal") may be the current reference signal. The reference signal indicated by the TCI state may be interchangeably used with the current reference signal.

The indicated TCI state may be one of a list/set of TCI states configured/indicated by the one or more configuration parameters to the wireless device. The one or more configuration parameters may comprise one or more PDSCH configuration parameters, for example, for the third cell. The one or more PDSCH configuration parameters may comprise a TCI state list parameter (e.g., *dl-OrJointTCI-StateList*) indicating the list/set of TCI states. The control command may indicate a TCI state of the list/set of configured TCI states, for example, if the control command is a MAC CE. The MAC-CE may indicate mapping of the TCI state to a single TCI codepoint. The MAC-CE may both activate and indicate the TCI state for the third cell. The control command may indicate an activated TCI state of the list/set of configured TCI states, for example, if the control command is DCI. The activated TCI state may be a TCI state among/of/from a set of activated TCI states, among the list/set of configured TCI states, activated by a MAC CE that follows (or after) the reception of the one or more configuration parameters. The MAC-CE may indicate mapping of the set of activated TCI states to a plurality of TCI codepoints. The MAC-CE may activate (or indicate activation of) the set of activated TCI states for the third cell and the DCI may indicate the TCI state, among the set of activated TCI states, for the third cell.

The wireless device may trigger wireless device-initiated CSI reporting (e.g., UE-initiated CSI reporting), for example, based on a radio link quality of the current reference signal. The wireless device may trigger wireless device-initiated CSI reporting, for example, in a first event (e.g., Event 1). The wireless device may trigger wireless device-initiated CSI reporting in a first event (e.g., Event 1), for example, based on the radio link quality of the current reference signal becoming worse/lower than a threshold (or a threshold value or a value of a threshold).

The wireless device may trigger wireless device-initiated CSI reporting, for example, in a second event (e.g., Event 2). The wireless device may trigger wireless device-initiated CSI reporting in a second event (e.g., Event 2), for example, based on a radio link quality of at least one candidate reference signal in/of the list/set of candidate reference signals becoming better than the radio link quality of the current reference signal by a threshold (or a threshold value or a value of a threshold).

The wireless device may trigger wireless device-initiated CSI reporting, for example, in a third event (e.g., Event 7). The wireless device may trigger wireless device-initiated CSI reporting in a third event (e.g., Event 7), for example, based on a radio link quality of at least one candidate reference signal in/of the list/set of candidate reference signals becoming better than a radio link quality of a reference signal (e.g., CSI-RS, TRS, SS/PBCH block, current reference signal) of an activated (or active) TCI state associated with the Q-th (or n-th, or any other letter or symbol) best quality among activated TCI states by a threshold (or a threshold value or a value of a threshold). The one or more CSI reporting configuration parameters may comprise/indicate a value of the Q (e.g., *valueOfQ* in FIG. 22). Q-th best quality may refer to Q-th highest quality (e.g., Q-th highest RSRP, Q-th highest SINR, Q-th lowest BLER, and the like). The wireless device may trigger wireless device-initiated CSI reporting, for example, when/if the value of the Q is equal to two, when/if a radio link quality of at least one candidate reference signal in/of the list/set of candidate reference signals becomes better than a radio link quality of a reference signal (or a current reference signal) of an activated TCI state, among activated TCI states, associated with the second best quality among the activated TCI states by a threshold (or a threshold value or a value of a threshold). The wireless device may trigger wireless device-initiated CSI reporting, for example, when/if the value of the Q is equal to three, when/if a radio link quality of at least one candidate reference signal in/of the list/set of candidate reference signals becomes better than a radio link quality of a reference signal (or a current reference signal) of an activated TCI state, among activated TCI states, associated with the third best quality among the activated TCI states by a threshold (or a threshold value or a value of a threshold). The wireless device may receive a MAC-CE (e.g., MAC CE 1716) indicating the activated TCI states for the third cell. The MAC-CE may indicate activation of the TCI states among the list/set of TCI states.

The activated TCI state may indicate the reference signal (or the current reference signal). The one or more configuration parameters may indicate, for the activated TCI state (or for configuration of the activated TCI state), a reference signal index/identifier indicating/identifying the reference signal (e.g., CSI-RS, TRS). The reference signal may be determined (e.g., implicitly derived), for example, based on (e.g., from) a quasi-co-location reference signal (QCL RS) of the activated TCI state. The one or more configuration parameters may indicate, for the activated TCI state (or for configuration of the activated TCI state), a reference signal index/identifier indicating/identifying a reference signal (e.g., CSI-RS, TRS) that is quasi co-located with the reference signal (e.g., SS/PBCH block).

The one or more CSI reporting configuration parameters may comprise/indicate a value of the threshold (e.g., *eventThreshold* in FIG. 22, *eventThresholdEvent2orEvent7, eventThresholdEvent1,* and the like). The one or more CSI reporting configuration parameters may comprise/indicate the threshold value (e.g., *eventThreshold* in FIG. 22). The one or more CSI reporting configuration parameters may comprise/indicate the value (or the threshold value) for wireless device-initiated CSI reporting. The one or more CSI reporting configuration parameters may comprise/indicate the threshold (e.g., the threshold value) for use by the wireless device to detect a trigger-event. A trigger-event may be an event that triggers a CSI report according to the wireless device-initiated CSI reporting.

The one or more CSI reporting configuration parameters may comprise an event type parameter (e.g., *eventType* in FIG. 22) indicating an event type. A value of the event type parameter may indicate the event type. For example, a first value of the event type parameter may indicate the first event. A second value of the event type parameter may indicate the second event. A third value of the event type parameter may indicate the third event. The one or more CSI reporting configuration parameters may be, for example, for event-triggered CSI reporting (or wireless device-initiated CSI reporting or wireless device-initiated beam reporting).

The radio link quality of the current reference signal may be, for example, a layer 1 received signal received power (L1-RSRP). The radio link quality of the at least one candidate reference signal may be, for example, a L1-RSRP.

In the first event, the wireless device may trigger the wireless device-initiated CSI reporting, for example, when/if L1-RSRP of the current reference signal is smaller/lower/less than (e.g., <) the threshold. In the first event, the wireless device may trigger the wireless device-initiated CSI reporting, for example, when/if L1-RSRP of the current reference signal is smaller/lower/less than or equals to (e.g., ≤) the threshold.

In the second event, the wireless device may trigger the wireless device-initiated CSI reporting, for example, when/if L1-RSRP of the at least one candidate reference signal is bigger/larger/greater/higher/more than (e.g., >) a sum of the threshold and a L1-RSRP of the current reference signal (e.g., the threshold + L1-RSRP of the current reference signal). The wireless device may trigger the wireless device-initiated CSI reporting, for example, when/if L1-RSRP of the at least one candidate reference signal is bigger/larger/greater/higher/more than or equals to (e.g., ≥) a sum of the threshold and a L1-RSRP of the current reference signal (e.g., the threshold + L1-RSRP of the current reference signal).

In the third event, the wireless device may trigger the wireless device-initiated CSI reporting, for example, when/if L1-RSRP of the at least one candidate reference signal is bigger/larger/greater/higher/more than (e.g., >) a sum of the threshold and a L1-RSRP of the reference signal of the activated TCI state associated with the Q-th best quality (e.g., the threshold + L1-RSRP of the reference signal of the activated TCI state associated with the Q-th best quality). The wireless device may trigger the wireless device-initiated CSI reporting, for example, when/if L1-RSRP of the at least one candidate reference signal is bigger/larger/greater/higher/more than or equals to (e.g., ≥) a sum of the threshold and a L1-RSRP of the reference signal of the activated TCI state associated with the Q-th best quality (e.g., the threshold + L1-RSRP of the reference signal of the activated TCI state associated with the Q-th best quality).

The radio link quality of the current reference signal may be, for example, layer 1 signal-to-interference-plus-noise ratio (L1-SINR). The radio link quality of the at least one candidate reference signal may be, for example, L1-SINR.

In the first event, the wireless device may trigger the wireless device-initiated CSI reporting, for example, when/if L1-SINR of the current reference signal is smaller/lower/less than (e.g., <) the threshold. In the first event, the wireless device may trigger the wireless device-initiated CSI reporting, for example, when/if L1-SINR of the current reference signal is smaller/lower/less than or equals to (e.g., ≤) the threshold.

In the second event, the wireless device may trigger the wireless device-initiated CSI reporting, for example, when/if L1-SINR of the at least one candidate reference signal is bigger/larger/greater/higher/more than (e.g., >) a sum of the threshold and a L1-SINR of the current reference signal (e.g., the threshold + L1-SINR of the current reference signal). The wireless device may trigger the wireless device-initiated CSI reporting, for example, when/if L1-SINR of the at least one candidate reference signal is bigger/larger/greater/higher/more than or equals to (e.g., ≥) a sum of the threshold and a L1-SINR of the current reference signal (e.g., the threshold + L1-SINR of the current reference signal).

In the third event, the wireless device may trigger the wireless device-initiated CSI reporting, for example, when/if L1-SINR of the at least one candidate reference signal is bigger/larger/greater/higher/more than (e.g., >) a sum of the threshold and a L1-SINR of the reference signal of the activated TCI state associated with the Q-th best quality (e.g., the threshold + L1-SINR of the reference signal of the activated TCI state associated with the Q-th best quality). The wireless device may trigger the wireless device-initiated CSI reporting, for example, when/if L1-SINR of the at least one candidate reference signal is bigger/larger/greater/higher/more than or equals to (e.g., ≥) a sum of the threshold and a L1-SINR of the reference signal of the activated TCI state associated with the Q-th best quality (e.g., the threshold + L1-SINR of the reference signal of the activated TCI state associated with the Q-th best quality).

The wireless device may implement a first mode/option/scheme of wireless device-initiated CSI reporting (as shown in FIG. 19A), a second mode/option of wireless device-initiated CSI reporting (as shown in FIG. 19B), or a combination of the first mode/option and the second mode/option for wireless device-initiated CSI reporting (as shown in FIG. 19C). The first mode/option/scheme, which may be referred to as mode A, may include the wireless device requesting an uplink resource to send (e.g., transmit) a wireless device-initiated CSI report and sending (e.g., transmitting) the wireless device-initiated CSI report via a dynamically indicated uplink resource. The second mode/option/scheme, which may be referred to as mode B, may include the wireless device using a pre-configured uplink resource (e.g., configured/indicated by the one or more CSI reporting configuration parameters) to send (e.g., transmit) a wireless device-initiated CSI report. A wireless device-initiated CSI report may be referred, interchangeably, as a wireless device-initiated beam report, an event-driven CSI/beam report, a wireless device-triggered CSI/beam report, event-triggered CSI/beam report, a CSI report triggered by the wireless device, etc.

The one or more CSI reporting configuration parameters may comprise report mode parameter (e.g., *reportTransmissionMode* in FIG. 22). A first value (e.g., Mode A) of the report mode parameter may indicate the first mode/option/scheme of wireless device-initiated CSI reporting. A second value (e.g., Mode B) of the report mode parameter may indicate the second mode/option/scheme of wireless device-initiated CSI reporting.

The one or more CSI reporting configuration parameters may comprise a configured resource configuration (e.g., *ConfiguredGrant, ConfiguredGrant configuredResourceForSecondChannelOfModeB* in FIG. 22, and the like) indicating a configured uplink grant on a second uplink BWP of a second cell. The configured resource configuration may comprise a configured grant configuration index/identifier (e.g., *ConfiguredGrantConfigIndex* in FIG. 22) indicating/identifying the configured uplink grant. The configured resource configuration may comprise a BWP index/identifier (e.g., *BWP-Id* in FIG. 22) indicating/identifying the second uplink BWP. The configured resource configuration may comprise a serving cell index/identifier (e.g., *ServCellIndex* in FIG. 22) indicating/identifying the second cell. The one or more CSI reporting configuration parameters may indicate the configured uplink grant for wireless device-initiated CSI reporting. The one or more CSI reporting configuration parameters may indicate the configured uplink grant for wireless device-initiated CSI reporting, for example, for a PUSCH transmission in/for a second step in/of the wireless device-initiated CSI reporting.

The first cell that the one or more CSI reporting configuration parameters are configured for/on and the second cell that the configured resource configuration is configured for/on may be the same. The first cell and the second cell may be different.

The second mode/option/scheme of wireless device-initiated CSI reporting may be indicated, for example, based on the one or more CSI reporting configuration parameters comprising the configured resource configuration. The second mode/option/scheme of wireless device-initiated CSI reporting may be indicated, for example, based on the configured resource configuration being present/provided in the one or more CSI reporting configuration parameters. The one or more CSI reporting configuration parameters comprising the configured resource configuration may indicate the second mode/option/scheme of wireless device-initiated CSI reporting.

The one or more CSI reporting configuration parameters may not comprise the configured resource configuration (e.g., *ConfiguredGrant, ConfiguredGrant configuredResourceForSecondChannelOfModeB* in FIG. 22, and the like). The first mode/option/scheme of wireless device-initiated CSI reporting may be indicated, for example, based on the one or more CSI reporting configuration parameters not comprising the configured resource configuration. The first mode/option/scheme of wireless device-initiated CSI reporting may be indicated, for example, based on the configured resource configuration being absent (or not being provided, e.g., not configured) in the one or more CSI reporting configuration parameters. The one or more CSI reporting configuration parameters not comprising the configured resource configuration may indicate the first mode/option/scheme of wireless device-initiated CSI reporting.

The wireless device may monitor/determine/assess/measure a radio link quality (e.g., L1-RSRP) of the current reference signal. The wireless device may monitor/determine/assess/measure a radio link quality (e.g., L1-RSRP) of each candidate reference signal in/of the list/set of candidate reference signals. The wireless device may monitor a respective radio link quality (e.g., L1-RSRP) of each candidate reference signal in/of the list/set of candidate reference signals.

In the first event, the wireless device may monitor/determine/assess/measure the radio link quality (e.g., L1-RSRP) of the current reference signal, for example, after receiving the control command indicating the TCI state. In the second event, the wireless device may monitor/determine/assess/measure the radio link quality (e.g., L1-RSRP) of each candidate reference signal in/of the list/set of candidate reference signals, for example, after receiving the control command indicating the TCI state. In the third event, the wireless device may monitor/determine/assess/measure the radio link quality (e.g., L1-RSRP) of each candidate reference signal in/of the list/set of candidate reference signals, for example, after receiving the MAC CE indicating activation of the activated TCI states.

The one or more CSI reporting configuration parameters may comprise a time window parameter (e.g., *eventDetectionTimeWindowLength* in FIG. 22) indicating (or set to) a time window (or a value of the time window). The one or more CSI reporting configuration parameters may comprise a count parameter (e.g., *eventInstanceCount, eventInstanceMaxCount*) indicating an event instance count.

In/for the first event, the wireless device may compare the radio link quality of the current reference signal and/against the threshold. The current reference signal may correspond to the current beam used by the wireless device. The current reference signal may correspond to the indicated TCI state by the control command.

In/for the first event, the wireless device may be configured to detect/determine a trigger-event (an event that triggers a CSI report according to the wireless device-initiated CSI reporting), for example, when/if the radio link quality of the current reference signal becomes worse/lower than the threshold value (e.g., L1-RSRP of the current reference signal < threshold). The wireless device may detect a trigger-event, for example, based on the radio link quality of the current reference signal being worse/lower than the threshold value. The wireless device may trigger wireless device-initiated CSI reporting, for example, based on detecting the trigger-event. The wireless device may trigger wireless device-initiated CSI reporting, for example, to indicate (or trigger a wireless device-initiated CSI report that indicates) the first event.

The wireless device may trigger the wireless device-initiated CSI reporting, for example, for the first cell (e.g., CC 0 in FIG. 23). The wireless device may trigger the wireless device-initiated CSI reporting, for example, for the second cell (e.g., CC 1 in FIG. 23).

The wireless device may detect/determine a trigger-event instance, for example, based on the radio link quality of the current reference signal becoming worse/lower than the threshold value. The wireless device may detect/determine the trigger-event, for example, based on the radio link quality of the current reference signal becoming worse/lower than the threshold value. The wireless device may detect/determine the trigger-event, for example, based on detecting/determining the trigger-event instance. The wireless device may detect/determine the trigger-event, for example, based on detecting/determining one trigger-event instance. The wireless device may send (e.g., transmit) a UE (or wireless device) capability information message. The UE capability information message may not comprise a parameter indicating capability/support of detecting the trigger-event based on a total number/quantity of trigger-event instances determined/generated with the time window being equal to or greater than the event instance count.

The wireless device may detect/determine the trigger-event, for example, based on a total number/quantity of trigger-event instances determined/generated with the time window being equal to or greater than the event instance count. The wireless device may send (e.g., transmit) a UE capability information message. The UE capability information message may comprise a parameter indicating capability/support of detecting the trigger-event based on a total number/quantity of trigger-event instances determined/generated with the time window being equal to or greater than the event instance count.

In/for the second event, the wireless device may compare the monitored radio link quality of each candidate reference signal to a radio link quality of the current reference signal. The current reference signal may correspond to the current beam used by the wireless device. The current reference signal may correspond to the indicated TCI state by the control command.

In/for the second event, the wireless device may be configured to detect/determine a trigger-event (e.g., an event that triggers a CSI report according to the wireless device-initiated CSI reporting), for example, when/if the radio link quality of at least one candidate reference signal in/of the list/set of candidate reference signals becomes/is better than the radio link quality of the current reference signal by the threshold value (e.g., L1-RSRP of at least one candidate reference signal > threshold + L1-RSRP of the current reference signal). The wireless device may detect/determine a trigger-event, for example, based on the radio link quality of a first candidate reference signal (e.g., Reference signal 1 in FIG. 20 and FIG. 21) in/of the list/set of candidate reference signals becoming better than the radio link quality of the current reference signal by the threshold value. The wireless device may trigger wireless device-initiated CSI reporting to indicate (or a wireless device-initiated CSI report that indicates) the first candidate reference signal, for example, based on detecting the trigger-event. The first candidate reference signal may satisfy the second event (or condition(s) to trigger the second event).

The wireless device may detect/determine a trigger-event instance, for example, based on the radio link quality of at least one candidate reference signal in/of the list/set of candidate reference signals becoming/being better than the radio link quality of the current reference signal by the threshold value. The wireless device may detect/determine the trigger-event, for example, based on the radio link quality of at least one candidate reference signal in/of the list/set of candidate reference signals becoming/being better than the radio link quality of the current reference signal by the threshold value. The wireless device may detect/determine the trigger-event, for example, based on detecting/determining the trigger-event instance. The wireless device may detect/determine the trigger-event, for example, based on detecting/determining one trigger-event instance. The wireless device may send (e.g., transmit) a UE capability information message. The UE capability information message may not comprise a parameter indicating capability/support of detecting the trigger-event based on a total number/quantity of trigger-event instances determined/generated with the time window being equal to or greater than the event instance count.

The wireless device may detect/determine the trigger-event, for example, based on a total number/quantity of trigger-event instances determined/generated with the time window being equal to or greater than the event instance count. The wireless device may send (e.g., transmit) a UE capability information message. The UE capability information message may comprise a parameter indicating capability/support of detecting the trigger-event based on a total number/quantity of trigger-event instances determined/generated with the time window being equal to or greater than the event instance count.

The wireless device may trigger the wireless device-initiated CSI reporting, for example, for the first cell (e.g., CC 0 in FIG. 23). The wireless device may trigger the wireless device-initiated CSI reporting, for example, for the first candidate reference signal of the first cell.

The wireless device may trigger the wireless device-initiated CSI reporting, for example, for the second cell (e.g., CC 1 in FIG. 23). The wireless device may trigger the wireless device-initiated CSI reporting, for example, for the first candidate reference signal of the second cell (e.g., CC 1 in FIG. 23).

In/for the third event, the wireless device may compare the monitored radio link quality of each candidate reference signal to a radio link quality of the reference signal of the activated TCI state associated with the Q-th best quality. In/for the third event, the wireless device may be configured to detect/determine a trigger-event (e.g., an event that triggers a CSI report according to the wireless device-initiated CSI reporting), for example, when/if the radio link quality of at least one candidate reference signal in/of the list/set of candidate reference signals becomes/is better than the radio link quality of the reference signal of the activated TCI state associated with the Q-th best quality by the threshold value (e.g., L1-RSRP of at least one candidate reference signal > threshold + L1-RSRP of the reference signal of the activated TCI state associated with the Q-th best quality). The wireless device may detect/determine a trigger-event, for example, based on the radio link quality of a first candidate reference signal (e.g., Reference signal 1 in FIG. 20 and FIG. 21) in/of the list/set of candidate reference signals becoming better than the radio link quality of the reference signal of the activated TCI state associated with the Q-th best quality by the threshold value. The wireless device may trigger wireless device-initiated CSI reporting to indicate (or a wireless device-initiated CSI report that indicates) the first candidate reference signal, for example, based on detecting the trigger-event.

The wireless device may trigger the wireless device-initiated CSI reporting, for example, for the first cell. The wireless device may trigger the wireless device-initiated CSI reporting, for example, for the first candidate reference signal of the first cell.

The wireless device may trigger the wireless device-initiated CSI reporting, for example, for the second cell (e.g., CC 1 in FIG. 23). The wireless device may trigger the wireless device-initiated CSI reporting, for example, for the first candidate reference signal of the second cell (e.g., CC 1 in FIG. 23).

The wireless device may detect/determine a trigger-event instance, for example, based on the radio link quality of at least one candidate reference signal in/of the list/set of candidate reference signals becoming/being better than the radio link quality of the reference signal of the activated TCI state associated with the Q-th best quality by the threshold value. The wireless device may detect/determine the trigger-event, for example, based on the radio link quality of at least one candidate reference signal in/of the list/set of candidate reference signals becoming/being better than the radio link quality of the reference signal of the activated TCI state associated with the Q-th best quality by the threshold value. The wireless device may detect/determine the trigger-event, for example, based on detecting/determining the trigger-event instance. The wireless device may detect/determine the trigger-event, for example, based on detecting/determining one trigger-event instance. The wireless device may send (e.g., transmit) a UE capability information message. The UE capability information message may not comprise a parameter indicating capability/support of detecting the trigger-event based on a total number/quantity of trigger-event instances determined/generated with the time window being equal to or greater than the event instance count.

The wireless device may detect/determine the trigger-event, for example, based on a total number/quantity of trigger-event instances determined/generated with the time window being equal to or greater than the event instance count. The wireless device may send (e.g., transmit) a UE capability information message. The UE capability information message may comprise a parameter indicating capability/support of detecting the trigger-event based on a total number/quantity of trigger-event instances determined/generated with the time window being equal to or greater than the event instance count.

The wireless device may detect/determine the trigger-event, for example, for the first event and/or the second event and/or the third event. The wireless device may detect/determine the trigger-event, for example, based on detecting/determining the trigger-event instance, based on (e.g., in response to) the one or more CSI reporting configuration parameters not indicating the time window. The wireless device may detect/determine the trigger-event, for example, based on detecting/determining the trigger-event instance, based on (e.g., in response to) the one or more CSI reporting configuration parameters not comprising the time window parameter (e.g., *eventDetectionTimeWindowLength* in FIG. 22). The wireless device may detect/determine the trigger-event, for example, based on detecting/determining the trigger-event instance, based on (e.g., in response to) the time window parameter being absent (e.g., not configured) in the one or more CSI reporting configuration parameters.

The wireless device may detect/determine the trigger-event, for example, for the first event and/or the second event and/or the third event. The wireless device may detect/determine the trigger-event, for example, based on detecting/determining the trigger-event instance, based on (e.g., in response to) the one or more CSI reporting configuration parameters not indicating the event instance count. The wireless device may detect/determine the trigger-event, for example, based on detecting/determining the trigger-event instance, based on (e.g., in response to) the one or more CSI reporting configuration parameters not comprising the count parameter (e.g., *eventInstanceCount, eventInstanceMaxCount*)*.* The wireless device may detect/determine the trigger-event, for example, based on detecting/determining the trigger-event instance, based on (e.g., in response to) the count parameter being absent (e.g., not configured) in the one or more CSI reporting configuration parameters.

A value of the count parameter (e.g., *eventInstanceCount*) may be equal to one (or any other value). The event instance count may be equal to one. The event instance count may be equal to the value of the count parameter. The value of the count parameter may be equal to one, for example, based on the wireless device not being capable of (or not supporting) detecting the trigger-event based on a total number/quantity of trigger-event instances determined/generated with the time window being equal to or greater than the event instance count. The base station may set the value of the count parameter to one, for example, based on the wireless device not being capable of (or not supporting) detecting the trigger-event based on a total number/quantity of trigger-event instances determined/generated with the time window being equal to or greater than the event instance count.

The value of the count parameter may not be different from one, for example, based on the wireless device not being capable of (or not supporting) detecting the trigger-event based on a total number/quantity of trigger-event instances determined/generated with the time window being equal to or greater than the event instance count. The base station may not set the value of the count parameter different from one, for example, based on the wireless device not being capable of (or not supporting) detecting the trigger-event based on a total number/quantity of trigger-event instances determined/generated with the time window being equal to or greater than the event instance count.

A value of the time window parameter (e.g., *eventDetectionTimeWindowLength* in FIG. 22) may be equal to zero (or any other value). The time window may be equal to zero. The time window may be equal to the value of the time window parameter. The value of the time window parameter may be equal to zero, for example, based on the wireless device not being capable of (or not supporting) detecting the trigger-event based on a total number/quantity of trigger-event instances determined/generated with the time window being equal to or greater than the event instance count. The base station may set the value of the time window parameter to zero, for example, based on the wireless device not being capable of (or not supporting) detecting the trigger-event based on a total number/quantity of trigger-event instances determined/generated with the time window being equal to or greater than the event instance count.

The value of the time window parameter may not be different from zero, for example, based on the wireless device not being capable of (or not supporting) detecting the trigger-event based on a total number/quantity of trigger-event instances determined/generated with the time window being equal to or greater than the event instance count. The base station may not set the value of the time window parameter different from zero, for example, based on the wireless device not being capable of (or not supporting) detecting the trigger-event based on a total number/quantity of trigger-event instances determined/generated with the time window being equal to or greater than the event instance count.

The wireless device may trigger the wireless device-initiated CSI reporting, for example, in the first event. The wireless device may trigger the wireless device-initiated CSI reporting, for example, based on, during the time window (e.g., *eventDetectionTimeWindowLength*)*,* a respective radio link quality (e.g., L1-RSRP value) determined for each transmission occasion (or occurence) of the current reference signal being at least a value of a count parameter (e.g., *eventInstanceCount*) of times lower/less than the threshold value. In the first event, the wireless device may trigger the wireless device-initiated CSI reporting, for example, based on, during the time window (e.g., *eventDetectionTimeWindowLength*)*,* radio link qualities (e.g., L1-RSRP value) determined for transmission occasions (or occurences) of the current reference signal being at least a value of a count parameter (e.g., *eventInstanceCount*) of times lower/less than the threshold value.

The wireless device may trigger the wireless device-initiated CSI reporting, for example, in the first event, based on a radio link quality (e.g., L1-RSRP value) determined for a transmission occasion (or occurrence) of the current reference signal being at least once lower/less than the threshold value (or being lower/less than the threshold value at least one time). There may be no event instance counting. The wireless device may determine/detect the first event, for example, the first time the radio link quality is satisfied. The one or more CSI reporting configuration parameters may not comprise the time window parameter (e.g., *eventDetectionTimeWindowLength* in FIG. 22). The one or more CSI reporting configuration parameters may not comprise the count parameter (e.g., *eventInstanceCount, eventInstanceMaxCount*)*.*

The wireless device may trigger the wireless device-initiated CSI reporting, for example, in the second event. The wireless device may trigger the wireless device-initiated CSI reporting, for example, based on, during the time window (e.g., *eventDetectionTimeWindowLength*)*,* a respective radio link quality (e.g., L1-RSRP value) determined for each transmission occasion of at least one same reference signal of/from/among the list/set of candidate reference signals being at least a value of a count parameter (e.g., *eventInstanceCount*) of times the threshold value greater than a radio link quality (e.g., L1-RSRP value) of the current reference signal. The wireless device may trigger the wireless device-initiated CSI reporting, for example, in the second event, based on, during the time window (e.g., *eventDetectionTimeWindowLength*), radio link qualities (e.g., L1-RSRP value) determined for transmission occasions of at least one same reference signal of/from/among the list/set of candidate reference signals being at least a value of a count parameter (e.g., *eventInstanceCount*) of times the threshold value greater than the radio link quality (e.g., L1-RSRP value) of the current reference signal.

The wireless device may trigger the wireless device-initiated CSI reporting, for example, in the second event, based on a radio link quality (e.g., L1-RSRP value) determined for a transmission occasion of at least one same reference signal of/from/among the list/set of candidate reference signals being at least once the threshold value greater than a radio link quality (e.g., L1-RSRP value) of the current reference signal (or being the threshold value greater than a radio link quality (e.g., L1-RSRP value) of the current reference signal at least one time). The one or more CSI reporting configuration parameters may not comprise the time window parameter (e.g., *eventDetectionTimeWindowLength* in FIG. 22). The one or more CSI reporting configuration parameters may not comprise the count parameter (e.g., *eventInstanceCount, eventInstanceMaxCount*)*.*

The wireless device may trigger the wireless device-initiated CSI reporting, for example, in the third event. The wireless device may trigger the wireless device-initiated CSI reporting, for example, based on, during the time window (e.g., *eventDetectionTimeWindowLength*)*,* a respective radio link quality (e.g., L1-RSRP value) determined for each transmission occasion of at least one same reference signal of/from/among the list/set of candidate reference signals being at least a value of a count parameter (e.g., *eventInstanceCount*) of times the threshold value greater than a radio link quality (e.g., L1-RSRP value) of the current reference signal (e.g., reference signal with the *valueOfQ* highest L1-RSRP out of reference signals of the activated TCI states). The wireless device may trigger the wireless device-initiated CSI reporting, for example, in the second event, based on, during the time window (e.g., *eventDetectionTimeWindowLength*), radio link qualities (e.g., L1-RSRP value) determined for transmission occasions of at least one same reference signal of/from/among the list/set of candidate reference signals being at least a value of a count parameter (e.g., *eventInstanceCount*) of times the threshold value greater than the radio link quality (e.g., L1-RSRP value) of the current reference signal.

The wireless device may trigger the wireless device-initiated CSI reporting, for example, in the third event, based on a radio link quality (e.g., L1-RSRP value) determined for a transmission occasion of at least one same reference signal of/from/among the list/set of candidate reference signals being at least once (or at least one time) the threshold value greater than a radio link quality (e.g., L1-RSRP value) of the current reference signal (e.g., reference signal with the *valueOfQ* highest L1-RSRP out of reference signals of the activated TCI states). The one or more CSI reporting configuration parameters may not comprise the time window parameter (e.g., *eventDetectionTimeWindowLength* in FIG. 22). The one or more CSI reporting configuration parameters may not comprise the count parameter (e.g., *eventInstanceCount, eventInstanceMaxCount*).

A respective periodicity of each candidate reference signal in/of the list/set of candidate reference signals may be the same. The one or more configuration parameters may indicate, for each candidate reference signal in/of the list/set of candidate reference signals, a respective periodicity. Each candidate reference signal in/of the list/set of candidate reference signals may have a first periodicity.

The one or more configuration parameters may indicate, for the current reference signal, a second periodicity. The current reference signal may have a second periodicity.

The first periodicity and the second periodicity may be the same (or equal). The first periodicity and the second periodicity may be different.

An evaluation periodicity for the trigger-event instance may be, for example, based on the second periodicity of the current reference signal. The evaluation periodicity for the trigger-event instance may be, for example, same as (or equal to) the second periodicity of the current reference signal.

An evaluation periodicity for the trigger-event instance may be, for example, based on the first periodicity of a candidate reference signal in/of the list/set of candidate reference signals. An evaluation periodicity for the trigger-event instance may be, for example, based on the first periodicity of any candidate reference signal in/of the list/set of candidate reference signals. The evaluation periodicity for the trigger-event instance may be, for example, same as (or equal to) the first periodicity.

An evaluation periodicity for the trigger-event instance may be, for example, based on both the first periodicity of a candidate reference signal in/of the list/set of candidate reference signals and the second periodicity of the current reference signal. The evaluation periodicity for the trigger-event instance may be, for example, same as (or equal to) a shortest/minimum periodicity among the first periodicity and the second periodicity (e.g., minimum{the first periodicity, the second periodicity}). The evaluation periodicity for the trigger-event instance may be, for example, same as (or equal to) a largest/maximum periodicity among the first periodicity and the second periodicity (e.g., maximum{the first periodicity, the second periodicity}). The evaluation periodicity for the trigger-event instance may be, for example, same as (or equal to) a maximum of a time duration and a shortest/minimum periodicity among the first periodicity and the second periodicity (e.g., maximum{the time duration}, minimum{the first periodicity, the second periodicity}). The time duration may be, for example, fixed/predefined/preset/preconfigured (e.g., 2 ms, 4 ms, 6 ms, and the like). The time duration may be, for example, in milliseconds. The one or more configuration parameters may indicate the time duration. The evaluation periodicity may be interchangeably used with an evaluation period. The wireless device may be configured to trigger wireless device-initiated CSI reporting, for example, after detecting the trigger-event.

The one or more CSI reporting configuration parameters may comprise a PUCCH resource configuration parameter (e.g., *firstPUCCH-ResourceConfig-UEIBR* in FIG. 22, *PUCCHResourceConfig-UEIBR, PUCCHResourceConfig, PUCCHResource, FirstPUCCH-ID-UEIBR, FirstPUCCH-UEIBR, PUCCHResourceConfig-UEIBR-RequestNotification, eventIndicatorChannel, eventIndicatorPUCCH, eventIndicatorUEIBR*) for UE-initiated CSI reporting. The PUCCH resource configuration parameter may indicate a PUCCH resource configuration.

The PUCCH resource configuration may comprise/indicate a PUCCH resource identifier (e.g., *resource PUCCH-ResourceId* in FIG. 22) indicating/identifying a PUCCH resource (e.g., PUCCH resource 2012 in FIG. 20 and PUCCH resource 2112 in FIG. 21). The PUCCH resource may be, for example, for a PUCCH transmission for the wireless device-initiated CSI reporting. The PUCCH resource may be, for example, for a PUCCH transmission for/in a first/initial step of the wireless device-initiated CSI reporting.

The PUCCH resource may be, for example, a periodic PUCCH resource. The PUCCH resource configuration may comprise a periodicity-and-offset parameter (e.g., *periodicityAndOffset* in FIG. 22). The periodicity-and-offset parameter may indicate, for PUCCH transmissions via the PUCCH resource, a periodicity in number/quantity of symbols or slots and an offset in slots. The PUCCH transmissions via the PUCCH resource may use, for example, PUCCH format 0. The PUCCH transmissions via the PUCCH resource may use, for example, PUCCH format 1. The PUCCH transmissions via the PUCCH resource may not use, for example, a PUCCH format different from PUCCH format 0 and PUCCH format 1.

The one or more configuration parameters may comprise one or more PUCCH configuration parameters (e.g., *PUCCH-Config*)*.* The one or more PUCCH configuration parameters may comprise one or more PUCCH format configuration parameters (e.g., *PUCCH-format0* or *in PUCCH-format1*)*.*

The one or more PUCCH format configuration parameters may comprise a starting symbol index parameter (e.g., *startingSymbolIndex*) indicating a starting symbol index (e.g., *l*₀). The one or more PUCCH format configuration parameters may comprise a symbol number parameter (e.g., *nrofSymbols*) indicating a number/quantity of symbols.

The PUCCH resource configuration parameter in the one or more CSI reporting configuration parameters may comprise a priority index parameter (e.g., *phy-PriorityIndex* in FIG. 22) indicating a priority index. The priority index parameter may indicate whether the PUCCH resource used for PUCCH transmissions with UCI for/of wireless device-initiated CSI reporting has a high priority or a low priority in physical layer prioritization and/or multiplexing handling. A first value (e.g., *p0*) of the priority index parameter may indicate a low priority. The first value (e.g., *p0*) of the priority index parameter may indicate priority index zero. A second value (e.g., *p1*) of the priority index parameter may indicate a high priority. The second value (e.g., *p1*) of the priority index parameter may indicate priority index one. The priority index parameter may be (or may be interchangeably used with) a physical priority index parameter.

The PUCCH resource may be, for example, on a second cell (or on a second uplink BWP of a second cell). The first cell may be different from the second cell. The first cell may be the same as the second cell.

The wireless deivce may trigger the wireless device-initiated CSI reporting, for example, based on, during the time window (e.g., *eventDetectionTimeWindowLength*)*,* a respective radio link quality (e.g., L1-RSRP value) determined for each transmission occasion of at least one same reference signal of/from/among the list/set of candidate reference signals being a value of a count parameter (e.g., *eventInstanceCount*) of times the threshold value greater than a radio link quality (e.g., L1-RSRP value) of the current reference signal.

The wireless deivce may trigger the wireless device-initiated CSI reporting, for example, based on a radio link quality (e.g., L1-RSRP value) determined for a transmission occasion of at least one same reference signal of/from/among the list/set of candidate reference signals being at least once the threshold value greater than a radio link quality (e.g., L1-RSRP value) of the current reference signal (or being the threshold value greater than a radio link quality (e.g., L1-RSRP value) of the current reference signal at least one time). The one or more CSI reporting configuration parameters may not comprise the time window parameter (e.g., *eventDetectionTimeWindowLength* in FIG. 22). The one or more CSI reporting configuration parameters may not comprise the count parameter (e.g., *eventInstanceCount, eventInstanceMaxCount*)*.*

The wireless device may send (e.g., transmit) a PUCCH transmission (e.g., PUCCH resource 2012, 2112 in FIG. 20 and FIG. 21), for example, via the PUCCH resource. The wireless device may send (e.g., transmit) a PUCCH transmission (e.g., PUCCH resource 2012, 2112 in FIG. 20 and FIG. 21), for example, based on (or after) triggering the wireless device-initiated CSI reporting. The wireless device may send (e.g., transmit) the PUCCH transmission, for example, via the PUCCH resource of the second cell. The wireless device may send (e.g., transmit) the PUCCH transmission for the wireless device-initiated CSI reporting, for example, via the PUCCH resource. The PUCCH transmission via the PUCCH resource may carry (or may be with or may be multiplexed with) an uplink control information (UCI) for/of wireless device-initiated CSI reporting.

The PUCCH resource configuration parameter in the one or more CSI reporting configuration parameters may comprise a timer parameter (e.g., *prohibitTimer* in FIG. 22, *UEIBR-prohibitTimer, UEIBR-RequestNotification-prohibitTimer EventIndicatorProhibitTimer,* and the like) indicating a timer for PUCCH transmissions with UCI for/of wireless device-initiated CSI reporting. A value of the timer may be, for example, in milliseconds. The wireless device may not send (e.g., transmit) PUCCH transmissions with UCI for/of wireless device-initiated CSI reporting, for example, while/if the timer is running. The wireless device may be prohibited to send (e.g., transmit) PUCCH transmissions with UCI for/of wireless device-initiated CSI reporting, for example, while/if the timer is running. The wireless device may not be allowed to send (e.g., transmit) PUCCH transmissions with UCI for/of wireless device-initiated CSI reporting, for example, while/if the timer is running.

The PUCCH resource configuration parameter in the one or more CSI reporting configuration parameters may not comprise the timer parameter (e.g., *prohibitTimer* in FIG. 22). The timer parameter may be absent (e.g., not configured) in the PUCCH resource configuration parameter. The wireless device may apply/determine/assume zero for the value of the timer. The wireless device may apply/determine/assume zero for the value of the timer, for example, based on the timer parameter being absent (e.g., not configured) in the PUCCH resource configuration parameter.

The wireless device may send (e.g., transmit) the PUCCH transmission with the UCI for wireless device-initiated CSI reporting, for example, via the PUCCH resource. The wireless device may send (e.g., transmit) the PUCCH transmission with the UCI for wireless device-initiated CSI reporting, for example, based on the timer is not running. The wireless device may start (or restart) the timer from/at a first/starting/initial/earliest symbol, for example, after the end of the PUCCH transmission with the UCI for wireless device-initiated CSI reporting.

The use of the term "UCI for/of wireless device-initiated CSI reporting" is exemplary and is not intended to limit the scope of the invention. Alternative terms that may be substituted include "UE-initiated beam report (UEIBR)", "Event indicator", "Event Indicator for UEIBR", "Event indicator channel", "UE-initiated-Request-Notification", "UEIBR-Request-Notification", and "UEIBR indicator", "UEIBR indication", "UE-initiated CSI report indication", "UE-initiated beam report indication", "Beam report indication", among others.

The use of the term "transmission occasion" is exemplary and is not intended to limit the scope of the invention. Alternative terms that may be substituted include "UEIBR transmission occasion", "Event indicator transmission occasion", "UEIBR indicator transmission occasion", "UEIBR request-notification transmission occasion", "Event indicator channel transmission occasion", among others.

The UCI for/of wireless device-initiated CSI reporting may be different from scheduling request (SR). The UCI for/of wireless device-initiated CSI reporting may be different from HARQ-ACK. The UCI for/of wireless device-initiated CSI reporting may be different from CSI report. The UCI for/of wireless device-initiated CSI reporting may be different from link recovery request (LRR). UCI types reported in a PUCCH transmission may comprise UCI for/of wireless device-initiated CSI reporting, HARQ-ACK information, SR, LRR, and/or CSI.

UCI bits may comprise, for example, UCI for/of wireless device-initiated CSI reporting (e.g., UE-initiated CSI reporting) information bits (or UCI information bits for/of wireless device-initiated CSI reporting), if any. UCI bits may comprise, for example, HARQ-ACK information bits, if any, SR information bits, if any, LRR information bits, if any, UEIRI information bit, and CSI bits, if any.

UCI bits may comprise, for example, UCI information bits for/of wireless device-initiated CSI reporting (or UCI for/of wireless device-initiated CSI reporting information bits), if any. UCI bits may comprise, for example, HARQ-ACK information bits, if any, SR information bits, if any, LRR information bits, if any, UEIRI information bit, and CSI bits, if any.

The PUCCH transmission via the PUCCH resource may request an uplink resource (or an uplink grant) for a PUSCH transmission (e.g., PUSCH in FIG. 20) to carry/multiplex the wireless device-initiated CSI report (e.g., at step 2008 in FIG. 20), for example, in accordance with the first mode/option/scheme of wireless device-initiated CSI reporting in FIG. 20. The PUCCH transmission with the UCI for/of wireless device-initiated CSI reporting may indicate the request of the uplink resource (or the uplink grant) for the PUSCH transmission.

The wireless device may receive/detect DCI (e.g., DCI 2014 in FIG. 20) indicating an uplink resource (or an uplink grant) for the PUSCH transmission (e.g., PUSCH in FIG. 20), for example, after sending (e.g., transmitting) the PUCCH transmission via the PUCCH resource. The wireless device may send (e.g., transmit) the PUSCH transmission via the uplink resource indicated by the uplink grant (e.g., at step 2016 in FIG. 20), for example, after receiving the DCI.

The PUSCH transmission (e.g., PUSCH 2018 in FIG. 20) may carry (or may be with or may be multiplexed with) the wireless device-initiated CSI report. The PUSCH transmission may be, for example, on a second cell (or on a second uplink BWP of a second cell). The first cell may be different from the second cell. The first cell may be the same as the second cell.

The second cell that the wireless device sends (e.g., transmits) the PUCCH transmission may be different from the second cell that the wireless device sends (e.g., transmits) the PUSCH transmission. The second cell that the wireless device sends (e.g., transmits) the PUCCH transmission may be the same as the second cell that the wireless device sends (e.g., transmits) the PUSCH transmission.

The PUSCH transmission may comprise the wireless device-initiated CSI report indicating the first candidate reference signal. The PUSCH transmission may comprise the wireless device-initiated CSI report indicating the first candidate reference signal, for example, for the second event and/or the third event. The wireless device-initiated CSI report may comprise a reference signal resource index/identifier/indicator indicating/identifying the first candidate reference signal. The wireless device-initiated CSI report may indicate/comprise the radio link quality of the first candidate reference signal.

The DCI may comprise a CSI request field with a value. The value may indicate (or may be mapped to) a CSI trigger state (or an aperiodic CSI trigger state) associated with the CSI report configuration. The wireless device may send (e.g., transmit) the PUSCH transmission with the wireless device-initiated CSI report, for example, based on the value of the CSI request field in the DCI indicating the CSI trigger state associated with the CSI report configuration that is associated with the wireless device-initiated CSI reporting.

The PUSCH transmission may comprise the wireless device-initiated CSI report. The wireless device-initiated CSI report may indicate, for example, a radio link quality of at least one reference signal from the list/set of candidate reference signals.

The PUSCH transmission may comprise the wireless device-initiated CSI report. The wireless device-initiated CSI report may comprise a reference signal resource index/identifier/indicator indicating/identifying a first candidate reference signal from/among the list/set of candidate reference signals. The wireless device-initiated CSI report may indicate/comprise a radio link quality of the first candidate reference signal.

The one or more CSI reporting configuration parameters may comprise a reference signal report parameter (e.g., *nrofReportedRS-UEIBR* in FIG. 22). The reference signal report parameter (or a value of the reference signal report parameter) may indicate a number/quantity of reference signals to report in a report format for wireless device-initiated/event-driven beam reporting. The reference signal report parameter (or a value of the reference signal report parameter) may indicate a number/quantity of reference signals to report in a wireless device-initiated CSI report.

The wireless device-initiated CSI report may indicate one or more candidate reference signals in/from/among the list/set of candidate reference signals. The one or more candidate reference signals may comprise the first candidate reference signal. A number/quantity of the one or more candidate reference signals may be equal to the value of the reference signal report parameter. The wireless device-initiated CSI report may indicate/comprise one or more radio link qualities (e.g., absolute L1-RSRP or differential L1-RSRP) of the one or more candidate reference signals. Each radio link quality of the one or more radio link qualities may be for (or associated with) a respective candidate reference signal of the one or more candidate reference signals. The one or more radio link qualities may comprise the radio link quality of the first candidate reference signal.

The one or more CSI reporting configuration parameters may comprise a current beam parameter (e.g., *enabledCurrentBeamReport* in FIG. 22, *enabledCurrentRS-Report,* and the like). The current beam parameter may indicate (or enable or disable) whether the current reference signal (or the current beam) is reported in the wireless device-initiated CSI report, or not.

The wireless device-initiated CSI report may indicate the one or more candidate reference signals and the current reference signal, for example, when/if the current beam parameter is enabled (or present in the one or more CSI reporting configuration parameters). The wireless device-initiated CSI report may comprise the one or more radio link qualities of the one or more candidate reference signals and the radio link quality of the current reference signal. A number/quantity of reference signals indicated by the wireless device-initiated CSI report may be equal to the value of the reference signal report parameter plus one. A number/quantity of radio link qualities indicated by the wireless device-initiated CSI report may be equal to the value of the reference signal report parameter plus one.

The wireless device-initiated CSI report may indicate the one or more candidate reference signals and may not indicate the current reference signal, for example, when/if the current beam parameter is not enabled (or is disabled or is absent (e.g., not configured) in the one or more CSI reporting configuration parameters). The wireless device-initiated CSI report may comprise the one or more radio link qualities of the one or more candidate reference signals and may not comprise the radio link quality of the current reference signal. A number/quantity of reference signals indicated by the wireless device-initiated CSI report may be equal to the value of the reference signal report parameter. A number/quantity of radio link qualities indicated by the wireless device-initiated CSI report may be equal to the value of the reference signal report parameter.

FIG. 21 shows an example that shows a method according to a second mode/option/scheme for wireless device-initiated CSI reporting (e.g., UE-initiated CSI reporting). The configured resource configuration (e.g., *ConfiguredGrant, RRC-ConfiguredGrant configuredResourceForSecondChannelOfModeB* in FIG. 22, and the like) may indicate one or more PUSCH transmission occasions of the configured uplink grant for use by the wireless device (e.g., wireless device 2120) to send (e.g., transmit) wireless device-initiated CSI reports (e.g., PUSCH 1, 2, 3, 4 in FIG. 21) to the base station (e.g., base station 2110), for example, in accordance with the second mode/option/scheme for wireless device-initiated CSI reporting. The one or more PUSCH transmission occasions of the configured uplink grant may be, for example, periodic.

The PUCCH transmission via the PUCCH resource may notify of a PUSCH transmission that will carry (be multiplexed with) the wireless device-initiated CSI report via a PUSCH transmission occasion (e.g., PUSCH 4 in FIG. 21) of the configured uplink grant, for example, in accordance with the second mode/option/scheme of wireless device-initiated CSI reporting in FIG. 21 (e.g., at step 2108 in FIG. 21). The one or more PUSCH transmission occasions of the configured uplink grant may comprise the PUSCH transmission occasion of the configured uplink grant. The PUCCH transmission via the PUCCH resource may notify the base station that the PUSCH transmission with the wireless device-initiated CSI report is to be sent (e.g., transmitted) via the PUSCH transmission occasion of the one or more PUSCH transmission occasions. The PUCCH transmission may notify the base station that the wireless device-initiated CSI reporting has been triggered. The PUCCH transmission may comprise a notification that indicates the PUSCH transmission occasion, of the one or more PUSCH transmission occasions, that will be used by the wireless device for the PUSCH transmission. The notification may indicate the PUSCH transmission occasion (e.g., PUSCH 4 in FIG. 21), of the one or more PUSCH transmission occasions, for the PUSCH transmission. In the second mode of wireless device-initiated CSI reporting, the PUCCH transmission with the UCI for/of wireless device-initiated CSI reporting may notify of the PUSCH transmission that will carry (be multiplexed with) the wireless device-initiated CSI report via the PUSCH transmission occasion.

The PUSCH transmission occasion may be, for example, an earliest/first/starting PUSCH transmission occasion, among the one or more PUSCH transmission occasions of the configured uplink grant, that occurs after the PUCCH transmission. The PUSCH transmission occasion may be, for example, an earliest/first/starting PUSCH transmission occasion, among the one or more PUSCH transmission occasions, that occurs a time duration/gap/delay/offset (e.g., time duration in FIG. 21) after the PUCCH transmission. The PUSCH transmission occasion may be an earliest/first/starting available PUSCH transmission occasion, among the one or more PUSCH transmission occasions, that occurs a time duration/gap/delay/offset after the PUCCH transmission. The PUSCH transmission occasion may be an earliest/first/starting available PUSCH transmission occasion, among the one or more PUSCH transmission occasions, that occurs a time duration/gap/delay/offset after a last/final repetition of the PUCCH transmission. The wireless device may not drop PUSCH transmission(s) in an available PUSCH transmission occasion. The PUSCH transmission occasion may be an earliest/first/starting available PUSCH transmission occasion, among the one or more PUSCH transmission occasions, that is at least the time duration/gap/delay/offset after a last/final/ending symbol of the PUCCH transmission.

The one or more CSI reporting configuration parameters may indicate the time duration/gap/delay/offset. The one or more configuration parameters may indicate the time duration/gap/delay/offset.

The wireless device may send (e.g., transmit) a UE capability message. The UE capability message may comprise a parameter indicating a minimum time duration/gap/delay/offset. The minimum time duration/gap/delay may be, for example, in terms of symbols. The time duration/gap/delay may be equal to or greater/larger than the minimum time duration/gap/delay/offset. The UE capability message may comprise a parameter indicating a second time duration/gap/delay/offset. The second time duration/gap/delay may be, for example, in terms of symbols. The time duration/gap/delay may be equal to or greater/larger than the second time duration/gap/delay/offset.

The wireless device may send (e.g., transmit) the PUSCH transmission (e.g., at step 2114 in FIG. 21) via the PUSCH transmission occasion, for example, after sending (e.g., transmitting) the PUCCH transmission. The wireless device may send (e.g., transmit) the PUSCH transmission (e.g., at step 2114 in FIG. 21) via the PUSCH transmission occasion, for example, after notifying the PUSCH transmission.

The PUSCH transmission may carry (or may be with or may be multiplexed with) the wireless device-initiated CSI report. The PUSCH transmission may be, for example, on a second cell (or on a second uplink BWP of a second cell). The first cell may be different from the second cell. The first cell may be the same as the second cell.

The second cell that the wireless device sends (e.g., transmits) the PUCCH transmission may be different from the second cell that the wireless device sends (e.g., transmits) the PUSCH transmission. The second cell that the wireless device sends (e.g., transmits) the PUCCH transmission may be the same as the second cell that the wireless device sends (e.g., transmits) the PUSCH transmission.

A symbol duration of the time duration/gap/delay/offset may be determined, for example, based on a smallest numerology (or a smallest subcarrier spacing) between the PUCCH transmission via the PUCCH resource and the PUSCH transmission via the PUSCH transmission occasion.

A symbol duration of the time duration/gap/delay/offset may be determined, for example, based on a largest/highest numerology (or a largest/highest subcarrier spacing) between the PUCCH transmission via the PUCCH resource and the PUSCH transmission via the PUSCH transmission occasion. A symbol duration of the time duration/gap/delay/offset may be determined, for example, based on a numerology (or a subcarrier spacing or a subcarrier spacing configuration) of the PUCCH transmission via the PUCCH resource.

A symbol duration of the time duration/gap/delay/offset may be determined, for example, based on a numerology (or a subcarrier spacing or a subcarrier spacing configuration) of the PUSCH transmission via the PUSCH transmission occasion. A symbol duration of the time duration/gap/delay/offset may be determined, for example, based on an active BWP with the smallest subcarrier spacing among BWP(s), of/from cell(s) with the trigger-event detected, that are active at the end of the PUCCH transmission. Each BWP of the BWP(s) may be for a respective cell of the first cell(s). The first cell(s) may comprise the first cell. The active BWP may be, for example, an active uplink BWP.

A symbol duration of the time duration/gap/delay/offset may be determined, for example, based on an active BWP. A symbol duration of the time duration/gap/delay/offset may be determined, for example, based on an active BWP with the smallest subcarrier spacing among BWPs, of/from the second cell with the PUCCH transmission and the second cell with the PUSCH transmission, that are active at the end of the PUCCH transmission.

The PUSCH transmission may comprise the wireless device-initiated CSI report indicating the first candidate reference signal. The PUSCH transmission may comprise the wireless device-initiated CSI report indicating the first candidate reference signal, for example, for the second event and/or the third event. The wireless device-initiated CSI report may comprise a reference signal resource index/identifier/indicator indicating/identifying the first candidate reference signal. The wireless device-initiated CSI report may indicate/comprise the radio link quality of the first candidate reference signal.

The PUSCH transmission may comprise the wireless device-initiated CSI report indicating the first event. The wireless device-initiated CSI report may comprise a reference signal resource index/identifier/indicator indicating/identifying a first candidate reference signal from/among the list/set of candidate reference signals. The wireless device-initiated CSI report may indicate/comprise a radio link quality of the first candidate reference signal.

The wireless device-initiated CSI report may indicate one or more candidate reference signals in/from/among the list/set of candidate reference signals. The one or more candidate reference signals may comprise the first candidate reference signal. A number/quantity of the one or more candidate reference signals may be equal to the value of the reference signal report parameter. The wireless device-initiated CSI report may indicate/comprise one or more radio link qualities of the one or more candidate reference signals. Each radio link quality of the one or more radio link qualities may be for (or associated with) a respective candidate reference signal of the one or more candidate reference signals. The one or more radio link qualities may comprise the radio link quality of the first candidate reference signal.

The wireless device-initiated CSI report may indicate the one or more candidate reference signals and the current reference signal, for example, when/if the current beam parameter is enabled (or present in the one or more CSI reporting configuration parameters). The wireless device-initiated CSI report may comprise the one or more radio link qualities of the one or more candidate reference signals and the radio link quality of the current reference signal. A number/quantity of reference signals indicated by the wireless device-initiated CSI report may be equal to the value of the reference signal report parameter plus one. A number/quantity of radio link qualities indicated by the wireless device-initiated CSI report may be equal to the value of the reference signal report parameter plus one.

The wireless device-initiated CSI report may indicate the one or more candidate reference signals and may not indicate the current reference signal, for example, when/if the current beam parameter is not enabled (or is disabled or is absent (e.g., not configured) in the one or more CSI reporting configuration parameters). The wireless device-initiated CSI report may comprise the one or more radio link qualities of the one or more candidate reference signals and may not comprise the radio link quality of the current reference signal. A number/quantity of reference signals indicated by the wireless device-initiated CSI report may be equal to the value of the reference signal report parameter. A number/quantity of radio link qualities indicated by the wireless device-initiated CSI report may be equal to the value of the reference signal report parameter.

The wireless device may report CSI reference signal resource indicators (CRIs) or SS/PBCH block resource indicators (SSBRIs) and their absolute L1-RSRPs or differential L1-RSRPs corresponding to the one or more candidate reference signals in/from/among the list/set of candidate reference signals, for example, in the wireless device-initiated CSI report and in a single reporting instance. The wireless device may report CSI reference signal resource indicators (CRIs) or SS/PBCH block resource indicators (SSBRIs) and their absolute L1-RSRPs or differential L1-RSRPs corresponding to the one or more candidate reference signals in/from/among the list/set of candidate reference signals, for example, based on a reference signal report parameter (e.g., *nrofReportedRS-UEIBR*)*.* The reference signal report parameter (e.g., *nrofReportedRS-UEIBR*) may be an RRC parameter configured by a base station. The reference signal report parameter (e.g., *nrofReportedRS-UEIBR*) may indicate the number/quantity of CRIs or SSBRIs in the CSI report. For example, the wireless device may comprise CRI 4, CRI 7, CRI 11, and CRI 20, for example, if the number/quantity is 4. For example, the wireless device may comprise SSBRI 2, SSBRI 13, and SSBRI 29, for example, if the number/quantity is 3. In the second event, the one or more candidate reference signals may comprise the first candidate reference signal that satisfies the second event. In the second event, the one or more candidate reference signals may comprise at least one candidate reference signal that satisfies the second event. In the third event, the one or more candidate reference signals may comprise the first candidate reference signal that satisfies the third event. In the third event, the one or more candidate reference signals may comprise at least one candidate reference signal that satisfies the third event. The wireless device may further report the differential L1-RSRP correponding to the current reference signal (e.g., the reference signal in the indicated TCI state, or the SSB which is QCLed with the reference signal in the indicated TCI state), for example, if the current beam parameter (e.g., *enabledCurrentBeamReport* in FIG. 22) is present/configured/provided. The wireless device may further report the differential L1-RSRP correponding to the current reference signal (e.g., the reference signal in the indicated TCI state, or the SSB which is QCLed with the reference signal in the indicated TCI state), for example, in the wireless device-initiated CSI report and in the single reporting instance.

The wireless device may start (or restart) the timer (e.g., *prohibitTimer* in FIG. 22) from/at a first/starting/initial/earliest symbol. The wireless device may start (or restart) the timer (e.g., *prohibitTimer* in FIG. 22) from/at a first/starting/initial/earliest symbol, for example, after the end of the PUSCH transmission with the wireless device-initiated CSI report.

The base station may receive the PUSCH transmission with the wireless device-initiated CSI report. The base station may receive the PUSCH transmission with the wireless device-initiated CSI report, for example, from the wireless device and in/via the PUSCH transmission occasion.

The one or more CSI reporting configuration parameters may comprise a parameter (e.g., *targetCCforIndicatedTCI-State, referenceCCforIndicatedTCI-State, carrier2, ServCellIndex, tci-ServCellIndex)* for wireless device-initiated CSI reporting. The parameter (e.g., RRC parameter in FIG. 23) may indicate, for example, a cell (or a component carrier (CC)) on which an indicated TCI state used for wireless device-initiated CSI reporting (or trigger-event detection) is applied/used. The parameter may indicate, for example, a cell that the wireless device uses a reference signal associated with an indicated TCI state of the cell for wireless device-initiated CSI reporting. The indicated TCI state of the cell indicated by the parameter may be associated with the current reference signal. The wireless device may measure/assess monitor/determine/assess/measure a radio link quality of the current reference signal, for example, for the wireless device-initiated CSI reporting. The parameter (or a value of the parameter) may indicate/identify a cell that the indicated TCI state used for the wireless device-initiated CSI reporting is applied to (e.g., used for). The cell (e.g., *, tci-ServCellIndex, CCofIndicatedTCI*) may be a cell indication parameter (e.g., a TCI state parameter).

In an example, the one or more CSI reporting configuration parameters may not comprise one or more parameters for indicating a TCI state for wireless device-initiated CSI reporting. For the example the parameter (e.g., *targetCCforIndicatedTCI-State, referenceCCforIndicatedTCI-State, carrier2, ServCellIndex, tci-ServCellIndex, CCofIndicatedTCI*), such as the RRC parameter described with respect to FIG. 23, may not be included in a CSI reporting configuration. The parameter may be absent (e.g., not configured) in the one or more CSI reporting configuration parameters. The wireless device may not be aware of which cell's TCI state to use for determination of the current beam. The wireless device may not be able to perform event detection for wireless device-initiated CSI reporting, for example, if the wireless device does not know the current beam.

The cell on which an indicated TCI state used for wireless device-initiated CSI reporting (or trigger-event detection) is applied/used may be the first cell that the one or more CSI reporting configuration parameters are configured for/on, for example, based on the parameter (e.g., cell indication parameter, TCI state parameter) being absent (e.g., not configured) in the one or more CSI reporting configuration parameters. The cell that the indicated TCI state used for the wireless device-initiated CSI reporting is applied to (e.g., used for) may be the first cell that the one or more CSI reporting configuration parameters are configured for/on, for example, based on the parameter being absent (e.g., not configured) in the one or more CSI reporting configuration parameters.

The cell on which an indicated TCI state used for wireless device-initiated CSI reporting (or trigger-event detection) is applied/used may be the second cell indicated by the carrier parameter, for example, based on the parameter (e.g., cell indication parameter) being absent (e.g., not configured) in the one or more CSI reporting configuration parameters. The cell that the indicated TCI state used for the wireless device-initiated CSI reporting is applied to (e.g., used for) may be the second cell indicated by the carrier parameter, for example, based on the parameter (e.g., cell indication parameter) being absent (e.g., not configured) in the one or more CSI reporting configuration parameters.

The cell on which an indicated TCI state used for wireless device-initiated CSI reporting (or trigger-event detection) is applied/used may be the first cell that the one or more CSI reporting configuration parameters are configured for/on, for example, based on both the carrier parameter and the parameter (e.g., cell indication parameter) being absent (e.g., not configured) in the one or more CSI reporting configuration parameters. The cell that the indicated TCI state used for the wireless device-initiated CSI reporting is applied to (e.g., used for) may be the first cell that the one or more CSI reporting configuration parameters are configured for/on, for example, based on both the carrier parameter and the parameter (e.g., cell indication parameter) being absent (e.g., not configured) in the one or more CSI reporting configuration parameters.

The parameter (or the value of the parameter) may indicate/identify the third cell (e.g., CC 2 in FIG. 23). The parameter (or the value of the parameter) may indicate/identify the third cell that the indicated TCI state used for the wireless device-initiated CSI reporting (or used for trigger-event detection) is applied to (e.g., used for). The parameter (or the value of the parameter) may be set/equal to a serving cell index/identifier (e.g., *ServCellIndex)* indicating/identifying/of the third cell.

The second cell that the list/set of candidate reference signals are configured/transmitted on and the third cell that the indicated TCI state used for the wireless device-initiated CSI reporting (or used for trigger-event detection) is applied to (e.g., used for) may be different. The second cell that the list/set of candidate reference signals are configured/transmitted on and the third cell that the indicated TCI state used for the wireless device-initiated CSI reporting (or used for trigger-event detection) is applied to (e.g., used for) may be the same.

The first cell that the one or more CSI reporting configuration parameters are configured for/on and the third cell that the indicated TCI state used for the wireless device-initiated CSI reporting (or used for trigger-event detection) is applied to (e.g., used for) may be different. The first cell that the one or more CSI reporting configuration parameters are configured for/on and the third cell that the indicated TCI state used for the wireless device-initiated CSI reporting (or used for trigger-event detection) is applied to (e.g., used for) may be the same.

The list/set of TCI states may be, for example, a list/set of TCI states that can/may be used as an indicated TCI state. Each TCI state in the list/set of TCI states of the third cell may indicate (or may be associated with) a respective reference signal (e.g., *referenceSignal*) transmitted/configured/located on the second cell that the list/set of candidate reference signals are configured/transmitted on. A respective TCI state configuration of each TCI state in the list/set of TCI states may indicate, for configuration/transmission/location of a reference signal indicated by the TCI state, the second cell that the list/set of candidate reference signals are configured/transmitted on. A respective TCI state configuration of each TCI state in the list/set of TCI states may comprise a cell parameter (e.g., *cell)* indicating the second cell that the list/set of candidate reference signals are configured/transmitted on. The one or more configuration parameters may comprise TCI state configurations of the list/set of TCI states.

The wireless device may not expect reference signals indicated by the list/set of TCI states to be transmitted/configured/located on a cell different from the second cell that the list/set of candidate reference signals are configured/transmitted on. The wireless device may expect each reference signal of the reference signals to be transmitted/configured/located on the second cell that the list/set of candidate reference signals are configured/transmitted on. Each TCI state in the list/set of TCI states may indicate a respective reference signal of the reference signals. For example, a first TCI state in the list/set of TCI states may indicate a first reference signal of the reference signals. A second TCI state in the list/set of TCI states may indicate a second reference signal of the reference signals. The wireless device may expect both the first reference signal and the second reference signal to be transmitted/configured/located on the second cell that the list/set of candidate reference signals are configured/transmitted on. A first cell parameter (e.g., *cell*) in a first TCI state configuration of the first TCI state may indicate the second cell in which the first reference signal is configured/transmitted/located. A second cell parameter (e.g., *cell*) in a second TCI state configuration of the second TCI state may indicate the second cell in which the second reference signal is configured/transmitted/located. The first cell parameter (e.g., *cell*) in the first TCI state configuration of the first TCI state may not indicate a different cell from the second cell that the list/set of candidate reference signals are configured/transmitted on. The second cell parameter (e.g., *cell*) in the second TCI state configuration of the second TCI state may not indicate a different cell from the second cell that the list/set of candidate reference signals are configured/transmitted on. A respective cell parameter (e.g., *cell*) associated with each TCI state in the list/set of TCI states may indicate the second cell that the list/set of candidate reference signals are configured/transmitted on. The base station may not send (e.g., transmit)/configure any reference signal of the reference signals indicated by the list/set of TCI states on a cell different from the second cell. The base station may configure, by the one or more configuration parameters, the reference signals indicated by the list/set of TCI states on the second cell. The base station may send (e.g., transmit)/configure each reference signal of the reference signals on the second cell that the list/set of candidate reference signals are configured/transmitted on. The base station may send (e.g., transmit)/configure both the first reference signal and the second reference signal on the second cell that the list/set of candidate reference signals are configured/transmitted on. The base station may set a respective cell parameter (e.g., *cell*) associated with each TCI state in the list/set of TCI states to a value indicating the second cell. The base station may set a respective cell parameter (e.g., *cell*) associated with each TCI state in the list/set of TCI states to the same value (e.g., *ServCellIndex* of the second cell) indicating the second cell.

The wireless device may not expect reference signals indicated by the list/set of TCI states to be transmitted/configured/located on different cells. The wireless device may expect each reference signal of the reference signals to be transmitted/configured/located on the same cell. Each TCI state in the list/set of TCI states may indicate a respective reference signal of the reference signals. For example, a first TCI state in the list/set of TCI states may indicate a first reference signal of the reference signals. A second TCI state in the list/set of TCI states may indicate a second reference signal of the reference signals. The wireless device may expect both the first reference signal and the second reference signal to be transmitted/configured/located on the same cell. A first cell parameter (e.g., *cell*) in a first TCI state configuration of the first TCI state may indicate a cell in which the first reference signal is configured/transmitted/located. A second cell parameter (e.g., *cell*) in a second TCI state configuration of the second TCI state may indicate the cell in which the second reference signal is configured/transmitted/located. The second cell parameter (e.g., *cell*) in the second TCI state configuration of the second TCI state may not indicate a different cell from the cell indicated by the first cell parameter. A respective cell parameter (e.g., *cell*) associated with each TCI state in the list/set of TCI states may indicate the (same) cell. The base station may not send (e.g., transmit)/configure the reference signals indicated by the list/set of TCI states on different cells. The base station may configure, by the one or more configuration parameters, the reference signals indicated by the list/set of TCI states on the same cell. The base station may send (e.g., transmit)/configure each reference signal of the reference signals on the same cell. The base station may send (e.g., transmit)/configure both the first reference signal and the second reference signal on the same cell. The base station may set a respective cell parameter (e.g., *cell*) associated with each TCI state in the list/set of TCI states to a value indicating the (same) cell.

The wireless device may receive a second control command (e.g., DCI, MAC-CE, DCI 1718, Control command 2004, 2104 in FIG. 20 and FIG. 21). The second control command may indicate a second TCI state (e.g., Indicated TCI state 2 at time t1 in FIG. 23) for the third cell.

The wireless device may apply/use the second (indicated) TCI state for/on/to the third cell. The second TCI state may be a second joint TCI state or a second downlink TCI state. The second joint TCI state may be for use by the wireless device for both downlink receptions (e.g., PDSCH, PDCCH) and uplink transmissions (e.g., PUSCH, PUCCH) via the third cell. The second downlink TCI state may be for use by the wireless device for downlink receptions (e.g., PDSCH, PDCCH) via the third cell and not for uplink transmissions (e.g., PUSCH, PUCCH) via the third cell. An indicated TCI state of the third cell may change from the (indicated) TCI state (e.g., Indicated TCI state 1 in FIG. 23) to the second TCI state (e.g., Indicated TCI state 2 in FIG. 23).

The one or more configuration parameters may comprise a second TCI state configuration (e.g., *TCI-State*) of the second TCI state. The second TCI state configuration may comprise a second reference signal parameter (e.g., *referenceSignal*) indicating/identifying a second reference signal (e.g., CSI-RS, TRS, RS 2 in FIG. 23). The second reference signal parameter may be, for example, a second reference signal index/identifier (e.g., *NZP-CSI-RS-ResourceId, SSB-Index*)*.* The second reference signal may provide/indicate quasi-collocation information.

The second TCI state configuration may indicate, for configuration/transmission/location of the second reference signal, a cell (e.g., CC 3) different from the second cell (e.g., CC 1) that the list/set of candidate reference signals are configured/transmitted on. The second TCI state configuration may, for example, comprise a second cell parameter (e.g., *cell*) indicating the cell in which the second reference signal is configured/transmitted/located. The second reference signal may be configured/transmitted/located on the third cell that the wireless device applies/uses the second TCI state to/for (e.g., the cell is the third cell), for example, when/if the second cell parameter is absent (e.g., not configured) in the second TCI state configuration of the second TCI state. There may not be a fair comparison of reference signals, for example, as different cells may have different channel conditions.

The wireless device may stop/abort/cancel/suspend the wireless device-initiated CSI reporting (or trigger-event detection). The wireless device may stop/abort/cancel/suspend the wireless device-initiated CSI reporting (or trigger-event detection), for example, based on the second reference signal indicated by (or associated with) the second TCI state being transmitted/configured/located on the cell different from the second cell (e.g., CC 1) that the list/set of candidate reference signals are configured/transmitted on.

Stopping/aborting/canceling/suspending the wireless device-initiated CSI reporting may comprise, for example, not monitoring/determining/assessing/measuring a radio link quality (e.g., L1-RSRP) of the current reference signal for the trigger-event detection. Stopping/aborting/canceling/suspending the wireless device-initiated CSI reporting may comprise, for example, not monitoring/determining/assessing/measuring, for the trigger-event detection, a radio link quality (e.g., L1-RSRP) of the second reference signal indicated by the second TCI state. Stopping/aborting/canceling/suspending the wireless device-initiated CSI reporting may comprise, for example, not monitoring/determining/assessing/measuring a radio link quality (e.g., L1-RSRP) of each candidate reference signal in/of the list/set of candidate reference signals for the trigger-event detection. Stopping/aborting/canceling/suspending the wireless device-initiated CSI reporting may comprise, for example, not sending (e.g., transmitting), via the PUCCH resource, a PUCCH transmission carrying UCI for/of wireless device-initiated CSI reporting. Stopping/aborting/canceling/suspending the wireless device-initiated CSI reporting may comprise, for example, not sending (e.g., transmitting)/reporting a wireless device-initiated CSI report in a PUSCH transmission.

The wireless device may receive a third control command (e.g., DCI, MAC-CE, DCI 1718, Control command 2004, 2104 in FIG. 20 and FIG. 21) indicating a third TCI state for the third cell. The wireless device may apply/use the third (indicated) TCI state for/on/to the third cell. The third TCI state may be a third joint TCI state or a third downlink TCI state. The third joint TCI state may be for use by the wireless device for both downlink receptions (e.g., PDSCH, PDCCH) and uplink transmissions (e.g., PUSCH, PUCCH) via the third cell. The third downlink TCI state may be for use by the wireless device for downlink receptions (e.g., PDSCH, PDCCH) via the third cell and not for uplink transmissions (e.g., PUSCH, PUCCH) via the third cell.

The one or more configuration parameters may comprise a third TCI state configuration (e.g., *TCI-State*) of the third TCI state. The third TCI state configuration may comprise a third reference signal parameter (e.g., *referenceSignal*) indicating/identifying a third reference signal (e.g., CSI-RS, TRS, RS 2 in FIG. 23). The third reference signal parameter may be, for example, a third reference signal index/identifier (e.g., *NZP-CSI-RS-ResourceId, SSB-Index*)*.* The third reference signal may provide/indicate quasi-collocation information.

The third TCI state configuration may indicate, for configuration/transmission/location of the third reference signal, the second cell (e.g., CC 1) that the list/set of candidate reference signals are configured/transmitted on. The third TCI state configuration may, for example, comprise a third cell parameter (e.g., *cell*) indicating the third cell in which the third reference signal is configured/transmitted/located. The third reference signal may be configured/transmitted/located on the third cell that the wireless device applies/uses the third TCI state to/for, for example, when/if the third cell parameter is absent (e.g., not configured) in the third TCI state configuration of the third TCI state.

The wireless device may start/resume/initialize/reinitialize the wireless device-initiated CSI reporting (or trigger-event detection). The wireless device may start/resume/initialize/reinitialize the wireless device-initiated CSI reporting (or trigger-event detection), for example, based on the third reference signal indicated by (or associated with) the third TCI state being sent (e.g., transmitted)/configured/located on the second cell (e.g., CC 1) that the list/set of candidate reference signals are configured/transmitted on. The wireless device may start/resume/initialize/reinitialize the (suspended) wireless device-initiated CSI reporting (or (suspended) trigger-event detection), for example, based on the third reference signal indicated by (or associated with) the third TCI state being sent (e.g., transmitted)/configured/located on the second cell (e.g., CC 1) that the list/set of candidate reference signals are configured/transmitted on, the wireless device may start/resume/initialize/reinitialize the (suspended) wireless device-initiated CSI reporting (or (suspended) trigger-event detection).

Starting/resuming/initializing/reinitializing the wireless device-initiated CSI reporting may comprise, for example, monitoring/determining/assessing/measuring a radio link quality (e.g., L1-RSRP) of the current reference signal for the trigger-event detection. Starting/resuming/initializing/reinitializing the wireless device-initiated CSI reporting may comprise, for example, monitoring/determining/assessing/measuring, for the trigger-event detection, a radio link quality (e.g., L1-RSRP) of the third reference signal indicated by the third TCI state. Starting/resuming/initializing/reinitializing the wireless device-initiated CSI reporting may comprise, for example, monitoring/determining/assessing/measuring a radio link quality (e.g., L1-RSRP) of each candidate reference signal in/of the list/set of candidate reference signals for the trigger-event detection. Starting/resuming/initializing/reinitializing the wireless device-initiated CSI reporting may comprise, for example, sending (e.g., transmitting), via the PUCCH resource and for a triggered wireless device-initiated CSI reporting, a PUCCH transmission carrying UCI for/of wireless device-initiated CSI reporting. Starting/resuming/initializing/reinitializing the wireless device-initiated CSI reporting may comprise, for example, sending (e.g., transmitting)/reporting a wireless device-initiated CSI report in a PUSCH transmission.

The wireless device may select/determine the third cell with the (indicated) TCI state. In an example, the wireless device may select/determine, for the wireless device-initiated CSI reporting (or trigger-event detection), the third cell with the (indicated) TCI state. The reference signal indicated by (or associated with) the TCI state may be configured/transmitted/located on the second cell that the list/set of candidate reference signals are configured/transmitted on. The cell parameter (e.g., *cell*) of the TCI state configuration of the TCI state may indicate the second cell.

The wireless device may select/determine, for the wireless device-initiated CSI reporting (or trigger-event detection), the third cell with the (indicated) TCI state, for example, based on the reference signal indicated by the TCI state being configured/transmitted/located on the second cell that the list/set of candidate reference signals are configured/transmitted on. The wireless device may select/determine, for the wireless device-initiated CSI reporting (or trigger-event detection), the third cell among one or more second cells with one or more indicated TCI states. The one or more second cells may comprise the third cell. The one or more cells may comprise the one or more second cells. Each indicated TCI state of the one or more indicated TCI states may be for (or associated with) a respective cell of the one or more second cells. The wireless device may apply/use each TCI state of the one or more indicated TCI states to/for downlink receptions and/or uplink transmissions via a respective cell of the one or more second cells. The one or more indicated TCI states may comprise the (indicated) TCI state of the third cell.

The one or more indicated TCI states may indicate one or more reference signals (e.g., by *referenceSignal*)*.* Each indicated TCI state of the one or more indicated TCI states may indicate a respective reference signal of the one or more reference signals. The one or more reference signals indicated by (or associated with) the one or more indicated TCI states may be configured/transmitted/located on the second cell that the list/set of candidate reference signals are configured/transmitted on. A respective cell parameter (e.g., *cell)* associated with each indicated TCI state of the one or more indicated TCI states may indicate the second cell that the list/set of candidate reference signals are configured/transmitted on. Each reference signal indicated by a respective indicated TCI state of the one or more indicated TCI states may be configured/transmitted/located on the second cell that the list/set of candidate reference signals are configured/transmitted on. The one or more reference signals may comprise the reference signal indicated by the (indicated) TCI state of the third cell.

QCL type for/of the one or more reference signals may be, for example, set to 'TypeD'. The TypeD may indicate QCL-TypeD.

The one or more configuration parameters may indicate, for the one or more second cells, one or more cell serving indexes/identifiers/identities (e.g., *ServCellIndex*)*.* The one or more configuration parameters may indicate, for each cell of the one or more second cells, a respective serving cell index of the one or more serving cell indexes. Each cell of the one or more second cells may be indicated/identified by a respective serving cell index of the one or more serving cell indexes. The one or more serving cell indexes may comprise the serving cell index/identifier (e.g., *ServCellIndex*) indicating/identifying/of the third cell.

The wireless device may select/determine, for the wireless device-initiated CSI reporting (or trigger-event detection), the third cell among one or more second cells, for example, based on the serving cell index/identifier (e.g., *ServCellIndex*) indicating/identifying/of the third cell being lowest/smallest among the one or more serving cell indexes of the one or more second cells. The wireless device may select/determine, for the wireless device-initiated CSI reporting (or trigger-event detection), the third cell among one or more second cells with the one or more indicated TCI states indicating the one or more reference signals configured/transmitted/located on the second cell, for example, based on the serving cell index/identifier (e.g., *ServCellIndex*) indicating/identifying/of the third cell being lowest/smallest among the one or more serving cell indexes of the one or more second cells.

Each indicated TCI state of the one or more indicated TCI states may be indicated/identified by a respective TCI state index/identifier of one or more TCI state indexes/identifiers. The one or more configuration parameters may indicate, for each indicated TCI state of the one or more indicated TCI states, a respective TCI state index/identifier of the one or more TCI state indexes/identifiers. The one or more configuration parameters may indicate, for the (indicated) TCI state of the third cell, a TCI state index/identifier. The one or more TCI state indexes/identifiers may comprise the TCI state index/identifier. The TCI state index/identifier of the (indicated) TCI state of the third cell may be, for example, lowest/smallest among the one or more TCI state indexes/identifiers of the one or more indicated TCI states.

The wireless device may select/determine the third cell among one or more second cells with the one or more indicated TCI states indicating the one or more reference signals configured/transmitted/located on the second cell, for example, for the wireless device-initiated CSI reporting (or trigger-event detection). The wireless device may select/determine the third cell among one or more second cells with the one or more indicated TCI states indicating the one or more reference signals configured/transmitted/located on the second cell, for example, based on the (indicated) TCI state of the third cell having a lowest/smallest TCI state index/identifier among the one or more TCI state indexes/identifiers of the one or more indicated TCI states. The wireless device may select/determine the (indicated) TCI state of the third cell among the one or more indicated TCI states indicating the one or more reference signals configured/transmitted/located on the second cell, for example, for the wireless device-initiated CSI reporting (or trigger-event detection). The wireless device may select/determine the (indicated) TCI state of the third cell among the one or more indicated TCI states indicating the one or more reference signals configured/transmitted/located on the second cell, for example, based on the (indicated) TCI state of the third cell having the lowest/smallest TCI state index/identifier among the one or more TCI state indexes/identifiers of the one or more indicated TCI states.

The wireless device may receive a second control command (e.g., DCI, MAC-CE, DCI 1718, Control command 2004, 2104 in FIG. 20 and FIG. 21) indicating a second TCI state for the third cell. The wireless device may apply/use the second (indicated) TCI state for/on/to the third cell. The second TCI state may be a second joint TCI state or a second downlink TCI state. The second joint TCI state may be for use by the wireless device for both downlink receptions (e.g., PDSCH, PDCCH) and uplink transmissions (e.g., PUSCH, PUCCH) via the third cell. The second downlink TCI state may be for use by the wireless device for downlink receptions (e.g., PDSCH, PDCCH) via the third cell and not for uplink transmissions (e.g., PUSCH, PUCCH) via the third cell.

The control command indicating the TCI state for the third cell and the second control command indicating the second TCI state for the third cell may be, for example, the same. The control command may indicate, for the third cell, both the TCI state and the second TCI state.

The control command indicating the TCI state for the third cell and the second control command indicating the second TCI state for the third cell may be, for example, different. The wireless device may receive/apply the control command and the second control command, for example, at different times.

The wireless device may select/determine, for the wireless device-initiated CSI reporting (or for trigger-event detection), the TCI state among the TCI state of the third cell and the second TCI state of the third cell. The wireless device may measure/assess monitor/determine/assess/measure, for the wireless device-initiated CSI reporting, a radio link quality of the current reference signal associated with the TCI state, for example, based on (or after) selecting/determining the TCI state among the TCI state and the second TCI state. The wireless device may not measure/assess monitor/determine/assess/measure, for the wireless device-initiated CSI reporting, a radio link quality of a second current reference signal associated with the second TCI state, for example, based on (or after) selecting/determining the TCI state among the TCI state and the second TCI state.

The TCI state may be, for example, a first indicated TCI state of/for the third cell. The second TCI state may be, for example, a second indicated TCI state of/for the third cell.

The first indicated TCI state may be, for example, for (or specific to) a first coreset pool index (e.g., *coresetPoolIndex =* 0). The one or more configuration parameters may indicate, for one or more first coresets in a downlink BWP of the third cell, the first coreset pool index. The second indicated TCI state may be, for example, for (or specific to) a second coreset pool index (e.g., *coresetPoolIndex* = 1). The one or more configuration parameters may indicate, for one or more second coresets in the downlink BWP of the third cell, the second coreset pool index. The wireless device may receive, via a first coreset among the one or more first coresets with the first coreset pool index, the control command (e.g., DCI) indicating the TCI state (or the first indicated TCI state). The control command (e.g., MAC-CE) may comprise a field (e.g., Coreset pool index/identifier) with a first value (e.g., 0) indicating the first coreset pool index. The wireless device may receive, via a second coreset among the one or more second coresets with the second coreset pool index, the second control command (e.g., DCI) indicating the second TCI state (or the second indicated TCI state). The second control command (e.g., MAC-CE) may comprise a field (e.g., Coreset pool index/identifier) with a second value (e.g., 1) indicating the second coreset pool index.

The wireless device may select/determine the TCI state among the TCI state and the second TCI state, for example, for the wireless device-initiated CSI reporting (or for trigger-event detection). The wireless device may select/determine the TCI state among the TCI state and the second TCI state, for example, based on the TCI state (or the first indicated TCI state) being for the first coreset pool index. The wireless device may not select/determine the second TCI state among the TCI state and the second TCI state, for example, for the wireless device-initiated CSI reporting (or for trigger-event detection). The wireless device may not select/determine the second TCI state among the TCI state and the second TCI state, for example, based on the second TCI state (or the second indicated TCI state) being for the second coreset pool index.

The one or more configuration parameters may indicate, for the first indicated TCI state, a first TCI state index/identifier. The one or more configuration parameters may indicate, for the second indicated TCI state, a second TCI state index/identifier.

The wireless device may select/determine the TCI state among the TCI state and the second TCI state, for example, for the wireless device-initiated CSI reporting (or for trigger-event detection). The wireless device may select/determine the TCI state among the TCI state and the second TCI state, for example, based on the first TCI state index/identifier of the TCI state (or the first indicated TCI state) being lower/smaller than the second TCI state index/identifier of the second TCI state (or the second indicated TCI state). The wireless device may not select/determine the second TCI state among the TCI state and the second TCI state, for example, for the wireless device-initiated CSI reporting (or for trigger-event detection). The wireless device may not select/determine the second TCI state among the TCI state and the second TCI state, for example, based on the first TCI state index/identifier of the TCI state (or the first indicated TCI state) being lower/smaller than the second TCI state index/identifier of the second TCI state (or the second indicated TCI state).

The MAC CE that indicates activation of the set of activated TCI states (or that maps the set of activated TCI states to TCI codepoint(s)) may comprise a first field with a first value indicating the TCI state of the third cell as a first TCI state and a second field with a second value indicating the second TCI state of the third cell as a second TCI state. The wireless device may select/determine, for the wireless device-initiated CSI reporting (or for trigger-event detection), the TCI state among the TCI state and the second TCI state, for example, based on the TCI state being the first indicated TCI state of the third cell. The wireless device may not select/determine, for the wireless device-initiated CSI reporting (or for trigger-event detection), the second TCI state among the TCI state and the second TCI state, for example, based on the second TCI state being the second indicated TCI state of the third cell.

The one or more configuration parameters may comprise a second TCI state configuration (e.g., *TCI-State*) of the second TCI state. The second TCI state configuration may comprise a second reference signal parameter (e.g., *referenceSignal*) indicating/identifying a second reference signal (e.g., CSI-RS, TRS). The second reference signal parameter may be, for example, a second reference signal index/identifier (e.g., *NZP-CSI-RS-ResourceId, SSB-Index*)*.* The second reference signal may provide/indicate quasi-collocation information.

The second TCI state configuration may indicate, for configuration/transmission/location of the second reference signal, a cell different from the second cell that the list/set of candidate reference signals are configured/transmitted on. The second TCI state configuration may, for example, comprise a second cell parameter (e.g., *cell*) indicating the cell in which the second reference signal is configured/transmitted/located. The second reference signal may be configured/transmitted/located on the third cell that the wireless device applies/uses the second TCI state to/for (e.g., the cell is the third cell), for example, when/if the second cell parameter is absent (e.g., not configured) in the second TCI state configuration of the second TCI state.

The wireless device may select/determine, for the wireless device-initiated CSI reporting (or for trigger-event detection), the TCI state among the TCI state and the second TCI state, for example, based on the reference signal indicated by the TCI state being configured/transmitted/located on the second cell that the list/set of candidate reference signals are configured/transmitted on. The wireless device may not select/determine, for the wireless device-initiated CSI reporting (or for trigger-event detection), the second TCI state among the TCI state and the second TCI state, for example, based on the second reference signal indicated by the second TCI state being configured/transmitted/located on the cell that is different from the second cell that the list/set of candidate reference signals are configured/transmitted on.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a wireless device, channel state information (CSI) report configuration parameters associated with wireless device-initiated CSI reporting (e.g., UE-initiated CSI reporting).

Clause 2. The method of clause 1, wherein the CSI report configuration parameters comprise: a resource set parameter indicating one or more first reference signals; an event threshold; and a parameter indicating a q-th quality level.

Clause 3. The method of clause 1 or clause 2, further comprising: determining that a transmission configuration indicator (TCI) state parameter associated with wireless device-initiated CSI reporting is not configured.

Clause 4. The method of any one of clauses 1 to 3, further comprising: based on the TCI state parameter not being configured, determining an event instance based on: a radio link quality of a reference signal, among the one or more first reference signals, being the event threshold greater than a radio link quality of a reference signal with a q-th highest radio link quality among one or more second reference signals, wherein the one or more second references are indicated by one or more activated TCI states that are applied to a component carrier (CC) associated with the CSI report configuration parameters.

Clause 5. The method of any one of clauses 1 to 4, further comprising: transmitting, based on the event instance, an uplink signal.

Clause 6. The method of any one of clauses 1 to 5, wherein the CSI report configuration parameters comprise: the resource set parameter indicating one or more first reference signals on a first cell; and a TCI state parameter indicating a second cell on which a TCI state used to determine a current reference signal for wireless device-initiated beam reporting is applied, wherein the method further comprises: receiving a first control command indicating a first TCI state for the second cell indicated by the TCI state parameter, wherein the first TCI state indicates a first reference signal on the first cell with the one or more first reference signals; performing, for the wireless device-initiated beam reporting, event instance evaluations based on measuring the first reference signal; receiving a second control command indicating a second TCI state for the second cell indicated by the TCI state parameter, wherein the second TCI state indicates a second reference signal on a cell different from the first cell; and based on the second TCI state indicating the second reference signal on the cell that is different from the first cell with the one or more first reference signals, stopping the wireless device-initiated beam reporting.

Clause 7. The method of any one of clauses 1 to 6, wherein the receiving the CSI report configuration parameters comprises receiving one or more radio resource control (RRC) messages comprising the CSI report configuration parameters associated with wireless device-initiated beam reporting, and wherein the wireless device-initiated beam reporting comprises user equipment (UE)-initiated beam reporting.

Clause 8. The method of any one of clauses 1 to 7, wherein the CSI report configuration parameters further comprise an event type parameter indicating an event type for wireless device-initiated beam reporting.

Clause 9. The method of any one of clauses 1 to 8, wherein none of the CSI report configuration parameters comprises a carrier parameter indicating a cell on which the one or more first reference signals are configured, and wherein the TCI state parameter is different from the carrier parameter.

Clause 10. The method of any one of clauses 1 to 9, further comprising receiving a medium access control (MAC) control element (CE) indicating activation of the one or more TCI states.

Clause 11. The method of any one of clauses 1 to 10, wherein the TCI state parameter, when configured, indicates a cell on which a TCI state used to determine a current reference signal is applied.

Clause 12. The method of any one of clauses 1 to 11, wherein the transmitting the uplink signal is based on a total quantity of event instances within a time window being equal to or greater than an event instance count.

Clause 13. The method of any one of clauses 1 to 12, wherein the radio link quality is a layer 1 received signal received power (L1-RSRP).

Clause 14. The method of any one of clauses 1 to 13, wherein the uplink signal is a physical uplink control channel (PUCCH) transmission carrying a wireless device-initiated report indicator that: indicates a request of an uplink grant for a physical uplink shared channel (PUSCH) transmission associated with a CSI report; or notifies of a PUSCH transmission associated with a CSI report, and wherein the wireless-device-initiated report indicator comprises user equipment (UE)-initiated report indicator (UEIRI).

Clause 15. A computing device comprising: one or more processors; and memory storing instructions that, when executed by the one or more processors, cause the computing device to perform the method of any one of clauses 1 to 14.

Clause 16. A system comprising: a wireless device configured to perform the method of any one of clauses 1 to 14; and a base station configured to transmit the CSI report configuration parameters.

Clause 17. A computer-readable medium storing instructions that, when executed, cause performance of the method of any one of clauses 1 to 14.

Clause 18. A method comprising: receiving, by a wireless device, channel state information (CSI) report configuration parameters associated with wireless device-initiated CSI reporting (e.g., UE-initiated CSI reporting).

Clause 19. The method of clause 18, wherein the CSI report configuration parameters comprise: a resource set parameter indicating one or more first reference signals on a first cell; and a transmission configuration indication (TCI) state parameter indicating a second cell on which a TCI state used to determine a current reference signal for wireless device-initiated beam reporting is applied.

Clause 20. The method of clause 18 or clause 19, further comprising: receiving a first control command indicating a first TCI state for the second cell indicated by the TCI state parameter, wherein the first TCI state indicates a first reference signal on the first cell with the one or more first reference signals.

Clause 21. The method of any one of clauses 18 to 20, further comprising: performing, for the wireless device-initiated beam reporting, event instance evaluations based on measuring the first reference signal.

Clause 22. The method of any one of clauses 18 to 21, further comprising: receiving a second control command indicating a second TCI state for the second cell indicated by the TCI state parameter, wherein the second TCI state indicates a second reference signal on a cell different from the first cell.

Clause 23. The method of any one of clauses 18 to 22, further comprising: based on the second TCI state indicating the second reference signal on the cell that is different from the first cell with the one or more first reference signals, stopping the wireless device-initiated beam reporting.

Clause 24. The method of any one of clauses 18 to 23, wherein the receiving the CSI report configuration parameters comprises receiving one or more radio resource control (RRC) messages comprising the CSI report configuration parameters associated with wireless device-initiated beam reporting.

Clause 25. The method of any one of clauses 18 to 24, wherein the stopping the wireless device-initiated beam reporting comprises stopping at least one of: performing the event instance evaluations; measuring a radio link quality of the first reference signal; measuring a radio link quality of the second reference signal; transmitting a physical uplink control channel (PUCCH) transmission carrying a wireless device-initiated report indicator; or transmitting a physical uplink shared channel (PUSCH) transmission associated with a CSI report.

Clause 26. The method of any one of clauses 18 to 25, wherein the performing the event instance evaluations comprises comparing: a radio link quality of the first reference signal; and a respective radio link quality of each reference signal among the one or more first reference signals.

Clause 27. The method of any one of clauses 18 to 26, further comprising applying the second TCI state for downlink receptions via the second cell.

Clause 28. A computing device comprising: one or more processors; and memory storing instructions that, when executed by the one or more processors, cause the computing device to perform the method of any one of clauses 18 to 27.

Clause 29. A system comprising: a wireless device configured to perform the method of any one of clauses 18 to 27; and a base station configured to transmit the CSI report configuration parameters.

Clause 30. A computer-readable medium storing instructions that, when executed, cause performance of the method of any one of clauses 18 to 27.

Clause 31. A method comprising: receiving, by a wireless device, beam report configuration parameters associated with wireless device-initiated beam reporting (e.g., UE-initiated beam reporting).

Clause 32. The method of clause 31, wherein the beam report configuration parameters comprise: a resource set parameter indicating one or more first reference signals on a first cell; an event threshold associated with wireless device-initiated beam reporting; a parameter indicating a q-th quality level; and a transmission configuration indication (TCI) state parameter indicating a second cell on which a TCI state used to determine a current reference signal for wireless device-initiated beam reporting is applied, wherein the current reference signal is among one or more second reference signals.

Clause 33. The method of clause 31 or clause 32, further comprising: receiving a first control command indicating a first TCI state for the second cell indicated by the TCI state parameter, wherein the first TCI state indicates a first reference signal on the first cell with the one or more first reference signals.

Clause 34. The method of any one of clauses 31 to 33, further comprising: determining an event instance based on a radio link quality of a reference signal among the one or more first reference signals being the event threshold greater than a radio link quality of the current reference signal with a q-th highest radio link quality among the one or more second reference signals.

Clause 35. The method of any one of clauses 31 to 34, further comprising: receiving a second control command indicating a second TCI state for the second cell indicated by the TCI state parameter, wherein the second TCI state indicates a second reference signal on a cell different from the first cell.

Clause 36. The method of any one of clauses 31 to 35, further comprising: based on the second TCI state indicating the second reference signal on the cell that is different from the first cell with the one or more first reference signals, stopping the wireless device-initiated beam reporting.

Clause 37. The method of any one of clauses 31 to 36, wherein the receiving the beam report configuration parameters comprises receiving one or more radio resource control (RRC) messages comprising a channel state information (CSI) report configuration associated with the wireless device-initiated beam reporting.

Clause 38. The method of any one of clauses 31 to 37, further comprising receiving a medium access control (MAC) control element (CE) indicating activation of one or more TCI states.

Clause 39. The method of any one of clauses 31 to 38, wherein the beam report configuration parameters further comprise an event type parameter indicating an event type for wireless device-initiated beam reporting.

Clause 40. The method of any one of clauses 31 to 39, wherein the radio link quality is layer 1 received signal received power (L1-RSRP).

Clause 41. A computing device comprising: one or more processors; and memory storing instructions that, when executed by the one or more processors, cause the computing device to perform the method of any one of clauses 31 to 40.

Clause 42. A system comprising: a wireless device configured to perform the method of any one of clauses 31 to 40; and a base station configured to transmit the beam report configuration parameters.

Clause 43. A computer-readable medium storing instructions that, when executed, cause performance of the method of any one of clauses 31 to 40.

Clause 44. A method comprising: receiving, by a wireless device, one or more radio resource control (RRC) messages comprising a channel state information (CSI) report configuration for user-equipment (UE)-initiated CSI reporting.

Clause 45. The method of clause 44, wherein the CSI report configuration comprises: a resource set parameter indicating one or more first reference signals; an event type parameter indicating an event type for the UE-initiated CSI reporting; an event threshold; and a parameter with a value of n.

Clause 46. The method of clause 44 or clause 45, further comprising: determining an event instance based on a radio link quality of a reference signal among the one or more first reference signals being the event threshold greater than a radio link quality of a current reference signal with the n-th highest radio link quality among one or more second reference signals indicated by one or more activated transmission configuration indication (TCI) states.

Clause 47. The method of any one of clauses 44 to 46, wherein based on a TCI state parameter, that indicates a cell on which a TCI state used to determine a current reference signal for the UE-initiated CSI reporting is applied, not being configured in the CSI report configuration, the current reference signal with the n-th highest radio link quality is indicated by a TCI state applied to a component carrier (CC) that is the same CC of the CSI report configuration.

Clause 48. The method of any one of clauses 44 to 47, further comprising: transmitting, based on the determining the event instance, an uplink transmission.

Clause 49. The method of any one of clauses 44 to 48, wherein the TCI state parameter is different from a carrier parameter indicating a cell that the one or more first reference signals are configured/transmitted/located on.

Clause 50. The method of any one of clauses 44 to 49, wherein the CSI report configuration: comprises the carrier parameter; or does not comprise the carrier parameter.

Clause 51. The method of any one of clauses 44 to 50, further comprising receiving a medium access control (MAC) control element (CE) indicating activation of the one or more TCI states.

Clause 52. The method of any one of clauses 44 to 51, wherein the current reference signal indicated by the TCI state is: a reference signal in the TCI state; or an SS/PBCH block which is quasi co-located (QCL-ed) with the reference signal in the TCI state.

Clause 53. The method of any one of clauses 44 to 52, wherein the one or more configuration parameters indicate a list of TCI states for the CC, wherein the list of TCI states comprise the TCI state applied to the CC.

Clause 54. The method of any one of clauses 44 to 53, wherein the transmitting the uplink transmission is based on a total number of event instances within a time window being equal to or greater than an event instance count.

Clause 55. The method of any one of clauses 44 to 54, wherein the CSI report configuration indicates: the time window; and the event instance count.

Clause 56. The method of any one of clauses 44 to 55, wherein the radio link quality is L1-RSRP.

Clause 57. The method of any one of clauses 44 to 56, wherein the uplink transmission is a physical uplink control channel (PUCCH) transmission carrying a UE-initiated report indicator that: indicates a request of an uplink grant for a PUSCH transmission to carry/multiplex a CSI report; or notifies of a PUSCH transmission that will carry a CSI report.

Clause 58. The method of any one of clauses 44 to 57, further comprising: receiving one or more second RRC messages comprising a second CSI report configuration for UE-initiated CSI reporting, wherein the second CSI report configuration comprises: a second resource set parameter indicating one or more third reference signals; a second event type parameter indicating an event type for the UE-initiated CSI reporting; a second event threshold; a second parameter with a value of m; and a TCI state parameter that indicates a CC on which a TCI state used to determine a current reference signal for the UE-initiated CSI reporting is applied; determining a second event instance based on a radio link quality of a reference signal among the one or more third reference signals being the second event threshold greater than a radio link quality of a second current reference signal with the m-th highest radio link quality among one or more fourth reference signals indicated by one or more second activated TCI states, wherein based on the TCI state parameter being configured in the second CSI report configuration, the second current reference signal with the m-th highest radio link quality is indicated by a second TCI state applied to the CC indicated by the TCI state parameter; and transmitting, based on the determining the second event instance, a second uplink transmission.

Clause 59. A computing device comprising: one or more processors; and memory storing instructions that, when executed by the one or more processors, cause the computing device to perform the method of any one of clauses 44 to 58.

Clause 60. A system comprising: a wireless device configured to perform the method of any one of clauses 44 to 58; and a base station configured to transmit the RRC messages.

Clause 61. A computer-readable medium storing instructions that, when executed, cause performance of the method of any one of clauses 44 to 58.

Clause 62. A method comprising: receiving, by a wireless device, one or more radio resource control (RRC) messages comprising a channel state information (CSI) report configuration for user-equipment (UE)-initiated CSI reporting.

Clause 63. The method of clause 62, wherein the CSI report configuration comprises: a resource set parameter indicating one or more first reference signals on a first cell; an event type parameter indicating an event type for the UE-initiated CSI reporting; an event threshold; and a TCI state parameter that indicates a second cell on which a TCI state used to determine a current reference signal for the UE-initiated CSI reporting is applied.

Clause 64. The method of clause 62 or clause 63, further comprising: receiving a first control command indicating a first TCI state for the second cell indicated by the TCI state parameter, wherein the first TCI state indicates a first reference signal on the first cell with the one or more first reference signals.

Clause 65. The method of any one of clauses 62 to 64, further comprising: performing, for the UE-initiated CSI reporting, event instance evaluations based on measuring the first reference signal.

Clause 66. The method of any one of clauses 62 to 65, further comprising: receiving a second control command indicating a second TCI state for the second cell indicated by the TCI state parameter, wherein the second TCI state indicates a second reference signal on a cell different from the first cell.

Clause 67. The method of any one of clauses 62 to 66, further comprising: based on the second TCI state indicating the second reference signal on the cell that is different from the first cell with the one or more first reference signals, stopping the UE-initiated CSI reporting.

Clause 68. The method of any one of clauses 62 to 67, wherein the stopping the UE-initiated CSI reporting comprises: aborting the UE-initiated CSI reporting; cancelling the UE-initiated CSI reporting; or suspending the UE-initiated CSI reporting.

Clause 69. The method of any one of clauses 62 to 68, wherein the stopping the UE-initiated CSI reporting comprises stopping the event instance evaluations for event detection.

Clause 70. The method of any one of clauses 62 to 69, wherein the stopping the UE-initiated CSI reporting comprises not measuring a radio link quality of the second reference signal for the event instance evaluations.

Clause 71. The method of any one of clauses 62 to 70, wherein the stopping the UE-initiated CSI reporting comprises not measuring a radio link quality of each reference signal of the one or more first reference signals for the event instance evaluations.

Clause 72. The method of any one of clauses 62 to 71, wherein the stopping the UE-initiated CSI reporting comprises not transmitting a PUCCH transmission carrying a UE-initiated report indicator (UEIRI) for the UE-initiated CSI reporting.

Clause 73. The method of any one of clauses 62 to 72, wherein the stopping the UE-initiated CSI reporting comprises not transmitting a PUSCH transmission carrying a CSI report for the UE-initiated CSI reporting.

Clause 74. The method of any one of clauses 62 to 73, wherein the performing the event instance evaluations comprises comparing: a radio link quality of the first reference signal; and a respective radio link quality of each reference signal among the one or more first reference signals.

Clause 75. The method of any one of clauses 62 to 74, further comprising applying the second TCI state for downlink receptions via the second cell.

Clause 76. The method of any one of clauses 62 to 75, wherein: the first control command is a first DCI or a first MAC-CE; and the second control command is a second DCI or a second MAC-CE.

Clause 77. A computing device comprising: one or more processors; and memory storing instructions that, when executed by the one or more processors, cause the computing device to perform the method of any one of clauses 62 to 76.

Clause 78. A system comprising: a wireless device configured to perform the method of any one of clauses 62 to 76; and a base station configured to transmit the RRC messages.

Clause 79. A computer-readable medium storing instructions that, when executed, cause performance of the method of any one of clauses 62 to 76.

A wireless device may perform a method comprising one or more operations. For example, the wireless device may receive channel state information (CSI) report configuration parameters associated with wireless device-initiated CSI reporting (e.g., UE-initiated CSI reporting). The CSI report configuration parameters may comprise: a resource set parameter indicating one or more first reference signals; an event threshold associated with wireless device-initiated beam reporting; and a parameter indicating a q-th quality level. The wireless device may determine an event instance based on a radio link quality of a reference signal among the one or more first reference signals being the event threshold greater than a radio link quality of a current reference signal with the q-th highest radio link quality among one or more second reference signals indicated by one or more activated transmission configuration indication (TCI) states. The current reference signal with a q-th highest radio link quality may be indicated by a TCI state applied to a component carrier (CC) that is the same CC of the CSI report configuration parameters, for example, based on a TCI state parameter, that may indicate a cell on which a TCI state used to determine a current reference signal for wireless device-initiated CSI reporting is applied, not being configured (e.g., in the CSI report configuration parameters). The wireless device may transmit, based on the event instance, an uplink signal. The CSI report configuration parameters may comprise: the resource set parameter indicating one or more first reference signals on a first cell; and the TCI state parameter indicating a second cell on which the TCI state used to determine the current reference signal for wireless device-initiated beam reporting is applied. The wireless device may receive a first control command indicating a first TCI state for the second cell indicated by the TCI state parameter. The first TCI state may indicate a first reference signal on the first cell with the one or more first reference signals. The wireless device may perform, for the wireless device-initiated beam reporting, event instance evaluations based on measuring the first reference signal. The wireless device may receive a second control command indicating a second TCI state for the second cell indicated by the TCI state parameter. The second TCI state may indicate a second reference signal on a cell different from the first cell. The wireless device may stop the wireless device-initiated beam reporting, for example, based on the second TCI state indicating the second reference signal on the cell that is different from the first cell with the one or more first reference signals. The wireless device may receive one or more radio resource control (RRC) messages comprising the CSI report configuration parameters associated with wireless device-initiated beam reporting. The wireless device-initiated beam reporting may comprise user equipment (UE)-initiated beam reporting. The CSI report configuration parameters may further comprise an event type parameter indicating an event type for wireless device-initiated beam reporting. None of the CSI report configuration parameters may comprise a carrier parameter indicating a cell on which the one or more first reference signals are configured. The TCI state parameter may be different from the carrier parameter. The wireless device may receive a medium access control (MAC) control element (CE) indicating activation of the one or more TCI states. The CSI report configuration parameters may indicate a list of TCI states for the CC. The list of TCI states may comprise the TCI state applied to the CC. The wireless device may transmit the uplink signal based on a total quantity of event instances within a time window being equal to or greater than an event instance count. The radio link quality may be a layer 1 received signal received power (L1-RSRP). The uplink signal may be a physical uplink control channel (PUCCH) transmission carrying a wireless device-initiated report indicator. The wireless device-initiated report indicator may indicate a request of an uplink grant for a physical uplink shared channel (PUSCH) transmission associated with a CSI report. The wireless device-initiated report indicator may notify of a PUSCH transmission associated with a CSI report. The wireless-device-initiated report indicator may comprise user equipment (UE)-initiated report indicator (UEIRI). The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station configured to send the configuration parameters. A computer-readable medium may store instructions that, when executed, cause performance of the described method, additional operations, and/or include the additional elements.

A wireless device may perform a method comprising one or more operations. For example, the wireless device may receive channel state information (CSI) report configuration parameters associated with wireless device-initiated CSI reporting (e.g., UE-initiated CSI reporting). The CSI report configuration parameters may comprise: a resource set parameter indicating one or more first reference signals on a first cell; and a transmission configuration indication (TCI) state parameter indicating a second cell on which a TCI state used to determine a current reference signal for wireless device-initiated beam reporting is applied. The wireless device may receive a first control command indicating a first TCI state for the second cell indicated by the TCI state parameter. The first TCI state may indicate a first reference signal on the first cell with the one or more first reference signals. The wireless device may perform, for the wireless device-initiated beam reporting, event instance evaluations based on measuring the first reference signal. The wireless device may receive a second control command indicating a second TCI state for the second cell indicated by the TCI state parameter. The second TCI state may indicate a second reference signal on a cell different from the first cell. The wireless device may stop the wireless device-initiated beam reporting, for example, based on the second TCI state indicating the second reference signal on the cell that is different from the first cell with the one or more first reference signals. The wireless device may receive one or more radio resource control (RRC) messages comprising the CSI report configuration parameters associated with wireless device-initiated beam reporting. The wireless device may stop the wireless device-initiated beam reporting by stopping at least one of: performing the event instance evaluations; measuring a radio link quality of the first reference signal; measuring a radio link quality of the second reference signal; transmitting a physical uplink control channel (PUCCH) transmission carrying a wireless device-initiated report indicator; or transmitting a physical uplink shared channel (PUSCH) transmission associated with a CSI report. The wireless device may perform the event instance evaluations by comparing: a radio link quality of the first reference signal; and a respective radio link quality of each reference signal among the one or more first reference signals. The wireless device may apply the second TCI state for downlink receptions via the second cell. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station configured to send the configuration parameters. A computer-readable medium may store instructions that, when executed, cause performance of the described method, additional operations, and/or include the additional elements.

A wireless device may perform a method comprising one or more operations. For example, the wireless device may receive beam report configuration parameters associated with wireless device-initiated beam reporting (e.g., UE-initiated beam reporting). The beam report configuration parameters may comprise: a resource set parameter indicating one or more first reference signals on a first cell; an event threshold associated with wireless device-initiated beam reporting; a parameter indicating a q-th quality level; and a transmission configuration indication (TCI) state parameter indicating a second cell on which a TCI state used to determine a current reference signal for wireless device-initiated beam reporting is applied. The current reference signal may be among one or more second reference signals. The wireless device may receive a first control command indicating a first TCI state for the second cell indicated by the TCI state parameter. The first TCI state may indicate a first reference signal on the first cell with the one or more first reference signals. The wireless device may determine an event instance based on a radio link quality of a reference signal among the one or more first reference signals being the event threshold greater than a radio link quality of the current reference signal with a q-th highest radio link quality among the one or more second reference signals. The wireless device may receive a second control command indicating a second TCI state for the second cell indicated by the TCI state parameter. The second TCI state may indicate a second reference signal on a cell different from the first cell. The wireless device may stop the wireless device-initiated beam reporting, for example, based on the second TCI state indicating the second reference signal on the cell that is different from the first cell with the one or more first reference signals. The wireless device may receive one or more radio resource control (RRC) messages comprising a channel state information (CSI) report configuration associated with the wireless device-initiated beam reporting. The wireless device may receive a medium access control (MAC) control element (CE) indicating activation of one or more TCI states. The beam report configuration parameters may further comprise an event type parameter indicating an event type for wireless device-initiated beam reporting. The radio link quality may be layer 1 received signal received power (L1-RSRP). The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station configured to send the configuration parameters. A computer-readable medium may store instructions that, when executed, cause performance of the described method, additional operations, and/or include the additional elements.

A wireless device may perform a method comprising one or more operations. For example, the wireless device may receive one or more radio resource control (RRC) messages comprising a channel state information (CSI) report configuration for user-equipment (UE)-initiated CSI reporting. The CSI report configuration may comprise: a resource set parameter indicating one or more first reference signals; an event type parameter indicating an event type for the UE-initiated CSI reporting; an event threshold; and a parameter with a value of n. The wireless device may determine an event instance based on a radio link quality of a reference signal among the one or more first reference signals being the event threshold greater than a radio link quality of a current reference signal with the n-th highest radio link quality among one or more second reference signals indicated by one or more activated transmission configuration indication (TCI) states. The current reference signal with the n-th highest radio link quality may be indicated by a TCI state applied to a component carrier (CC) that is the same CC of the CSI report configuration, for example, based on a TCI state parameter not being configured in the CSI report configuration. The TCI state parameter may indicate a cell on which a TCI state used to determine a current reference signal for the UE-initiated CSI reporting is applied. The wireless device may transmit, based on the determining the event instance, an uplink transmission. The TCI state parameter may be different from a carrier parameter indicating a cell that the one or more first reference signals are configured/transmitted/located on. The CSI report configuration may comprise the carrier parameter or may not comprise the carrier parameter. The wireless device may receive a medium access control (MAC) control element (CE) indicating activation of the one or more TCI states. The current reference signal indicated by the TCI state may be: a reference signal in the TCI state; or an SS/PBCH block which is quasi co-located (QCL-ed) with the reference signal in the TCI state. The one or more configuration parameters may indicate a list of TCI states for the CC. The list of TCI states may comprise the TCI state applied to the CC. The transmitting the uplink transmission may be based on a total number of event instances within a time window being equal to or greater than an event instance count. The CSI report configuration may indicate the time window and the event instance count. The radio link quality may be L1-RSRP. The uplink transmission may be a physical uplink control channel (PUCCH) transmission carrying a UE-initiated report indicator. The UE-initiated report indicator may indicate a request of an uplink grant for a PUSCH transmission to carry/multiplex a CSI report or notify of a PUSCH transmission that will carry a CSI report. The wireless device may receive one or more second RRC messages comprising a second CSI report configuration for UE-initiated CSI reporting. The second CSI report configuration may comprise: a second resource set parameter indicating one or more third reference signals; a second event type parameter indicating an event type for the UE-initiated CSI reporting; a second event threshold; a second parameter with a value of m; and a TCI state parameter that may indicate a CC on which a TCI state used to determine a current reference signal for the UE-initiated CSI reporting is applied. The wireless device may determine a second event instance based on a radio link quality of a reference signal among the one or more third reference signals being the second event threshold greater than a radio link quality of a second current reference signal with the m-th highest radio link quality among one or more fourth reference signals indicated by one or more second activated TCI states. The second current reference signal with the m-th highest radio link quality may be indicated by a second TCI state applied to the CC indicated by the TCI state parameter, for example, based on the TCI state parameter being configured in the second CSI report configuration. The wireless device may transmit a second uplink transmission, for example, based on determining the second event instance. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station configured to send the configuration parameters. A computer-readable medium may store instructions that, when executed, cause performance of the described method, additional operations, and/or include the additional elements.

A wireless device may perform a method comprising one or more operations. For example, the wireless device may receive one or more radio resource control (RRC) messages comprising a channel state information (CSI) report configuration for user-equipment (UE)-initiated CSI reporting. The CSI report configuration may comprise: a resource set parameter indicating one or more first reference signals on a first cell; an event type parameter indicating an event type for the UE-initiated CSI reporting; an event threshold; and a TCI state parameter that may indicate a second cell on which a TCI state used to determine a current reference signal for the UE-initiated CSI reporting is applied. The wireless device may receive a first control command indicating a first TCI state for the second cell indicated by the TCI state parameter. The first TCI state may indicate a first reference signal on the first cell with the one or more first reference signals. The wireless device may perform, for the UE-initiated CSI reporting, event instance evaluations based on measuring the first reference signal. The wireless device may receive a second control command indicating a second TCI state for the second cell indicated by the TCI state parameter. The second TCI state may indicate a second reference signal on a cell different from the first cell. A wireless device may stop the UE-initiated CSI reporting, for example, based on the second TCI state indicating the second reference signal on the cell that is different from the first cell with the one or more first reference signals. A wireless device may stop the UE-initiated CSI reporting by aborting the UE-initiated CSI reporting, cancelling the UE-initiated CSI reporting, or suspending the UE-initiated CSI reporting. A wireless device may stop the UE-initiated CSI reporting by stopping the event instance evaluations for event detection. A wireless device may stop the UE-initiated CSI reporting by not measuring a radio link quality of the second reference signal for the event instance evaluations. A wireless device may stop the UE-initiated CSI reporting by not measuring a radio link quality of each reference signal of the one or more first reference signals for the event instance evaluations. A wireless device may stop the UE-initiated CSI reporting by not transmitting a PUCCH transmission carrying a UE-initiated report indicator (UEIRI) for the UE-initiated CSI reporting. A wireless device may stop the UE-initiated CSI reporting by not transmitting a PUSCH transmission carrying a CSI report for the UE-initiated CSI reporting. The wireless device may perform the event instance evaluations by comparing: a radio link quality of the first reference signal; and a respective radio link quality of each reference signal among the one or more first reference signals. The wireless device may apply the second TCI state for downlink receptions via the second cell. The first control command may be a first DCI or a first MAC-CE. The second control command may be a second DCI or a second MAC-CE. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station configured to send the configuration parameters. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a wireless device, channel state information (CSI) report configuration parameters associated with wireless device-initiated CSI reporting, wherein the CSI report configuration parameters comprise:
a resource set parameter indicating one or more first reference signals;
an event threshold; and
a parameter indicating a q-th quality level;
determining that a transmission configuration indicator (TCI) state parameter associated with wireless device-initiated CSI reporting is not configured;
based on the TCI state parameter not being configured, determining an event instance based on:
a radio link quality of a reference signal, among the one or more first reference signals, being the event threshold greater than a radio link quality of a reference signal with a q-th highest radio link quality among one or more second reference signals, wherein the one or more second references are indicated by one or more activated TCI states that are applied to a component carrier (CC) associated with the CSI report configuration parameters; and
transmitting, based on the event instance, an uplink signal.

2. The method of claim 1, wherein the receiving the CSI report configuration parameters comprises receiving one or more radio resource control (RRC) messages comprising the CSI report configuration parameters associated with wireless device-initiated beam reporting, and wherein the wireless device-initiated beam reporting comprises user equipment (UE)-initiated beam reporting.

3. The method of claim 1 or claim 2, wherein the CSI report configuration parameters further comprise an event type parameter indicating an event type for wireless device-initiated beam reporting.

4. The method of any one of claims 1 to 3, wherein none of the CSI report configuration parameters comprises a carrier parameter indicating a cell on which the one or more first reference signals are configured, and wherein the TCI state parameter is different from the carrier parameter.

5. The method of any one of claims 1 to 4, further comprising receiving a medium access control (MAC) control element (CE) indicating activation of the one or more TCI states.

6. The method of any one of claims 1 to 5, wherein the TCI state parameter, when configured, indicates a cell on which a TCI state used to determine a current reference signal is applied.

7. The method of any one of claims 1 to 6, wherein the transmitting the uplink signal is based on a total quantity of event instances within a time window being equal to or greater than an event instance count.

8. The method of any one of claims 1 to 7, wherein the radio link quality is a layer 1 reference signal received power (L1-RSRP).

9. The method of any one of claims 1 to 8, wherein the uplink signal is a physical uplink control channel (PUCCH) transmission carrying a wireless device-initiated report indicator that:
indicates a request of an uplink grant for a physical uplink shared channel (PUSCH) transmission associated with a CSI report; or
notifies of a PUSCH transmission associated with a CSI report, and
wherein the wireless-device-initiated report indicator comprises user equipment (UE)-initiated report indicator (UEIRI).

10. The method of any one of claims 1 to 9, wherein the CSI report configuration parameters indicate a list of TCI states for the CC, and wherein the list of TCI states comprise the TCI state applied to the CC.

11. The method of any one of claims 1 to 10, wherein the CSI report configuration parameters comprise:
the resource set parameter indicating one or more first reference signals on a first cell; and
a TCI state parameter indicating a second cell on which a TCI state used to determine a current reference signal for wireless device-initiated beam reporting is applied,
wherein the method further comprises:
receiving a first control command indicating a first TCI state for the second cell indicated by the TCI state parameter, wherein the first TCI state indicates a first reference signal on the first cell with the one or more first reference signals;
performing, for the wireless device-initiated beam reporting, event instance evaluations based on measuring the first reference signal;
receiving a second control command indicating a second TCI state for the second cell indicated by the TCI state parameter, wherein the second TCI state indicates a second reference signal on a cell different from the first cell; and
based on the second TCI state indicating the second reference signal on the cell that is different from the first cell with the one or more first reference signals, stopping the wireless device-initiated beam reporting.

12. The method of claim 11, wherein the stopping the wireless device-initiated beam reporting comprises stopping at least one of:
performing the event instance evaluations;
measuring a radio link quality of the first reference signal;
measuring a radio link quality of the second reference signal;
transmitting a physical uplink control channel (PUCCH) transmission carrying a wireless device-initiated report indicator; or
transmitting a physical uplink shared channel (PUSCH) transmission associated with a CSI report.

13. A computing device comprising:
one or more processors; and
memory storing instructions that, when executed by the one or more processors, cause the computing device to perform the method of any one of claims 1 to 12.

14. A system comprising:
a wireless device configured to perform the method of any one of claims 1-12; and
a base station configured to transmit the CSI report configuration parameters.

15. A computer-readable medium storing instructions that, when executed, cause performance of the method of any one of claims 1 to 12.
